# EUROPEAN PATENT APPLICATION

(11) **EP 4 769 102 A1**
(43) Date of publication of application: **01.07.2026**
(21) Application number: 25736280.6
(22) Date of filing: 03.01.2025
(51) Int. Cl.: G06F 3/04845, G06F 3/04842, G06N 3/0475, G06F 3/041, G06T 7/194, G06T 1/00

(54) **ELECTRONIC DEVICE, METHOD, AND RECORDING MEDIUM FOR SUPPORTING IMAGE EDITING**

(30) Priority: 03.01.2024 KR 20240000913; 14.06.2024 KR 20240077803
(71) Applicant: Samsung Electronics Co., Ltd., Suwon-si, Gyeonggi-do 16677 (KR)
(72) Inventor: LEE, Jihyun, Suwon-si, Gyeonggi-do 16677 (KR); KANG, Jiyoung, Suwon-si, Gyeonggi-do 16677 (KR)
(74) Representative: HGF
(86) International application number: PCT/KR2025/000104
(87) International publication number: WO 2025/147126

(57) **Abstract**

An embodiment of the disclosure provides an electronic device, a method, and a recording medium for supporting image editing. The electronic device according to an embodiment may, while displaying an image on a display, based on an input of selecting a part corresponding to an object in the image, crop the part corresponding to the object in the image. The electronic device may move the cropped part, based on an input of moving the cropped part from an original location in the image. The electronic device may configure and display, as a masking area, an area corresponding to the original location of the cropped part in the image, based on movement of the cropped part. The electronic device may provide a first handler related to editing of the cropped part through the cropped part, based on an input of selecting the cropped part. The electronic device may provide a second handler related to editing of the cropped part through the masking area, based on an input of selecting the masking area. The electronic device may edit the image in response to an input received based on the first handler or the second handler. The electronic device may generate an instruction causing inpainting and/or outpainting to be performed based on the edited image. The electronic device may obtain a result image in relation to the instruction, and display the result image via the display.

## Description

### [Technical Field]

An embodiment of the disclosure provides an electronic device for supporting image editing based on artificial intelligence (AI) (e.g., generative AI), an operation method thereof, and a recording medium.

### [Background Art]

With the advancement of digital technology, various types of electronic devices, such as smartphones, digital cameras, and/or wearable devices, are widely used. These electronic devices are continuously being improved in both hardware and/or software to support and enhance their functionalities.

For example, a portable electronic device (hereinafter, "electronic device") represented by a smartphone is now capable of incorporating various functions. The electronic device may include a touch screen-based display to enable a user to easily access various functions, and may provide screens of various applications through the display.

Recently, with rapid advancements in big data and deep-learning-related technologies, artificial intelligence (AI) technologies applied to electronic devices have been implemented, and are also applied to analyzing of particular data and intelligent personal services, which collectively provide and utilize information across various fields specific to users. For example, a user is able to control an electronic device through a voice-based conversational method and is able to perform searches, queries, and responses for specified information through a knowledge base employing deep learning. Recently, with the evolution of artificial intelligence technology, generative artificial intelligence (AI) technology has been implemented. Generative artificial intelligence may refer to artificial intelligence technology that newly creates similar content by using existing content, such as text, audio, and/or images. For instance, generative artificial intelligence may correspond to artificial intelligence technology capable of generating content (e.g., text, audio, images, and/or video) corresponding to a given input.

Meanwhile, an electronic device may display an image through a display and provide a function capable of editing the image, based on a user input on the displayed image. According to an embodiment, the user may enlarge the image displayed on the display or draw a new object within the image according to a user input.

The information described above may be provided as a related art for helping understanding of the disclosure. No assertion or determination is made as to whether any of the contents described above could be applied as prior art related to the disclosure.

### [Disclosure of Invention]

### [Technical Problem]

An embodiment of the disclosure provides an electronic device, an operation method thereof, and a recording medium, the electronic device supporting generative AI-based image editing (e.g., reconfiguration based on image expansion, background generation, and object creation, separation, and/or addition within images).

An embodiment of the disclosure provides an electronic device, an operation method thereof, and a recording medium, the electronic device editing an image, based on interaction with a user, reconfiguring (regenerating) the image on a server or on-device, based on the edited image, and providing the reconfigured image.

An embodiment of the disclosure provides an electronic device, an operation method thereof, and a recording medium, the electronic device supporting change of the positions, sizes, tilts, angles, horizontal alignment, and/or vertical alignment of one or more objects within an image, separation and removal of an object from an image, or addition of a new object within an image.

An embodiment of the disclosure provides an electronic device, an operation method thereof, and a recording medium, the electronic device generating a background around an object (e.g., subject) in contact with an edge of an image so as to enable the object to be placed in a desired area within the image, and support a user to edit the image (e.g., a landscape picture, a portrait picture, a background picture, an object picture, an animal picture, and/or a food picture) to have a desired angle and composition.

The technical task to be achieved herein is not limited to that mentioned above, and other technical tasks that are not mentioned above may be clearly understood to a person having common knowledge in the technical field to which the disclosure belongs based on the description provided below.

### [Solution to Problem]

According to an embodiment of the disclosure, an electronic device supporting image editing based on artificial intelligence (AI) (e.g., generative AI) is provided. The electronic device may include a display, a communication circuit (circuitry), a memory configured to store one or more computer programs, and at least one processor communicatively coupled to the display, the communication circuit, and the memory and including processing circuitry. The one or more computer programs may include instructions (e.g., computer-executable instructions) that, when individually or collectively executed by the at least one processor, cause the electronic device to perform the following.

According to an embodiment, the instructions may, when individually and/or collectively executed by the at least one processor, cause the electronic device to display an image on the display. The instructions may, when individually and/or collectively executed by the at least one processor, cause the electronic device to receive a first input of selecting a part corresponding to an object in the image. The instructions may, when individually and/or collectively executed by the at least one processor, cause the electronic device to crop the part corresponding to the object in the image, based on the first input. The instructions may, when individually and/or collectively executed by the at least one processor, cause the electronic device to detect a second input of moving the cropped part from an original location in the image. The instructions may, when individually and/or collectively executed by the at least one processor, cause the electronic device to configure and display, as a masking area, an area corresponding to the original location of the cropped part in the image, based on movement of the cropped part. The instructions may, when individually and/or collectively executed by the at least one processor, cause the electronic device to receive a third input of selecting one of the cropped part or the masking area. The instructions may, when individually and/or collectively executed by the at least one processor, cause the electronic device to, in case that the third input corresponds to selecting the cropped part, provide a first handler related to editing of the cropped part through the cropped part. The instructions may, when individually and/or collectively executed by the at least one processor, cause the electronic device to, in case that the third input corresponds to selecting the masking area, provide a second handler related to editing of the cropped part through the masking area. The instructions may, when individually and/or collectively executed by the at least one processor, cause the electronic device to edit the image in response to a fourth input received based on the first handler or the second handler. The instructions may, when individually and/or collectively executed by the at least one processor, cause the electronic device to, based on a fifth input, generate an instruction causing inpainting and/or outpainting to be performed based on the edited image. The instructions may, when individually and/or collectively executed by the at least one processor, cause the electronic device to obtain a result image in relation to the instruction. The instructions may, when individually and/or collectively executed by the at least one processor, cause the electronic device to display the result image via the display.

An operation method of an electronic device according to an embodiment of the disclosure may include displaying an image on a display. The operation method may include receiving a first input of selecting a part corresponding to an object in the image. The operation method may include cropping the part corresponding to the object in the image, based on the first input. The operation method may include detecting a second input of moving the cropped part from an original location in the image. The operation method may include configuring and displaying, as a masking area, an area corresponding to the original location of the cropped part in the image, based on movement of the cropped part. The operation method may include receiving a third input of selecting one of the cropped part or the masking area. The operation method may include, in case that the third input corresponds to selecting the cropped part, providing a first handler related to editing of the cropped part through the cropped part. The operation method may include, in case that the third input corresponds to selecting the masking area, providing a second handler related to editing of the cropped part through the masking area. The operation method may include editing the image in response to a fourth input received based on the first handler or the second handler. The operation method may include, based on a fifth input, generating an instruction causing inpainting and/or outpainting to be performed based on the edited image. The operation method may include obtaining a result image in relation to the instruction. The operation method may include displaying the result image via the display.

In accordance with the above aspect, various embodiments of the disclosure may include a computer-readable recording medium having, recorded therein, a program for executing the method in a processor.

According to an embodiment, a non-transitory computer-readable recording medium (or computer program product) storing one or more programs is described. According to an embodiment, the one or more programs may include instructions that perform operations of displaying an image on a display, receiving a first input of selecting a part corresponding to an object in the image, cropping the part corresponding to the object in the image, based on the first input, detecting a second input of moving the cropped part from an original location in the image, configuring and displaying, as a masking area, an area corresponding to the original location of the cropped part in the image, based on movement of the cropped part, receiving a third input of selecting one of the cropped part or the masking area, in case that the third input corresponds to selecting the cropped part, providing a first handler related to editing of the cropped part through the cropped part, in case that the third input corresponds to selecting the masking area, providing a second handler related to editing of the cropped part through the masking area, editing the image in response to a fourth input received based on the first handler or the second handler, based on a fifth input, generating an instruction causing inpainting and/or outpainting to be performed based on the edited image, obtaining a result image in relation to the instruction, and displaying the result image via the display.

A further scope of applicability of the disclosure will become apparent from the detailed description given below. However, it should be understood that the detailed description and specific examples such as preferred embodiments of the disclosure, are given by way of illustration only, since various changes and modifications within the concept and scope of the disclosure will become apparent to those skilled in the art.

### [Advantageous Effects of Invention]

An electronic device, an operation method thereof, and a recording medium according to an embodiment of the disclosure may support change of the positions, sizes, tilts, angles, horizontal alignment, and/or vertical alignment of one or more objects within an image, separation and removal of an object from an image, or addition of a new object to an image. For example, a user is supported to separate at least one object (e.g., subject) from an image, and not only adjust the object to have a desired position and/or size but also finely adjust the angle/horizontal alignment/vertical alignment of the object by using a touch gesture or dialer, so that a new user experience (UX) enabling the user to generate a desired picture composition is providable.

According to an embodiment, a background may be generated around an object (e.g., subject) in contact with an edge of an image so as to enable the object to be placed in a desired area within the image, and support a user to edit the image (e.g., a landscape picture, a portrait picture, a background picture, an object picture, or an animal picture) to have a desired angle and composition. For example, a naturally expanded background is provided to a user to edit an image to have a desired angle and composition, so that a new user experience is providable.

Various other effects identified directly or indirectly through this document may be provided. Effects which are acquirable by the disclosure are not limited to the effects described above, and other effects that have not been mentioned may be clearly understood by a person who has common knowledge in the technical field to which the disclosure belongs, from the following description.

### [Brief Description of Drawings]

In relation to the description of drawings, the same or similar elements may be indicated by the same or similar reference signs.
FIG. 1 is a block diagram illustrating an example electronic device in a network environment according to various embodiments.
FIG. 2 is a block diagram illustrating an integrated intelligence system according to an embodiment.
FIG. 3 is a diagram roughly illustrating a configuration of an electronic device according to an embodiment of the disclosure;
FIG. 4 is a flowchart illustrating an operation method of an electronic device according to an embodiment of the disclosure;
FIG. 5 is a diagram illustrating an example of a user interface that supports image editing in an electronic device according to an embodiment of the disclosure;
FIG. 6 to FIG. 16 are diagrams illustrating an operation example of image editing in an electronic device according to an embodiment of the disclosure;
FIG. 17 and FIG. 18 are diagrams illustrating an example of a user interface during image generation in an electronic device according to an embodiment of the disclosure;
FIG. 19 and FIG. 20 are diagrams illustrating an example of providing a result image of image editing in an electronic device according to an embodiment of the disclosure;
FIG. 21 is a diagram illustrating an example of providing a result image of image editing in an electronic device according to an embodiment of the disclosure;
FIG. 22 to FIG. 26 are diagrams illustrating an operation example of image editing in an electronic device according to an embodiment of the disclosure;
FIG. 27 is a flowchart illustrating an operation method of an electronic device according to an embodiment of the disclosure;
FIG. 28A and FIG. 28B are flowcharts illustrating an operation method of an electronic device according to an embodiment of the disclosure;
FIG. 29 is a flowchart illustrating an operation method of an electronic device according to an embodiment of the disclosure;
FIG. 30 is a diagram illustrating an operation example of supporting image editing in an electronic device according to an embodiment of the disclosure;
FIG. 31 is a diagram illustrating an operation example of supporting image editing in an electronic device according to an embodiment of the disclosure;
FIG. 32 is a diagram illustrating an operation example of supporting image editing in an electronic device according to an embodiment of the disclosure;
FIG. 33 is a diagram illustrating an operation example of supporting image editing in an electronic device according to an embodiment of the disclosure;
FIG. 34 is a diagram illustrating an operation example of supporting image editing in an electronic device according to an embodiment of the disclosure;
FIG. 35 is a diagram illustrating an operation example of supporting image editing in an electronic device according to an embodiment of the disclosure;
FIG. 36 is a diagram illustrating an operation example of supporting image editing in an electronic device according to an embodiment of the disclosure;
FIG. 37 is a diagram illustrating an operation example of supporting image editing in an electronic device according to an embodiment of the disclosure;
FIG. 38 is a diagram illustrating an operation example of supporting image editing in an electronic device according to an embodiment of the disclosure;
FIG. 39A and FIG. 39B are diagrams illustrating an operation example of supporting image editing in an electronic device according to an embodiment of the disclosure;
FIG. 40 is a diagram illustrating an operation example of supporting image editing in an electronic device according to an embodiment of the disclosure;
FIG. 41 is a diagram illustrating an operation example of supporting image editing in an electronic device according to an embodiment of the disclosure;
FIG. 42 is a diagram illustrating an operation example of supporting image editing in an electronic device according to an embodiment of the disclosure;
FIG. 43 is a diagram illustrating an operation example of supporting image editing in an electronic device according to an embodiment of the disclosure;
FIG. 44 is a diagram illustrating an operation example of supporting image editing in an electronic device according to an embodiment of the disclosure;
FIG. 45 is a diagram illustrating an operation example of supporting image editing in an electronic device according to an embodiment of the disclosure;
FIG. 46 is a diagram illustrating an operation example of supporting image editing in an electronic device according to an embodiment of the disclosure;
FIG. 47 is a diagram illustrating an operation example of supporting image editing in an electronic device according to an embodiment of the disclosure;
FIG. 48A and FIG. 48B are diagrams illustrating an operation example of supporting image editing in an electronic device according to an embodiment of the disclosure;
FIG. 49A and FIG. 49B are diagrams illustrating an operation example of supporting image editing in an electronic device according to an embodiment of the disclosure;
FIG. 50 is a diagram illustrating an operation example of supporting image editing in an electronic device according to an embodiment of the disclosure;
FIG. 51 is a diagram illustrating an operation example of supporting image editing in an electronic device according to an embodiment of the disclosure;
FIG. 52 is a diagram illustrating an operation example of supporting image editing in an electronic device according to an embodiment of the disclosure;
FIG. 53 is a diagram illustrating an operation example of supporting image editing in an electronic device according to an embodiment of the disclosure;
FIG. 54A and FIG. 54B are diagrams illustrating an operation example of supporting image editing in an electronic device according to an embodiment of the disclosure;
FIG. 55 is a diagram illustrating an operation example of supporting image editing in an electronic device according to an embodiment of the disclosure;
FIG. 56 is a diagram illustrating an operation example of supporting image editing in an electronic device according to an embodiment of the disclosure;
FIG. 57 is a diagram illustrating an operation example of supporting image editing in an electronic device according to an embodiment of the disclosure;
FIG. 58 is a diagram illustrating an operation example of supporting image editing in an electronic device according to an embodiment of the disclosure;
FIG. 59 is a diagram illustrating an operation example of supporting image editing in an electronic device according to an embodiment of the disclosure;
FIG. 60 is a diagram illustrating an operation example of supporting image editing in an electronic device according to an embodiment of the disclosure; and
FIG. 61 is a flowchart illustrating an operation method of an electronic device according to an embodiment of the disclosure.

### [Mode for Invention]

Hereinafter, embodiments of the disclosure will be described in detail with reference to the drawings so that a person having common knowledge in the technical field to which the disclosure belongs are able to readily carry out the disclosure. However, the disclosure may be implemented in any of various forms, and should not be construed as being limited to the embodiments set forth herein. In relation to the description of drawings, the same or similar elements may be indicated by the same or similar reference signs. In addition, in the drawings and related descriptions, description of well-known functions and configurations may be omitted of clarity and briefness.

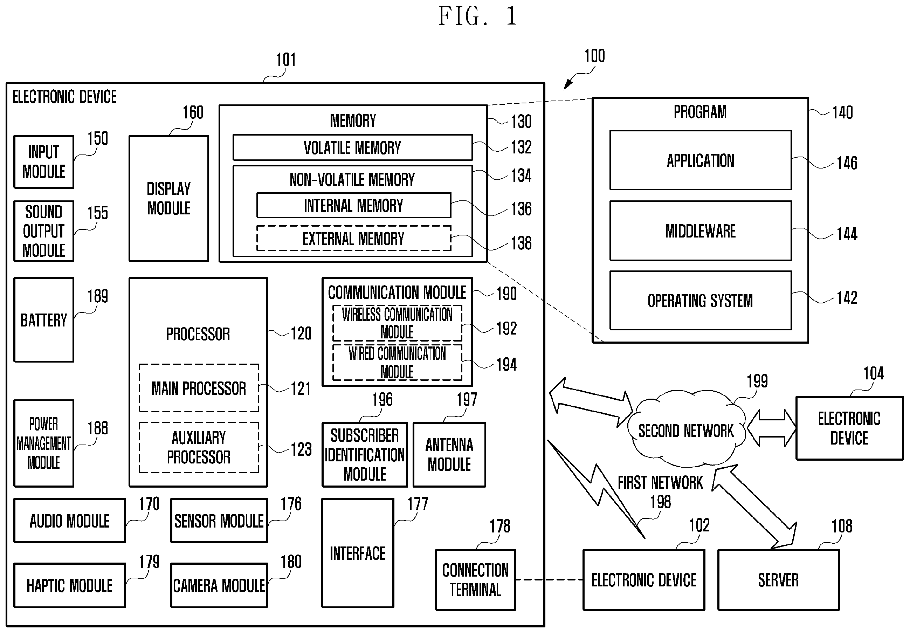

FIG. 1 is a block diagram illustrating an example electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

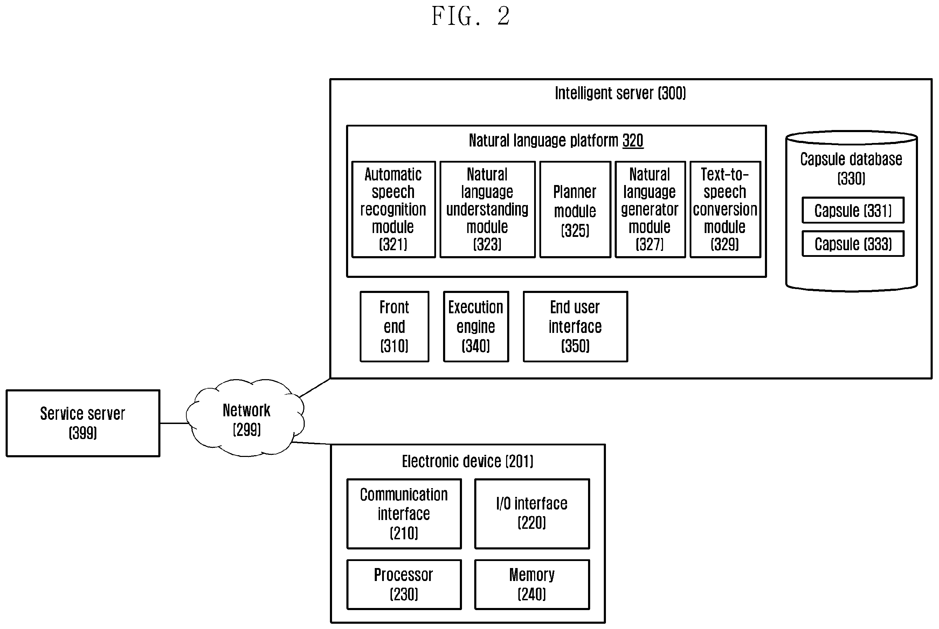

FIG. 2 is a block diagram illustrating an integrated intelligence system according to an embodiment.

Referring to FIG. 2, the integrated intelligence system according to an embodiment may comprise an electronic device 201 (e.g., an electronic device 101 of FIG. 1), an intelligent server 300, and a service server 399.

According to the embodiment illustrated, the electronic device 201 may comprise a communication interface 210, an input/output (I/O) interface 220, a processor 230, and/or a memory 240. The components enumerated above may be operatively or electrically connected with each other. For example, the electronic device 201 may include at least some of the components of the electronic device 101 of FIG. 1.

The communication interface 210 may be connected to an external device (e.g., the intelligent server 300 and/or the service server 399) via a network 299 (e.g., any network including a cellular network and/or a wireless local area network (WLAN)) to send and receive data. For example, the communication interface 210 may correspond to a CP 118 and/or a communication circuit 160 of FIG. 1. The I/O interface 220 may use input/output devices (not shown) (e.g., microphone, speaker, and/or display (e.g., a display 140 in FIG. 1)) to receive a user input, process the received user input, and/or output a result of processing by the processor 230.

The processor 230 may be operatively or electrically coupled to the communication interface 210, the I/O interface 220, and/or the memory 240 (e.g., a memory 130 of FIG. 1) to perform a designated operation. For example, the processor 230 may correspond to a processor 120 of FIG. 1. The processor 230 may execute a program (or one or more instructions) stored in the memory 240 to perform the designated operation. For example, the processor 230 may receive a voice input (e.g., user's utterance) from a user via the I/O interface 220 or from an external electronic device. The processor 230 may transmit the received voice input to the intelligent server 300 via the communication interface 210. For example, the processor 230 may comprise one or more processors.

The processor 230 may receive a result corresponding to the voice input from the intelligent server 300. For example, the processor 230 may receive, from the intelligent server 300, a plan corresponding to the voice input and/or a result calculated using the plan. For example, the plan may include, although not limited thereto, information about a plurality of sequential operations to be executed by the first electronic device 201 and/or another electronic device in relation to the voice input. The processor 230 may receive a request from the intelligent server 300 to obtain information (e.g., entities, slots, and/or parameters) necessary to generate the plan corresponding to the voice input. The processor 230 may transmit the necessary information to the intelligent server 300 in response to the request.

The processor 230 may visually, tactilely, and/or audibly output the result of executing the designated operation according to the plan, via the I/O interface 220. For example, the processor 230 may sequentially display the execution result of a plurality of operations. For example, the processor 230 may display only the result of executing the plurality of operations (e.g., the result of execution of any one of the plurality of operations or the last operation).

The processor 230 may recognize a voice input. For example, the processor 230 may execute an intelligent app (or voice recognition app) for processing the voice input in response to a designated voice input (e.g., "Wake up!"). The processor 230 may provide a voice recognition service using the intelligent app. The processor 230 may transmit the voice input to the intelligent server 300 via the intelligent app, and may receive a result corresponding to the voice input from the intelligent server 300.

The intelligent server 300 according to an embodiment may receive a user's voice input from the electronic device 201 via the network 299. The intelligent server 300 may convert audio data corresponding to the received voice input into text data. Based on the text data, the intelligent server 300 may generate at least one plan for performing a task corresponding to the user's voice input. The intelligent server 300 may transmit the generated plan, or a result based on the generated plan, to the electronic device 201 via the network 299.

The intelligent server 300 according to an embodiment may comprise a front end 310, a natural language platform 320, a capsule database 330, an execution engine 340, and/or an end user interface 350.

The front end 310 may receive, from the electronic device 201, the voice input received by the electronic device 201. The front end 310 may transmit a response corresponding to the voice input to the electronic device 201.

The natural language platform 320 may comprise an automatic speech recognition (ASR) module 321, a natural language understanding (NLU) module 323, a planner module 325, a natural language generator (NLG) module 327, and/or a text-to-speech (TTS) conversion module 329.

The automatic speech recognition module 321 may convert a voice input received from the electronic device 201 into text data. The natural language understanding module 323 may identify the user' intent and/or parameters (e.g., entities and/or slots) based on the text data of the voice input. The user's intent corresponds to the voice input, and may include information indicating an action (or function) the user wants to perform using the device. The slot may be detailed information related to the user's intent. The slot may be obtained based on a domain corresponding to the user's utterance. The slot may be variable information that is required to perform the action. According to an embodiment, the variable information configuring the slot may include a named entity.

The planner module 325 may generate a plan using the intent and/or parameters determined by the natural language understanding module 323. For example, the planner module 325 may determine at least one domain required to perform a task based on the determined intent. The planner module 325 may determine a plurality of actions included in each of the at least one domain determined based on the intent. The domain may correspond to a category (or service) associated with actions (or functions) that the user wishes to perform using the device. The domains may be categorized according to the service (e.g., app) related to the text. The domain may be associated with the user's intent corresponding to the text. The domains may be categorized, for example, although not limited thereto, according to the application that received the voice input and/or the kind of service to be provided based on the voice input. In an example, the determination of the domain may be performed by another module (e.g., the natural language understanding module 323). The planner module 325 may determine the parameters required to execute the determined plurality of actions, or resultant values output by the execution of the plurality of actions. The parameters and resultant values may be defined as a concept of a specified type (or class). For example, the plan may include a plurality of actions and/or a plurality of concepts determined by user intent. The planner module 325 may determine relationships between the plurality of actions and/or the plurality of concepts in a stepwise (or hierarchical) manner. For example, the planner module 325 may identify a sequence of executing a plurality of actions (e.g., the plurality of actions determined based on the user's intent) based on a plurality of concepts (e.g., the parameters required for execution of the plurality of actions, and the results output by execution of the plurality of actions). The planner module 325 may generate a plan that includes association information (e.g., ontology) between the plurality of actions and the plurality of concepts. The planner module 325 may generate the plan using information stored in the capsule database 330 (e.g., at least one capsule) storing therein a set of relationships between the concepts and the actions.

The planner module 325 may generate the plan based on an artificial intelligence (AI) system. For example, the AI system may comprise one or more electronic devices, and/or one or more processing circuitry to execute a rule-based function, a neural network-based function (e.g., feedforward neural network (FNN), recurrent neural network (RNN)), or a combination thereof. The artificial intelligence system described above is only of an example, and the artificial intelligence system may be an artificial intelligence system based on any model based on machine learning. The planner module 325 may select a plan corresponding to a user request from a set of predefined plans, or may generate a plan in real time in response to the user request.

The natural language generator module 327 may change specified information into a textual form. The textualized information may be in the form of a natural language utterance. The text-to-speech conversion module 329 may convert a textual form of information into a speech form of information.

The capsule database 330 may store information about the relationship of a plurality of concepts and actions corresponding to a plurality of domains (e.g., applications). The capsule database 330 may store at least one capsule (e.g., capsule 331 and/or capsule 333) in the form of a concept action network (CAN). For example, the capsule database 330 may store, in the CAN form, an action for processing a task corresponding to a user's voice input, and the parameters required for the action. The capsule may include a plurality of action objects (or action information) and/or concept objects (or concept information) included in the plan. For example, the capsule (331, 333) may be created per domain and stored in the capsule database 330, but the disclosure is not limited thereto.

The execution engine 340 may utilize the generated plan to calculate a result. The end user interface 350 may transmit the calculated result to the electronic device 201.

According to an embodiment, some function (e.g., the natural language platform 320) of the intelligent server 300 or the entire functionality thereof may be implemented in the electronic device 201. For example, the electronic device 201 may execute one or more programs including a natural language platform separate from the intelligent server 300. For example, the electronic device 201 may directly perform at least some of the operations of the natural language platform 320 of the intelligent server 300 (e.g., the automatic speech recognition module 321, the natural language understanding module 323, the planner module 325, the natural language generator module 327, and/or the text-to-speech conversion module 329).

The service server 399 according to an embodiment may provide a specified service (e.g., ordering food or making a hotel reservation) to the electronic device 201. The service server 399 may be a server operated by an operator different from that of the intelligent server 300. The service server 399 may communicate with the intelligent server 300 and/or the electronic device 201 over a network 299. The service server 399 may communicate with the intelligent server 300 over a separate connection (not shown). The service server 399 may provide the intelligent server 300 with information (e.g., action and/or concept information for providing a specified service) for generating a plan corresponding to the voice input received by the electronic device 201. The information provided may be stored in the capsule database 330. The service server 399 may provide the intelligent server 300 with resultant information according to the plan, received from the electronic device 201.

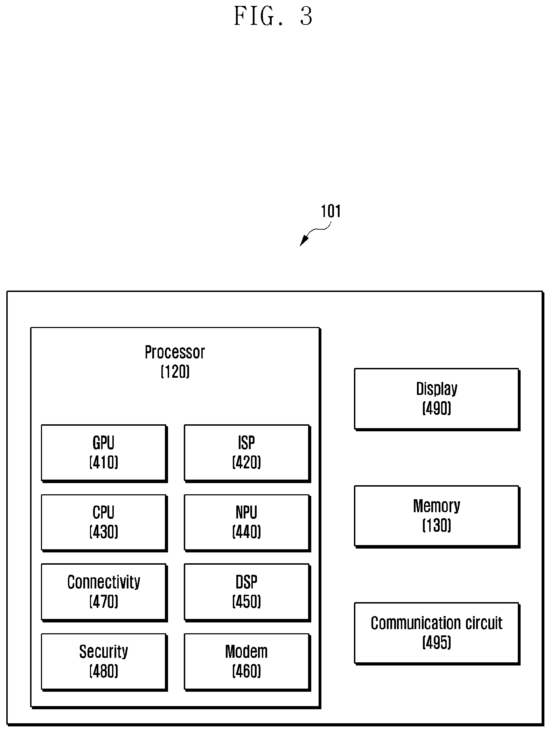

FIG. 3 is a diagram roughly illustrating a configuration of an electronic device according to an embodiment of the disclosure.

Referring to FIG. 3, an electronic device 101 according to an embodiment of the disclosure may include a display 490 (e.g., the display module 160 in FIG. 1 or the I/O interface 220 in FIG. 2), memory 130 (e.g., the memory 130 or 240 in FIG. 1 or FIG. 2), a communication circuit 495 (e.g., the communication module 190 in FIG. 1 or the communication interface 210), and/or a processor 120 (e.g., the processor 120 or 230 in FIG. 1 or FIG. 2). According to an embodiment, the electronic device 101 may include all or at least some of the elements of the electronic device 101 or 201 as described in the description given with reference to FIG. 1 or FIG. 2. For example, in various embodiments disclosed herein, some of the illustrated configuration may be omitted or replaced. The electronic device 101 may further include at least some of the configuration and/or functions of the electronic device 101 in FIG. 1 and/or the electronic device 201 in FIG. 2. At least some of the illustrated (non-illustrated) configuration of the electronic device 101 or 201 may be operatively, functionally, and/or electrically connected to each other.

According to an embodiment, the display 490 may include a configuration identical or similar to that of the display module 160 in FIG. 1. According to an embodiment, the display 490 may display various images provided from the processor 120. According to an embodiment, the display 490 may visually provide a running application (e.g., the application 146 in FIG. 1) and various screens (e.g., a content screen, an application execution screen, a menu screen, and/or a function execution screen) related to the use thereof under the control of the processor 120.

According to an embodiment, the display 490 may be combined with a touch sensor, a pressure sensor capable of measuring the strength of a touch, and/or a touch panel (e.g., digitizer) that detects a stylus pen of a magnetic field method. According to an embodiment, the display 490 may measure a change of a signal (e.g., voltage, light quantity, resistance, electromagnetic signal, and/or charge amount) for a particular position on the display 490, based on the touch sensor, the pressure sensor, and/or the touch panel, to detect a touch input, an air gesture input, and/or a hovering input (or proximity input). For example, the display 490 may include a touch screen that detects a touch and/or proximity touch (or hovering) input made by using a part (e.g., a finger) of a user's body or an input device (e.g., a stylus pen). The display 490 may include at least some of the configuration and/or functions of the display module 160 in FIG. 1 and/or the I/O interface 220 in FIG. 2.

According to an embodiment, the display 490 may include a liquid crystal display (LCD), a light-emitting diode (LED), an organic light-emitting diode (OLED) display, and/or an active matrix OLED (AMOLED) display, a micro electro mechanical system (MEMS) display, or an electronic paper display, and the disclosure is not limited thereto. According to an embodiment, the display 490 may include a flexible display.

According to an embodiment, the memory 130 may include at least some of the configuration and/or functions of the memory 130 in FIG. 1 and/or the memory 240 in FIG. 2, and store software (e.g., the program 140 in FIG. 1). The memory 130 may store various applications (e.g., the application 146 in FIG. 1), and a program module (e.g., client module) supporting an intelligent service.

According to an embodiment, the memory 130 may store various data used by at least one element (e.g., the processor 120) of the electronic device 101. In an embodiment, the data may include, for example, software (e.g., the program 140 in FIG. 1), and input data or output data for a command related to software.

According to an embodiment, the memory 130 may include volatile memory (e.g., the volatile memory 132 in FIG. 1) or non-volatile memory 134 (e.g., the non-volatile memory 134 in FIG. 1). According to an embodiment, the memory 130 may store a command or data received from the processor 120 in the volatile memory 132, and store, in the non-volatile memory 134, result data obtained by processing, by the processor 120, the command or data stored in the volatile memory 132.

In an embodiment, the data stored in the memory 130 may include various data (e.g., learning data, prompt data, context, and/or a learning model) for supporting, by the electronic device 101, editing and generation (e.g., regeneration or reconfiguration) of data (e.g., image), based on artificial intelligence. In an embodiment, the data stored in the memory 130 may include information on various configurations for supporting the electronic device 101 to control an operation of editing and/or generating data (e.g., image), based on artificial intelligence.

In an embodiment, the data stored in the memory 130 may include various learning data and/or parameters obtained based on a user's learning through interactions with the user. In an embodiment, the data may include various schemata (or algorithms, models, networks, or functions) for supporting an operation of editing and/or generating an image, based on artificial intelligence.

In an embodiment, there may be various fields in which artificial intelligence technology is applied. For example, the fields may include technical fields such as linguistic understanding, visual understanding, inference/prediction, knowledge representation, and/or motion control. Linguistic understanding refers to technology that recognizes and applies/processes human language/text, and may include natural language processing, machine translation, conversational systems, question answering, and/or speech recognition/synthesis. Visual understanding refers to technology that recognizes and processes objects similarly to human vision, and may include object recognition, object tracking, image retrieval, human recognition, scene understanding, spatial understanding, and/or image enhancement. Inference/prediction refers to technology that makes logical inferences and predictions based on determination of information, and may include knowledge/probability-based inference, optimization prediction, preference-based planning, and/or recommendations. Knowledge representation refers to technology that automatically processes human experiential information into knowledge data, and may include knowledge construction (e.g., data generation/classification) and/or knowledge management (e.g., data utilization). Motion control refers to technology that controls the movement of an electronic device 101, and may include movement control and/or manipulation control (e.g., behavior control).

In an embodiment, a schema for supporting an artificial intelligence-based image editing and/or generation operation in the electronic device 101 may include a neural network. In an embodiment, the neural network may include a neural network model based on at least one of an artificial neural network (ANN), a convolutional neural network (CNN), a region with convolutional neural network (R-CNN), a region proposal network (RPN), a recurrent neural network (RNN), a stacking-based deep neural network (S-DNN), a state-space dynamic neural network (S-SDNN), a deconvolution network, a deep belief network (DBN), a restricted Boltzmann machine (RBM), a long short-term memory (LSTM) network, a classification network, a plain residual network, a dense network, a hierarchical pyramid network, and/or a fully convolutional network. According to an embodiment, the type of a neural network model is not limited to the above example.

According to an embodiment, the memory 130 may store instructions that, when individually and/or collectively executed by the processor 120, cause the electronic device 101 to perform an operation. For example, the instructions may be stored in the memory 130 as software (e.g., the program 140 in FIG. 1), and are executable by the processor 120. For example, the instructions may include control commands such as arithmetic and logical operations, data transfer, and/or input/output which are recognizable by the processor 120. According to an embodiment, the software may include various applications (e.g., the application 146 in FIG. 1) capable of providing, on the electronic device 101, various functions (or services) (e.g., a routine function, a call function, a messaging function, a messenger function, an email function, a social networking service (SNS) function, a search function, a media playback function (e.g., video and/or music), a gaming function, and/or a wireless communication function).

According to an embodiment, the communication circuit 495 may support establishment of a designated wireless communication (e.g., short-range communication such as Bluetooth communication and/or BLE communication) channel, and performing of communication through the established wireless communication channel. For example, the communication circuit 495 may perform designated communication (e.g., Bluetooth communication and/or BLE communication) with an external device. According to an embodiment, the communication circuit 495 may support wireless communication with an external device, using cellular wireless communication (e.g., 4G LTE or 5G NR) and/or short-range wireless communication (e.g., Wi-Fi). For example, the electronic device 101 may, by using the communication circuit 495, communicate with an external server (e.g., generative artificial intelligence server) that provides an artificial intelligence-based function (or service) through a network. According to an embodiment, the communication circuit 495 may transmit data (e.g., image and/or prompt) generated in the electronic device 101 to the external server and receive data (e.g., image) transmitted from the external server. According to an embodiment, the communication circuit 495 may include at least some of the configuration and/or functions of the communication module 190 in FIG. 1 and/or the communication interface 210 in FIG. 2.

According to an embodiment, the processor 120 may perform an application layer processing function required by a user of the electronic device 101. According to an embodiment, the processor 120 may provide a command and control of a function for various blocks of the electronic device 101. According to an embodiment, the processor 120 may perform data processing or computation related to communication and/or control of each element of the electronic device 101. For example, the processor 120 may include at least some of the configuration and/or functions of the processor 120 in FIG. 1. According to an embodiment, the processor 120 may be operatively connected to elements of the electronic device 101. According to an embodiment, the processor 120 may load, on the memory 130, a command or data received from another element of the electronic device 101, process a command or data stored in the memory 130, and store result data.

According to an embodiment, the processor 120 may include at least one processor including processing circuitry and/or executable program elements. According to an embodiment, the processor 120 may control (or process) overall operations related to supporting artificial intelligence-based image editing and/or reconfiguration, based on the processing circuitry and/or executable program elements.

According to an embodiment, the processor 120 may display an image on the display 490 (e.g., the display module 160 in FIG. 1). According to an embodiment, the processor 120 may receive a first input of selecting a part corresponding to an object in the image. According to an embodiment, the processor 120 may crop the part corresponding to the object in the image, based on the first input.

According to an embodiment, the processor 120 may detect a second input of moving the cropped part from an original location in the image. According to an embodiment, the processor 120 may configure and display, as a masking area, an area corresponding to the original location of the cropped part in the image, based on movement of the cropped part.

According to an embodiment, the processor 120 may receive a third input of selecting one of the cropped part or the masking area. According to an embodiment, the processor 120 may determine an area (e.g., the cropped part or the masking area) where the third input is received.

According to an embodiment, if the third input corresponds to selecting the cropped part, the processor 120 may provide a first handler related to editing of the cropped part through the cropped part. According to an embodiment, if the third input corresponds to selecting the masking area, the processor 120 may provide a second handler related to editing of the cropped part through the masking area.

According to an embodiment, the processor 120 may edit the image in response to a fourth input received based on the first handler or the second handler.

According to an embodiment, the processor 120 may, based on a fifth input, generate an instruction (or prompt) causing inpainting and/or outpainting to be performed, based on the edited image. According to an embodiment, the processor 120 may obtain a result image related to the instruction. According to an embodiment, the processor 120 may display the result image through the display 490.

According to an embodiment, the processor 120 may display an image on the display 490 (e.g., the display module 160 in FIG. 1). According to an embodiment, the processor 120 may detect a user input for executing editing of the image being displayed on the display 490. According to an embodiment, the processor 120 may determine a type of image editing, based on the user input. According to an embodiment, based on the image editing being determined as a first edit, the processor 120 may perform the first edit based on at least one object according to the user input. According to an embodiment, based on the image editing being determined as a second edit, the processor 120 may perform the second edit based on the image according to the user input. According to an embodiment, the processor 120 may detect an image generation request. According to an embodiment, the processor 120 may perform an image generation process based on an image edited by the first edit and/or second edit, based on the image generation request. According to an embodiment, the processor 120 may display, on the display 490, an image generated (e.g., regenerated or reprocessed) based on the image generation process.

According to an embodiment, the processor 120 may display an image on the display 490 (e.g., the display module 160 in FIG. 1). According to an embodiment, the processor 120 may detect a first input of selecting at least one object in the image. According to an embodiment, the processor 120 may separate the at least one object from the image, based on the first input. According to an embodiment, the processor 120 may configure, as a masking area, and display an area corresponding to the at least one object in the image. According to an embodiment, the processor 120 may configure a link between the at least one object and the masking area. According to an embodiment, the processor 120 may detect a second input, based on the at least one object or the masking area. According to an embodiment, the processor 120 may edit the at least one object, based on the second input. According to an embodiment, the processor 120 may perform an image generation process based on generative AI, based on a third input. According to an embodiment, the processor 120 may obtain a result image in which the at least one object and the masking area are reconfigured, based on the image generation process. According to an embodiment, the processor 120 may display the result image through the display.

According to an embodiment, detailed operations of the processor 120 of the electronic device 101 will be described with reference to the drawings described later.

According to an embodiment, the processor 120 may individually and/or collectively operate.

According to an embodiment, the processor 120 may be an application processor (AP). According to an embodiment, the processor 120 may be a system semiconductor responsible for a multimedia operation function and computation of the electronic device 101. According to an embodiment, the processor 120 is configured as a system-on-chip (SoC) to integrate multiple semiconductor technologies into one, and may include a technology-intensive semiconductor chip that implements system blocks on one chip.

According to an embodiment, the system blocks of the processor 120 may include, as illustrated in FIG. 3, a graphics processing unit (GPU) 410, an image signal processor (ISP) 420, a central processing unit (CPU) 430, a neural processing unit (NPU) 440, a digital signal processor (DSP) 450, a modem 460, a connectivity 470, and/or a block of a security 480.

According to an embodiment, the GPU 410 may be responsible for graphic processing. According to an embodiment, the GPU 410 may receive a command from the CPU 430 to perform graphic processing to represent the shape, position, color, shading, movement, and/or texture of objects (or things) on the display.

According to an embodiment, the ISP 420 may be responsible for image and video processing and correction. According to an embodiment, the ISP 420 may perform an operation of correcting non-processed data (e.g., raw data) transmitted from an image sensor of a camera (e.g., the camera module 180 in FIG. 1) to generate an image in a format more favorable to a user. According to an embodiment, the ISP 420 may perform post-processing, such as adjusting local brightness of an image and enhancing a detailed part. For example, the ISP 420 may autonomously perform an image quality tuning and correction process for an image obtained through the camera to produce a result preferred by a user.

According to an embodiment, the ISP 420 may support artificial intelligence (AI)-based image processing technology. According to an embodiment, the ISP 420 may support scene segmentation (e.g., image segmentation) technology of recognizing and/or classifying parts of a scene being captured, in coordination with the NPU 440. For instance, the ISP 420 may include a function of processing objects, such as the sky, foliage, and/or skin, by applying different parameters thereto. According to an embodiment, the ISP 420 may, during image capturing using an artificial intelligence function, detect and highlight a human face or use the coordinates and information of the face to adjust the brightness, focus, and/or color of an image.

According to an embodiment, the CPU 430 may perform an operation corresponding to the processor 120. According to an embodiment, the CPU 430 may decipher a user's command and perform an operation of arithmetic and logic operations, and/or data processing. For example, the CPU 430 may be responsible for functions such as memory, interpretation, computation, and control. According to an embodiment, the CPU 430 may control the overall functions of the electronic device 101. For example, the CPU 430 may execute all software (e.g., the application 146 in FIG. 1) of the electronic device 101 on an operating system (OS) and control a hardware device. According to an embodiment, the CPU 430 may execute an application and control the overall operation of the processor 120 to perform neural network-based tasks required by the execution of the application.

According to an embodiment, as at least part of data processing or computation, the CPU 430 may store a command or data in the volatile memory (e.g., the volatile memory 132 in FIG. 1) of the memory 130, process the command or data stored in the volatile memory, and store result data in the non-volatile memory (e.g., the non-volatile memory 134 in FIG. 1) of the memory 130.

According to an embodiment, the CPU 430 may include a single processor core or multiple processor cores (a multi-core). According to an embodiment, the CPU 430 may be a programmable processor capable of storing executable instructions (e.g., instructions capable of performing computation of the CPU 430) and executing the instructions.

According to an embodiment, the CPU 430 may operate on multiple domains (a multi-domain). According to an embodiment, the CPU 430 may operate on a multi-domain environment including a domain of a normal world (e.g., a non-secure world, a framework, or a non-secure environment) and a domain of a secure world (e.g., a secure framework or secure environment). In an embodiment, a domain of the secure world may include one or more domains (e.g., trustable OS (trusted OS), Trustzone, and/or a virtualization framework).

According to an embodiment, the NPU 440 may perform processing optimized for a deep learning algorithm of artificial intelligence. According to an embodiment, the NPU 440 may rapidly and efficiently process big data similar to the human neural network as a processor optimized for deep learning algorithm computation (e.g., artificial intelligence computation). For example, the NPU 440 may be primarily used for artificial intelligence computation. According to an embodiment, the NPU 440 may perform processing, such as recognizing an object, environment, and/or person within a background to automatically adjust the focus when capturing an image through the camera, automatically converting an image capturing mode of the camera module 180 to a food mode when capturing an image of food, and/or removing only an unnecessary subject from a captured result. According to an embodiment, the NPU 440 may perform processing such as generating (e.g., regenerating or reconfiguring) an image, based on given information (e.g., image and/or prompt).

According to an embodiment, the electronic device 101 may support integrated machine learning processing by interacting with all processors, such as the GPU 410, the ISP 420, the CPU 430, and the NPU 440.

According to an embodiment, the DSP 450 may represent an integrated circuit that assists in processing a digital signal quickly. According to an embodiment, the DSP 450 may perform a function of changing an analog signal to a digital signal for high-speed processing.

According to an embodiment, the modem 460 may perform an operation enabling use of various communication functions in the electronic device 101. For example, the modem 460 may support communication, such as calling and data transmission and reception, by exchanging a signal with a base station. According to an embodiment, the modem 460 may include an integrated modem (e.g., a cellular modem, a long-term evolution (LTE modem), a 5G modem, a 5G-advanced modem, and a 6G modem) supporting communication technologies such as LTE and 2G to 5G. According to an embodiment, the modem 460 may include an artificial intelligence modem employing an artificial intelligence algorithm.

According to an embodiment, the connectivity 470 may support wireless data transmission based on IEEE 802.11. According to an embodiment, the connectivity 470 may support a communication service based on IEEE 802.11 (e.g., Wi-Fi) and/or 802.15 (e.g., Bluetooth, ZigBee, and UWB). For example, the connectivity 470 may support a communication service to unspecified individuals in a local area, such as indoors, by using an unlicensed band.

According to an embodiment, the security 480 may provide an independent secure execution environment between data or services stored in the electronic device 101. In an embodiment, the security 480 may perform an operation of preventing the occurrence of external hacking through software and hardware-based security in a user authentication process at the time of provision of a service, such as biometric recognition, a mobile identification, and/or payment of the electronic device 101. For example, the security 480 may provide an independent secure execution environment for device security to enhance the security of the electronic device 101 itself and for a security service based on user information, such as a mobile identification, payment, and a car key on the electronic device 101.

According to an embodiment, operations performed by the processor 120 may be implemented by executing instructions stored in a recording medium (or computer program product) or a storage medium. For example, the recording medium may include a non-transitory computer-readable recording medium that records a program for executing various operations performed by the processor 120.

Embodiments described in the disclosure may be implemented within a recording medium readable by a computer or a similar device by using software, hardware, or a combination thereof. In terms of hardware implementation, operations described in an embodiment may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or other electrical units performing functions.

In an embodiment, a computer-readable recording medium (or computer program product) recording a program for performing (or executing) various operations in the electronic device is provided.

The operations may include an operation of displaying an image on a display, an operation of receiving a first input of selecting a part corresponding to an object in the image, an operation of cropping the part corresponding to the object in the image, based on the first input, an operation of detecting a second input of moving the cropped part from an original location in the image, an operation of configuring and displaying, as a masking area, an area corresponding to the original location of the cropped part in the image, based on movement of the cropped part, an operation of receiving a third input of selecting one of the cropped part or the masking area, an operation of, if the third input corresponds to selecting the cropped part, providing a first handler related to editing of the cropped part through the cropped part, an operation of, if the third input corresponds to selecting the masking area, providing a second handler related to editing of the cropped part through the masking area, an operation of editing the image in response to a fourth input received based on the first handler or the second handler, an operation of, based on a fifth input, generating an instruction (or prompt) causing inpainting and/or outpainting to be performed based on the edited image, an operation of obtaining a result image in relation to the instruction, and an operation of displaying the result image via the display.

The operations may include an operation of displaying an image on the display, an operation of detecting a user input for executing editing of the image being displayed on the display, an operation of determining the type of the image editing, based on the user input, an operation of, based on determining the image editing as a first edit, performing the first edit based on at least one object according to the user input, an operation of, based on determining the image editing as a second edit, performing the second edit based on the image according to the user input, an operation of detecting an image generation request, an operation of performing an image generation process based on an image edited by the first edit and/or second edit according to the image generation request, and an operation of displaying, on the display, an image generated (e.g., regenerated or reprocessed) based on the image generation process.

The operations may include an operation of displaying an image on the display, an operation of detecting a first input of selecting at least one object in the image, an operation of separating the at least one object from the image, based on the first input, an operation of configuring and displaying, as a masking area, an area corresponding to the at least one object in the image, an operation of configuring a link between the at least one object and the masking area, an operation of detecting a second input, based on the at least one object or the masking area, an operation of editing the at least one object, based on the second input, an operation of performing an image generation process based on generative AI, based on a third input, an operation of obtaining a result image in which the at least one object and the masking area have been reconfigured, based on the image generation process, and an operation of displaying the result image via the display.

An electronic device (e.g., the electronic device 101 or 201 in FIG. 1 to FIG. 3) according to an embodiment of the disclosure may include a display (e.g., the display module 160 in FIG. 1 or the display 490 in FIG. 3), a communication circuit (circuitry) (e.g., the communication module 190 in FIG. 1, the communication interface 210 in FIG. 2, or the communication circuit 495 in FIG. 3), at least one processor (e.g., the processor 120 or 230 in FIG. 1 to FIG. 3) including processing circuitry, and memory (e.g., the memory 130 or 240 in FIG. 1 to FIG. 3) configured to store instructions. In an embodiment, the memory may store instructions that, when individually and/or collectively executed by the at least one processor, cause the electronic device 101 to perform an operation.

According to an embodiment, the instructions may, when individually and/or collectively executed by the at least one processor, cause the electronic device to display an image on the display. The instructions may, when individually and/or collectively executed by the at least one processor, cause the electronic device to receive a first input of selecting a part corresponding to an object in the image. The instructions may, when individually and/or collectively executed by the at least one processor, cause the electronic device to crop the part corresponding to the object in the image, based on the first input. The instructions may, when individually and/or collectively executed by the at least one processor, cause the electronic device to detect a second input of moving the cropped part from an original location in the image. The instructions may, when individually and/or collectively executed by the at least one processor, cause the electronic device to configure and display, as a masking area, an area corresponding to the original location of the cropped part in the image, based on movement of the cropped part. The instructions may, when individually and/or collectively executed by the at least one processor, cause the electronic device to receive a third input of selecting one of the cropped part or the masking area. The instructions may, when individually and/or collectively executed by the at least one processor, cause the electronic device to, in case that the third input corresponds to selecting the cropped part, provide a first handler related to editing of the cropped part through the cropped part. The instructions may, when individually and/or collectively executed by the at least one processor, cause the electronic device to, in case that the third input corresponds to selecting the masking area, provide a second handler related to editing of the cropped part through the masking area. The instructions may, when individually and/or collectively executed by the at least one processor, cause the electronic device to edit the image in response to a fourth input received based on the first handler or the second handler. The instructions may, when individually and/or collectively executed by the at least one processor, cause the electronic device to, based on a fifth input, generate an instruction causing inpainting and/or outpainting to be performed based on the edited image. The instructions may, when individually and/or collectively executed by the at least one processor, cause the electronic device to obtain a result image in relation to the instruction. The instructions may, when individually and/or collectively executed by the at least one processor, cause the electronic device to display the result image via the display.

According to an embodiment, the instructions may, when individually and/or collectively executed by the at least one processor, cause the electronic device to configure a link between the cropped part and the masking area.

According to an embodiment, the result image may include an image obtained by reconfiguring the image through the inpainting and/or outpainting having been performed based on the masking area in the edited image.

According to an embodiment, the result image may include an image obtained by reconfiguring the image through the inpainting and/or outpainting having been performed based on the cropped area in the edited image.

According to an embodiment, the result image may include an image obtained by reconfiguring the image through the inpainting and/or outpainting having been performed based on the cropped area and the masking area in the edited image.

According to an embodiment, the instructions may, when individually and/or collectively executed by the at least one processor, cause the electronic device to, in case that the third input is detected through the cropped part, display an emphasis indication of the masking area corresponding to the cropped part.

According to an embodiment, the instructions may, when individually and/or collectively executed by the at least one processor, cause the electronic device to recognize the link configured between the cropped part and the masking area, based on an input of selecting the masking area. The instructions may, when individually and/or collectively executed by the at least one processor, cause the electronic device to determine the cropped part corresponding to the masking area, based on the link.

According to an embodiment, the instructions may, when individually and/or collectively executed by the at least one processor, cause the electronic device to, in case that the cropped part corresponding to the masking area exists on the image, display a selection indication of the cropped part corresponding to the masking area.

According to an embodiment, the instructions may, when individually and/or collectively executed by the at least one processor, cause the electronic device to, in case that the cropped part corresponding to the masking area exists on the image, provide a first handler, based on the cropped part. The instructions may, when individually and/or collectively executed by the at least one processor, cause the electronic device to, in case that the cropped part corresponding to the masking area is removed from the image, provide a second handler, based on the masking area.

According to an embodiment, the instructions may, when individually and/or collectively executed by the at least one processor, cause the electronic device to, in case that a designated input is detected through the second handler, restore and display the cropped part corresponding to the masking area to and on the masking area.

According to an embodiment, the instructions may, when individually and/or collectively executed by the at least one processor, cause the electronic device to, in case that the part corresponding to the object is cropped, recognize an area corresponding to the cropped part in the image. The instructions may, when individually and/or collectively executed by the at least one processor, cause the electronic device to configure the masking area, based on the recognized area. The instructions may, when individually and/or collectively executed by the at least one processor, cause the electronic device to mask the masking area with a grid pattern.

According to an embodiment, the instructions may, when individually and/or collectively executed by the at least one processor, cause the electronic device to allow the cropped part and the masking area to interoperate with each other, based on the link between the cropped part and the masking area.

According to an embodiment, the instructions may, when individually and/or collectively executed by the at least one processor, cause the electronic device to determine an object adjacent to a first cropped part, based on a designated input. The instructions may, when individually and/or collectively executed by the at least one processor, cause the electronic device to crop a part corresponding to the adjacent object in the image. The instructions may, when individually and/or collectively executed by the at least one processor, cause the electronic device to configure the cropped parts as one group object.

According to an embodiment, the instructions may, when individually and/or collectively executed by the at least one processor, cause the electronic device to, based on expansion of a handler provided through the first cropped part, move a cropped part corresponding to the adjacent object into the handler.

According to an embodiment, the instructions may, when individually and/or collectively executed by the at least one processor, cause the electronic device to determine an object adjacent to a masking area corresponding to a first cropped part, based on a designated input. The instructions may, when individually and/or collectively executed by the at least one processor, cause the electronic device to crop a part corresponding to the adjacent object in the image. The instructions may, when individually and/or collectively executed by the at least one processor, cause the electronic device to configure the cropped parts as one group object.

According to an embodiment, the instructions may, when individually and/or collectively executed by the at least one processor, cause the electronic device to, in case that the result image is provided, provide a function of comparing the image with the result image.

Hereinafter, an operation method of an electronic device (e.g., the electronic device 101 or 201 in FIG. 1 to FIG. 3) (hereinafter, the electronic device 101) according to various embodiments will be described in detail. Operations performed by the electronic device 101 according to various embodiments may be executed by a processor (e.g., the processor 120 or 230 in FIG. 1 to FIG. 3) including various processing circuitry and/or executable program elements of the electronic device 101. According to an embodiment, the operations performed by the electronic device 101 may be stored as instructions in the memory 130, and be performed individually and/or collectively by the processor 120 or 230.

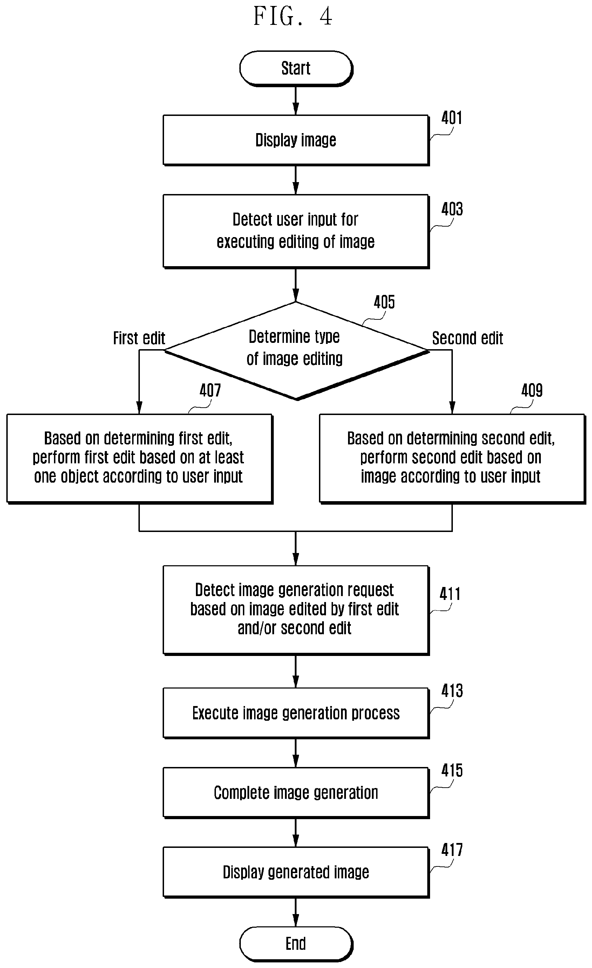

FIG. 4 is a flowchart illustrating an operation method of an electronic device according to an embodiment of the disclosure.

According to an embodiment, FIG. 4 may show an example of a method of supporting image editing and/or generation (e.g., regeneration or reprocessing) in the electronic device 101 according to an embodiment.

The method of supporting image editing and/or generation in the electronic device 101 according to an embodiment of the disclosure may be performed according to, for example, the flowchart illustrated in FIG. 4. The flowchart illustrated in FIG. 4 is an example according to an embodiment of an operation of the electronic device 101, and at least some operations may be changed in sequence or performed in parallel, may be performed as independent operations, or may be supplemented by at least some other operations. According to an embodiment of the disclosure, operation 401 to operation 417 may be performed by at least one processor (e.g., the processor 120 and 230 in FIG. 1 to FIG. 3) of the electronic device 101.

As illustrated in FIG. 4, an operation method performed by the electronic device 101 according to an embodiment may include an operation 401 of displaying an image, an operation 403 of detecting a user input for executing image editing, an operation 405 of determining the type of the image editing, an operation 407 of, based on determining a first edit, performing the first edit based on at least one object according to the user input, an operation 409 of, based on determining a second edit, performing the second edit based on the image according to the user input, an operation 411 of detecting an image generation request based on an image edited by the first edit and/or second edit, an operation 413 of performing an image generation process, an operation 415 of completing image generation, and an operation 417 of displaying a generated image.

Referring to FIG. 4, in operation 401, the processor 120 of the electronic device 101 may display an image. According to an embodiment, the processor 120 may receive an input related to execution of an application (e.g., a gallery application, an image capturing application, and/or an image editing application) from a user. According to an embodiment, the processor 120 may execute the application and display an execution screen of the application on the display in response to the input related to execution of the application. According to an embodiment, the user may perform an operation of selecting and displaying an image to be edited in a state where the execution screen of the application is displayed. According to an embodiment, the processor 120 may control the display to display the image selected by the user on the execution screen of the application.

In operation 403, the processor 120 may detect (e.g., receive) a user input for executing editing of the image. According to an embodiment, while the image is being displayed, the processor 120 may receive a designated user input for editing the displayed image. In an embodiment, the designated user input may include a first input that is directly input, such as a designated touch gesture on the image, and/or a second input that is input based on an image editing tool.

In operation 405, the processor 120 may determine the type of the image editing according to the user input. In an embodiment, the type of the image editing may include a first edit and a second edit, is not limited thereto, and may include various image edits. For example, the image editing may include various image edits, and the processor 120 may determine the type of editing of an image, based on a user request, and process the determined editing.

In an embodiment, a first edit (or a first editing operation) of an image may include an operation of supporting cropping of one or more objects in the image, editing of the cropped objects, and generating (e.g., inpainting and/or outpainting) of an image, based on the edited objects. For example, the first edit may include an editing operation of changing the position, size, tilt, angle, horizontal alignment, and/or vertical alignment of a cropped object (e.g., a subject in an image) or removing the cropped object, based on a user input. In an embodiment, the first edit may include an editing operation of adding a new object within the image. In an embodiment, the first edit may include an editing operation of restoring an object having been removed from the image. According to an embodiment, the user may crop and separate at least one object from the image, and move the cropped object to a desired position, adjust the size of the cropped object, and/or adjust the tilt thereof to make a picture composition desired by the user.

In an embodiment, a second edit (or a second editing operation) of an image may include an operation of supporting expanding of a background (or background area) outward from the image, and generating (e.g., inpainting and/or outpainting) of an image, based on an area expanded outward from the image. For example, the second edit may include an editing operation of rotating (e.g., changing the tilt thereof) the image, based on a user input, and expanding an area for a background outward from the image in response to the rotation of the image. In an embodiment, the second edit may include an editing operation of generating (e.g., inpainting and/or outpainting) a new object and/or background to be associated with an object and/or a background on an edge part of the image through the expanded area. According to an embodiment, the user may rotate the image to the left or right through a designated input (e.g., rotation based on two-finger touches) on the image, or may rotate the image to the left or right through scrolling (or dragging) an editing tool (e.g., an image rotation tool or dialer) to the left or right, so as to make a picture composition desired by the user. For example, the second edit may include an edit of generating an image through background expansion of an image and may support background expansion, based on various designated inputs (e.g., an input relating to image tilt change (e.g., image rotation)) related to the background expansion.

According to an embodiment, the user may selectively (or individually) and/or sequentially perform the first edit and/or the second edit in relation to the image. According to an embodiment, the processor 120 may determine, based on the user input, whether the user input is an input related to the first edit of the image (e.g., an input relating to a first touch gesture and/or a first editing tool selection related to execution of the first edit) or whether the user input is an input related to execution of the second edit of the image (e.g., an input relating to a second touch gesture and/or a second editing tool selection related to execution of the second edit). According to an embodiment, the first edit and/or the second edit and an example of performing image editing, based on the edits will be described later.

In operation 407, based on determining as the first edit, the processor 120 may perform the first edit based on at least one object according to the user input. According to an embodiment, an example of performing image editing, based on the first edit will be described later.

In operation 409, based on determining as the second edit, the processor 120 may perform the second edit based on the image according to the user input. According to an embodiment, an example of performing image editing, based on the second edit will be described later.

In operation 411, the processor 120 may detect an image generation request based on an image edited by the first edit and/or second edit. According to an embodiment, the user may edit the image and/or at least one object within the image, based on the first edit and/or the second edit, and complete image editing. In an embodiment, completing of image editing may be performed by a designated command input. For example, the user may request completing of image editing (or image generation), based at least on a designated object (e.g., a software button provided on a user interface including the image), a designated voice command, and/or a designated motion gesture (e.g., shaking of the electronic device 101) for image editing completion (or image generation (or regeneration)). According to an embodiment, the processor 120 may, while performing image editing based on interaction with the user, based on detecting a designated command input, determine to enter an operation of generating a new image, based on the edited image.

In operation 413, the processor 120 may perform an image generation process. According to an embodiment, the processor 120 may perform an image generation process related to generating of a new image, based on an image edited by the first edit and/or the second edit, based on detecting an image generation request.

According to an embodiment, the image generation process may include an operation enabling inpainting and/or outpainting to be performed, based on the edited image. For example, the processor 120 may generate an instruction (or prompt) causing inpainting and/or outpainting to be performed, based on the edited image. According to an embodiment, the processor 120 may provide the generated instruction to generative artificial intelligence (AI) to execute the image generation process, based on the generated instruction. According to an embodiment, the generated instruction may be provided to on-device generative artificial intelligence and/or generative artificial intelligence of a server.

According to an embodiment, the image generation process may include an operation of generating (e.g., regeneration or reprocessing) a new image by using the edited image, based on artificial intelligence (AI) (e.g., generative AI). In an embodiment, the image generation process may be provided on-device and/or based on the server. According to an embodiment, an example of performing an image generation process will be described later.

In operation 415, the processor 120 may complete image generation. According to an embodiment, the processor 120 may complete image generation, based on completion of the image generation process. For example, the processor 120 may obtain a result image (or new image) in relation to the instruction (or prompt). According to an embodiment, the processor 120 may obtain a result image according to the image generation process (e.g., inpainting and/or outpainting based on the edited image) executed in relation to the instruction (or prompt) on on-device artificial intelligence. According to an embodiment, the processor 120 may obtain (or receive), from the server, a result image generated according to the image generation process (e.g., inpainting and/or outpainting based on the edited image) executed in relation to the instruction (or prompt) on server artificial intelligence. According to an embodiment, the processor 120 may determine the completion of image generation, based on the generation and/or acquisition of the result image.

In operation 417, the processor 120 may display the obtained image (e.g., result image). According to an embodiment, the processor 120 may control the display to display the result image obtained in relation to the instruction (or prompt). According to an embodiment, the processor 120 may display the obtained image on an execution screen through the display. According to an embodiment, the processor 120 may control the display to display the obtained image (e.g., result image) in replacement of the image (e.g., original image or edited image) having been previously displayed.

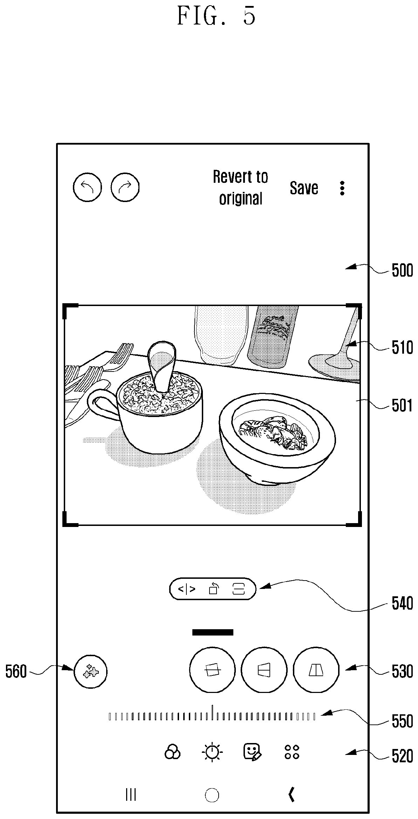

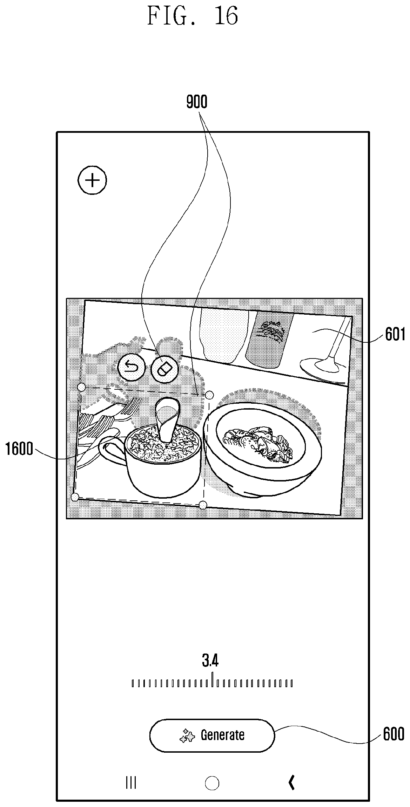

FIG. 5 to FIG. 26 are diagrams illustrating a user interface supporting image editing in an electronic device according to an embodiment, and an operation example of image editing using same.

According to an embodiment, FIG. 5 to FIG. 26 may show an example of an operation of supporting image editing, based on artificial intelligence in the electronic device 101 according to an embodiment. According to an embodiment, artificial intelligence may include generative artificial intelligence (AI). Generative artificial intelligence may refer to artificial intelligence technology that newly creates similar content by using existing content, such as text, audio, and/or images. For instance, generative artificial intelligence may correspond to artificial intelligence technology capable of generating content (e.g., text, audio, images, and/or video) corresponding to a given input. According to an embodiment, the electronic device 101 may generate (e.g., image reconfiguration) and provide an image and/or an object to correspond to a user's image editing, based on generative artificial intelligence (e.g., on-device AI). According to an embodiment, the electronic device 101 may request, from a server, generation (e.g., image reconfiguration) corresponding to image editing, and receive, from the server, and provide an image generated based on generative artificial intelligence of the server. According to an embodiment, the electronic device 101 may provide, to the generative artificial intelligence, a target image (e.g., an edited image) for which image generation is requested, and/or a prompt (or generative AI prompt) (e.g., a question or indication input to the generative artificial intelligence) related to image generation.

According to an embodiment, image editing may include various edits related to image transformation (or adjustment) such as tilt adjustment, ratio adjustment, horizontal alignment adjustment, vertical alignment adjustment, object separation, object movement, object removal, and/or object addition for an image and/or at least one object in the image.

According to an embodiment, as illustrated in FIG. 5 to FIG. 26, an operation method performed by the electronic device 101 according to an embodiment may include an operation of editing an image, based on interaction with a user, regenerating (or reconfiguring) the image on a server or on device, based on the edited image, and providing the regenerated image. According to an embodiment, an operation of editing an image may include an operation relating to a first edit and an operation relating to a second edit.

In an embodiment, a first edit (or a first editing operation) of an image may include an operation of supporting cropping of one or more objects in the image, editing of the cropped objects, and generating (e.g., inpainting and/or outpainting) of an image, based on the edited objects. For example, the first edit may include an editing operation of changing the position, size, tilt, angle, horizontal alignment, and/or vertical alignment of a cropped object (e.g., a subject in an image) or removing the cropped object, based on a user input. In an embodiment, the first edit may include an editing operation of adding a new object within the image. In an embodiment, the first edit may include an editing operation of restoring an object having been removed from the image. According to an embodiment, the user may crop and separate at least one object from the image, and move the cropped object to a desired position, adjust the size of the cropped object, and/or adjust the tilt thereof to make a picture composition desired by the user.

In an embodiment, a second edit (or a second editing operation) of an image may include an operation of supporting expanding of a background (or background area) outward from the image, and generating (e.g., inpainting and/or outpainting) of an image, based on an area expanded outward from the image. For example, the second edit may include an editing operation of rotating (e.g., changing the tilt thereof) the image, based on a user input, and expanding an area for a background outward from the image in response to the rotation of the image. In an embodiment, the second edit may include an editing operation of generating (e.g., inpainting and/or outpainting) a new object and/or background to be associated with an object and/or a background on an edge part of the image through the expanded area. According to an embodiment, the user may rotate the image to the left or right through a designated input (e.g., rotation based on two-finger touches) on the image, or may rotate the image to the left or right through scrolling (or dragging) an editing tool (e.g., an image rotation tool or dialer) to the left or right, so as to make a picture composition desired by the user. For example, the second edit may include an edit of generating an image through background expansion of an image and may support background expansion, based on various designated inputs (e.g., an input relating to image tilt change (e.g., image rotation)) related to the background expansion.

FIG. 5 may show an example of a user interface supporting image editing in an electronic device according to an embodiment of the disclosure.

According to an embodiment, a user may use the electronic device 101 to execute an application (e.g., a gallery application or an image editing application) and select an image to be edited. According to an embodiment, the electronic device 101 may display, on the display, a user interface 500 including an image 501 selected by the user.

According to an embodiment, the user interface 500 may include a first area 510 in which the image 501 is displayed, a second area 520 in which a first object (e.g., an indicator, an editing tool, an icon, or a menu) for selecting an editing type (e.g., automatic correction, adjustment, filters, color, and/or deco) of the image 501 is provided, a third area 530 in which a second object (e.g., an indicator, an editing tool, an icon, or a menu) related to editing of the image 501 is provided, a fourth area 540 in which a third object (e.g., an indicator, an editing tool, an icon, or a menu) related to editing of the image 501 is provided, a fifth area 550 in which a fourth object (or dialer) related to editing of the image 501 is provided, and/or a sixth area 560 in which a fifth object (or icon) related to automatic editing execution based on artificial intelligence is provided.

According to an embodiment, as the second object of the third area 530 and/or the third object of the fourth area 540, an object of a different editing function may be provided based on the editing type according to the first object selected in the second area 520. For example, in the example of FIG. 5, the editing type may be related to adjustment of the image 501, and as the second object and the third object, objects of menus (or editing functions) related to adjustment of the image 501 may be provided. For example, the second object may include an object related to adjustment of the tilt, horizontal alignment, and/or vertical alignment of the image 501. For example, the third object may include an object related to horizontal flip, rotation, and/or ratio adjustment of the image 501.

In an embodiment, the fourth object of the fifth area 550 may include an object supporting scroll adjustment of a menu (or editing function) related to an object selected in the third area 530. For example, when an object related to tilt adjustment is selected in the third area 530, the fourth object may support the tilt angle of the image 501 to be adjusted. For example, when an object related to horizontal or vertical alignment adjustment is selected in the third area 530, the fourth object may support the horizontal or vertical angle of the image 501 to be adjusted.

According to an embodiment, various objects in the first area 510, the second area 520, the third area 530, the fourth area 540, the fifth area 550, and/or the sixth area 560 may be replaced with information (e.g., a graphic object such as an icon) corresponding to a performed operation while image editing is being performed.

For example, while the image 501 is being displayed through the first area 510, when an object (e.g., an editing function or a menu) is selected through one area among the second area 520 to the sixth area 560, a different object (e.g., menu) associated with the selected object may be provided through conversion. For example, the fourth area 540 may provide a guide related to image editing performed by the user. For example, the second area 520 may provide a bottom menu related to image editing. For example, the third area 530 may provide a state (e.g., information (e.g., rotation angle) on a rotation state) of an image edited according to image editing. For example, the second area 520 to the sixth area 560 may provide an object (e.g., generation object (or button)) for requesting (e.g., image editing completion) image generation (e.g., regeneration (or reconfiguration) of the image 501), based on an image edited according to a user's image editing.

According to an embodiment, the user may have needs of changing into a picture composition desired by the user at the time of photographing or with respect to an image stored in the electronic device 101 (e.g., an image (e.g., picture) captured by the electronic device 101 or an image downloaded from the outside). According to the disclosure, the electronic device 101 may support the composition of an image (e.g., a photographed picture) to be freely changed (e.g., addition/erasing of an object in the image 501, and/or change of the tilt, horizontal alignment, and/or vertical alignment of the image 501 or the object), so as to satisfy the needs of the user who wants to change the composition of an incorrectly captured image or an image, the composition of which is desired to be changed by the user, and provide a new user experience (UX) to the user.

According to an embodiment, in a state where the image 501 is displayed, the user may perform a designated input for entering an editing mode (e.g., an artificial intelligence mode or an artificial intelligence editing mode) for supporting image editing. In an embodiment, the designated input may include a touch gesture input, a voice command input, a motion gesture input, or an editing tool selection input, which is pre-configured for entry into an editing mode.

According to an embodiment, the electronic device 101 may enter an editing mode, based on detecting a designated input in a state where the image 501 is displayed. According to an embodiment, the electronic device 101 may display, on the display, a user interface including the image 501 and various objects (e.g., objects corresponding to an indicator, an icon, and/or text) related to editing of the image 501, based on the entry into the editing mode.

According to an embodiment, as in the example of FIG. 5, the user may, in a state where the image 501 is displayed, enter an editing mode, based on a designated input and provide an interface corresponding to each of a first editing operation or a second editing operation in the editing mode. According to an embodiment, the user may select an object, based on a designated input of selecting the object in the image 501, and perform a first editing operation of performing image editing, based on the selected object. According to an embodiment, the user may, as in the example of FIG. 5, in a state where the image 501 is displayed in the editing mode, or continuously to the first editing operation after the first editing operation is performed, perform a second editing operation of performing image editing based on background area expansion through a designated input of rotating the image 501. According to an embodiment, the user may perform the second editing operation in the editing mode and then perform the first editing operation continuously to the second editing operation.

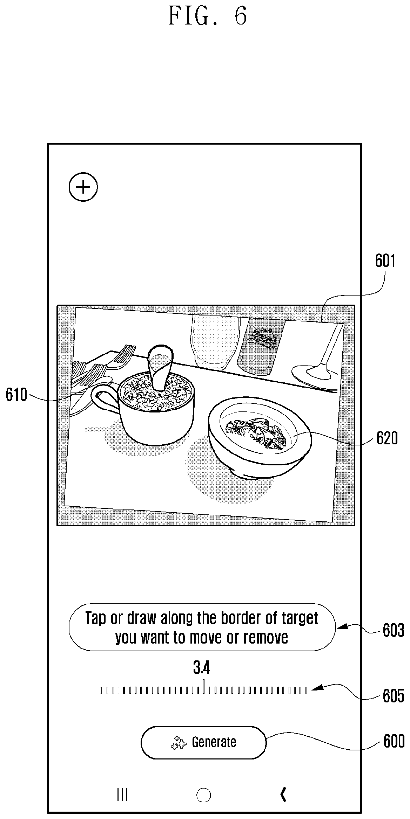

FIG. 6 to FIG. 16 are diagrams illustrating a user interface supporting image editing in an electronic device according to an embodiment of the disclosure, and an operation example of image editing using same.

According to an embodiment, FIG. 6 to FIG. 16 are diagrams illustrating an example of an operation relating to image editing in the electronic device 101. According to an embodiment, FIG. 6 to FIG. 16 may illustrate an example of an operation relating to a first edit among image editing operations according to the disclosure. In an embodiment, a first edit (or a first editing operation) of an image may include an operation of supporting cropping of one or more objects in the image, editing of the cropped objects, and generating (e.g., inpainting and/or outpainting) of an image, based on the edited objects.

According to an embodiment, as illustrated in FIG. 6 to FIG. 16, the electronic device 101 may perform an editing operation (e.g., first edit) related to at least one object within a displayed image 601, based on a user input (e.g., a first input on an image or a second input based on an editing tool). For example, as illustrated in FIG. 6 to FIG. 16, a user may crop (or separate) at least one object within the image 601 on the image 601, and move and/or remove the cropped object and/or add a new object to generate a new image (e.g., regenerate or reconfigure the image 601).

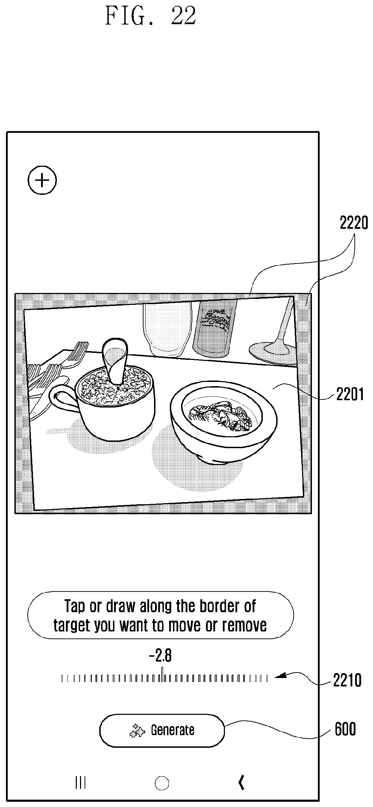

According to an embodiment, the image 601 in the example of FIG. 6 to FIG. 16 may be an image (e.g., an edited image, the background area of which has been expanded based on image rotation) obtained by performing an editing operation (e.g., second edit) based on background expansion of the image 601 as illustrated in FIG. 22 to FIG. 26 described later, and the image may represent an example of performing an editing operation (e.g., a first edit) related to at least one object in the edited image (e.g., rotated image). The disclosure is not limited thereto, and the first edit may also be performed based on the original image 501 before performing of the second edit (e.g., background area expansion based on image rotation) as illustrated in FIG. 5. According to an embodiment, the second edit may be continuously performed in an image edited by the first edit.

According to an embodiment, the first edit (or a first editing operation) of the image 601 may include a function of adjusting (e.g., editing) one or more objects (e.g., an object 610 and an object 620) within the image 601. For example, the electronic device 101 may support, based on interaction with the user, cropping (or separating) an object (e.g., a subject in the image) in the image 601, changing the position, size, tilt, angle, horizontal alignment, and/or vertical alignment of the cropped object, removing the cropped object from the image 601, or adding a new object in the image 601. For example, the electronic device 101 may, based on a user input, crop (or separate) the at least one object 610 and 620 in the image 601 to move the object to a desired position, adjust the size of the at least one object 610 and 620, and/or adjust the tilt/horizontal alignment/vertical alignment of the at least one object 610 and 620, so as to support the user to make a desired picture composition.

According to an embodiment, FIG. 6 may show an example of a state where the electronic device 101 displays the image 601 in an editing mode. For example, as described in the example of FIG. 5, the electronic device 101 may enter the editing mode, based on a designated input for supporting image editing in a state where the image 501 is displayed. According to an embodiment, the electronic device 101 may provide, in the editing mode, a guide object 603 (e.g., guide text) that guides the user about an image editing method. According to an embodiment, the electronic device 101 may provide, in the editing mode, an editing tool 605 (e.g., dialer) that supports editing of the image 601.

According to an embodiment, the electronic device 101 may provide, in the editing mode, an object 600 (e.g., generation object (or button)) for requesting (e.g., image editing completion) image generation (e.g., regeneration (or reconfiguration) of the image 601), based on an image edited by the user. For example, the object 600 for executing image generation may be provided based on an area corresponding to the second area 520 of the user interface 500 of FIG. 5. According to an embodiment, the object 600 for executing image generation is displayed while image editing is being performed (or in a state where the editing mode (or AI mode) has been entered), and may not be displayed when image editing is completed (e.g., a result image based on image generation completion is obtained).

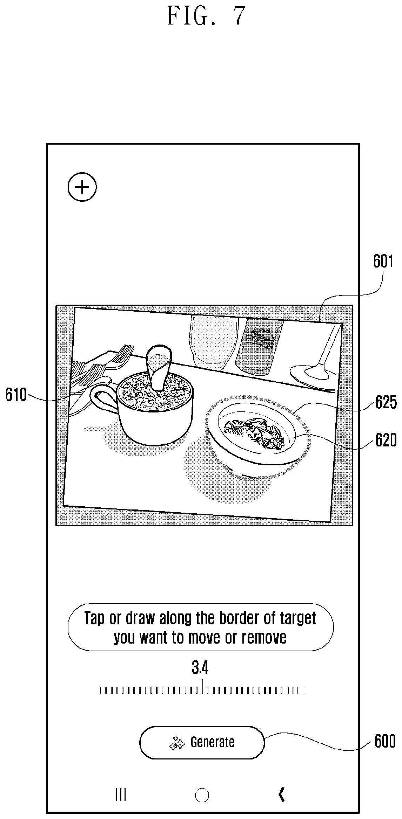

According to an embodiment, the user may select at least one object in the image 601 through a user input in a state where the image 601 is displayed, as illustrated in FIG. 6. For example, as illustrated in FIG. 7, the user may select (or designate) at least one target object (e.g., the object 620) for the first edit in the image 601. According to an embodiment, the electronic device 101 may select, as a target object for image editing, at least one object corresponding to a user input in the image 601.

According to an embodiment, a user input of selecting a target object may include an input based on at least one of various inputs based on a touch gesture. For example, a user input is an input for designating object selection in the image 601, and may include a first gesture (e.g., a single tap, double taps, triple taps, or long press) of tapping an object on the image, a second gesture of selecting an object on the image 601 by using a quadrangle or circle, a third gesture (e.g., drawing a closed curve, drawing a circle, or drawing a trap) enabling more free and flexible selection of an object through an input (e.g., an input of drawing a circle to include an object therein) of drawing a relatively circular shape rather than a designated shape, and/or a fourth gesture (e.g., tap & move or long tap & move) of selecting and moving an object in the image 601.

According to an embodiment, various user inputs related to image editing are not limited to an input using a user's finger, and may include an input using various input devices (e.g., a stylus pen, an electronic pen, and a mouse).

In an embodiment, the electronic device 101 may, when a user input (e.g., a first gesture, a second gesture, a third gesture, or a fourth gesture) of selecting the object 620 in the image 601 is detected, determine the object 620 selected according to the user input as a target object for image editing. In an embodiment, the electronic device 101 may display an object area 625 with respect to (or around) the selected object 620. In an embodiment, the object area 625 may display a dotted line (e.g., trap selection), based on a peripheral edge (or boundary or boundary surface) of the object 620 to provide a selected state of the object 620 to the user. According to an embodiment, the user may perform various edits, such as movement, removal, copy, paste, rotation (or angle adjustment or tilt adjustment), object addition, horizontal alignment adjustment, vertical alignment adjustment, and/or size adjustment based on the selected object 620, according to the selected object 620.

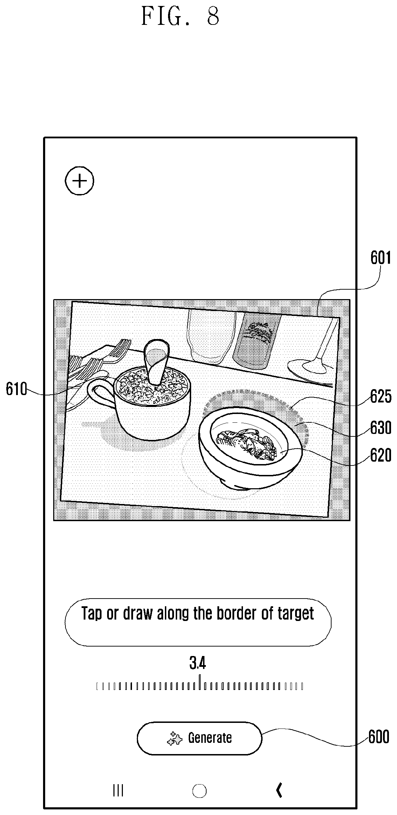

According to an embodiment, the selected object 620 may be separated from (or cropped out of) the image 601 (e.g., background image), based on a user input so as to be edited individually (or independently) to the image 601. For example, the object 620 in the image 601 may be cropped by a user input so as to be movable and/or editable. In an embodiment, the electronic device 101 may crop and separate the object 620 from the image 601, based on the object area 625. For example, the electronic device 101 may separate the object 620 from a background image including another object, which is not selected, based on a user input (e.g., a first user input) in the image 601, and edit the object 620 individually to the background image, based on a user input (e.g., a second user input different from the first user input). According to an embodiment, an editing operation using the cropped object 620 is illustrated in FIG. 8 to FIG. 16.

According to an embodiment, as illustrated in FIG. 8, the user may move the object 620 (e.g., target object) cropped in the example of FIG. 7. According to an embodiment, the electronic device 101 may move and display the cropped object 620 to and at a position corresponding to a user input (e.g., drag) based on the cropped object 620, according to the user input. According to an embodiment, the movement and selection of the cropped object 620 may be simultaneously performed based on a fourth gesture (e.g., tap & move or long tap & move) according to the example of FIG. 7.

According to an embodiment, the electronic device 101 may configure and display, as a masking area 630, an area (e.g., an area where the object 620 has been positioned before moved) where the object 620 has been originally positioned, based on the movement of the cropped object 620. For example, the electronic device 101 may display masking (e.g., grid pattern) in the area where the selected object has originally existed. In an embodiment, the masking area 630 may be an area representing that an object (e.g., the object 620) in the image 601 has been separated from the image 601 and then edited (e.g., moved or removed (or eliminated) from the existing position (e.g., the masking area 630) of the object. For example, the masking area 630 may be provided based on a designated graphic object (e.g., grid pattern).

According to an embodiment, the electronic device 101 may configure a relation between the object 620 (e.g., a cropped and moved object) and the masking area 630. In an embodiment, the relation between the object 620 and the masking area 630 may represent, for example, a link (or connection) between the object 620 and the masking area 630, which allows the object 620 and the masking area 630 to interoperate with each other, based on a user input based on the object 620 or the masking area 630. In an embodiment, the electronic device 101 may display a dotted line (e.g., trap selection) object area 625, based on a peripheral edge (or boundary or boundary surface) of the masking area 630, to provide, to the user, a state where the masking area 630 is configured.

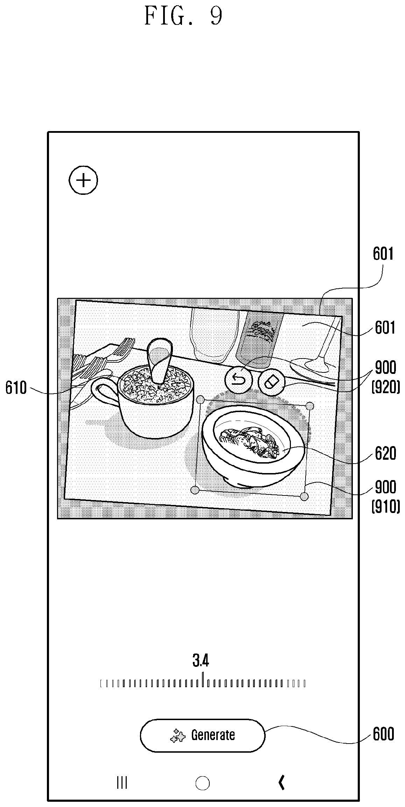

According to an embodiment, the electronic device 101 may provide a handler 900 related to image editing, as illustrated in FIG. 9, based on at least one target object (e.g., the object 620) selected in relation to editing in the example of FIG. 8. According to an embodiment, the user may perform at least one edit (e.g., an edit such as size adjustment, angle adjustment, and/or removal (or erasing)) related to the object 620, based on the handler 900 provided based on the object 620 (e.g., a cropped and moved object).

In an embodiment, the handler 900 may include a handler box 910 and at least one tool 920 (e.g., an editing tool or function tool). In an embodiment, the handler box 910 may be provided as a quadrangular box surrounding at least one target object (e.g., the object 620). In an embodiment, the tool 920 may include an object (e.g., at least one functional object (or tool object)) corresponding to each option (or tool) related to editing of at least one target object (e.g., the object 620). For example, the tool 920 may include a first functional object (e.g., undo object (or revert object)) and a second functional object (e.g., eraser object or recycle bin can).

In an embodiment, the first functional object (e.g., undo (or revert) object) may include an object supporting a function of restoring to the previous state (e.g., returning to the original state). For example, the undo object may include an object supporting a function (e.g., a cancel function) of canceling a previously executed editing command, and returning to a state (e.g., a state before execution) before the editing command is given. In an embodiment, the second functional object (e.g., eraser object or recycle bin can) may include an object supporting a function of removing (or eliminating) a target object.

In an embodiment, the tool 920 is not limited to the first functional object and the second functional object, and may include an additional functional object according to a configuration of the electronic device 101 or may be provided based on at least one functional object according to a user definition. For example, the tool 920 may include a third functional object (e.g., redo object) supporting cancel of the undo function, for example, a function of returning again to the state where a command has been executed, and a fourth functional object (e.g., flipping object) supporting flipping of the object.

According to an embodiment, the user may use the first functional object (e.g., undo object) when the user is to restore the edited object again (e.g., restore to the original state (e.g., original position and/or original tilt) after editing the object 620. For example, the electronic device 101 may support the object 620 to return to its initial state (e.g., a state before image editing), based on a user input based on the first functional object.

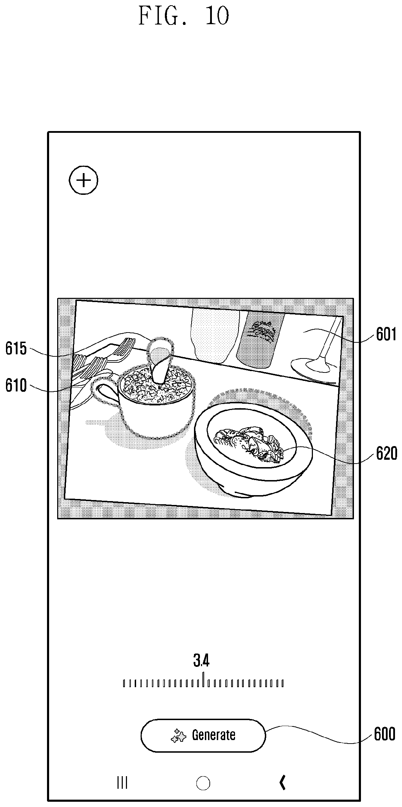

According to an embodiment, FIG. 10 to FIG. 12 may show an example of an operation in which the user additionally selects (or designates) at least one target object (e.g., the object 610) for editing in the image 601. For example, after editing the object 620, based on FIG. 7 to FIG. 9, the user may perform an operation of selecting the additional object 610 for editing in the image 601.

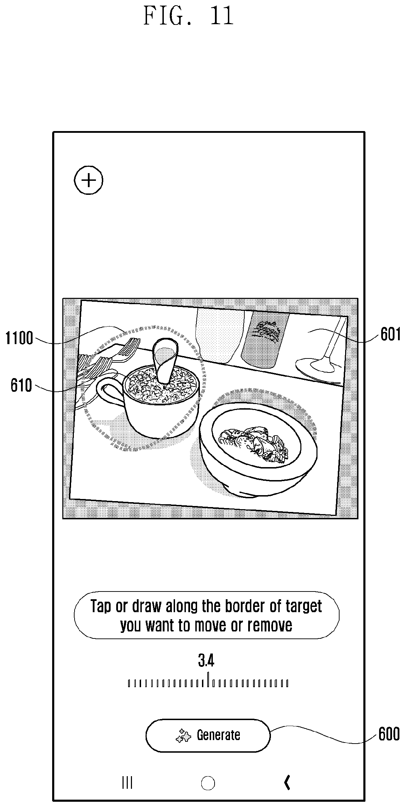

According to an embodiment, the electronic device 101 may select the object 610 in the image 601 as a target object for editing, based on a user input. According to an embodiment, a user input of selecting a target object may include an input corresponding to the first gesture to the fourth gesture. For example, a user input of selecting a target object may include, as illustrated in FIG. 11, an input of (e.g., a third gesture input of drawing a circle (or closed curve) to include the object 610 therein) of drawing a relatively circular shape (e.g., a trap 1100) around the object 610 on the image 601. According to an embodiment, the user may more freely and flexibly select an object through an operation of drawing a circle around the object 610.

In an embodiment, the electronic device 101 may, when a user input of selecting the object 610 in the image 601 is detected, determine the object 610 selected according to the user input as a target object for image editing. In an embodiment, the electronic device 101 may display an object area 615 with respect to (or around) the selected object 610. In an embodiment, the object area 615 may display a dotted line (e.g., trap selection), based on a peripheral edge (or boundary or boundary surface) of the object 610 to provide a selected state of the object 610 to the user. According to an embodiment, the user may perform various edits, such as movement, removal, copy, paste, rotation (or angle adjustment or tilt adjustment), object addition, horizontal alignment adjustment, vertical alignment adjustment, and/or size adjustment based on the selected object 610, according to the selected object 610.

According to an embodiment, the selected object 610 may be separated from (or cropped out of) the image 601 (e.g., background image), based on a user input so as to be edited individually (or independently) to the image 601. For example, the object 610 in the image 601 may be cropped by a user input so as to be movable and/or editable. In an embodiment, the electronic device 101 may crop and separate the object 610 from the image 601, based on the object area 615. For example, the electronic device 101 may separate the object 610 from a background image including another object (e.g., including the edited object 620), which is not selected, based on a user input in the image 601, and edit the object 610 individually to the background image, based on a user input.

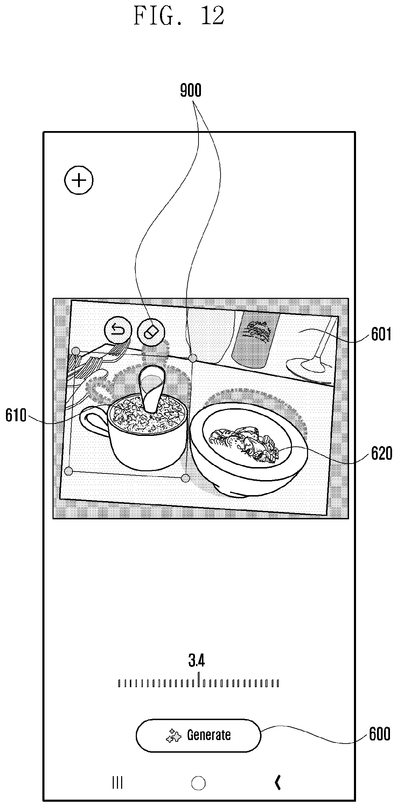

According to an embodiment, as illustrated in FIG. 12, the user may move the object 610 (e.g., target object) selected in the example of FIG. 11 and/or edit the object by using the handler 900. For example, the electronic device 101 and the user may perform an editing operation for the object 610 through an operation corresponding to the description referring to FIG. 8 and FIG. 9.

For example, the electronic device 101 may configure and display, as a masking area 630, an area (e.g., an area where the object 610 has been positioned before moved) where the object 610 has been originally positioned, based on the movement of the object 610. For example, the electronic device 101 may provide the handler 900 related to image editing, based on the object 610 (e.g., a cropped and moved object). For example, the user may perform at least one edit (e.g., an edit such as size adjustment, angle adjustment, and/or removal (or erasing)) related to the object 610, based on the handler 900 provided based on the object 610 (e.g., a cropped and moved object).

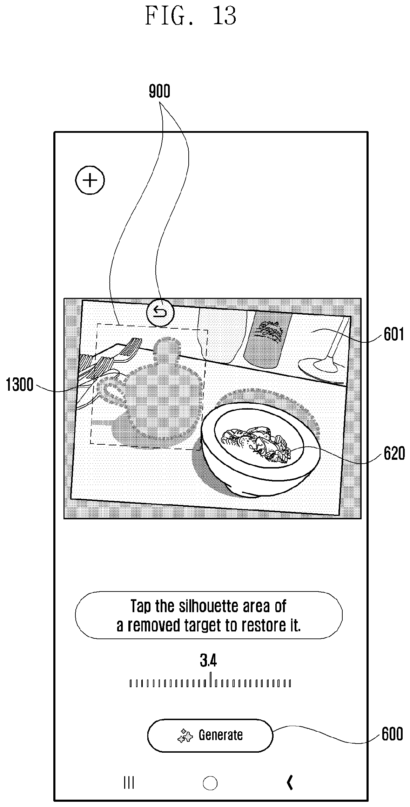

According to an embodiment, FIG. 13 may show an example of a case where the user has performed an edit of removing (or eliminating or erasing) the object 610 selected in the example of FIG. 12. For example, the user may remove the object 610 by using an eraser (or recycle bin can) object of the handler 900. According to an embodiment, the electronic device 101 may not display the object 610 in the image 601, based on the removal of the selected object 610, and may provide the handler 900, based on a masking area 1300 corresponding to the removed object 610. For example, the electronic device 101 may display masking (e.g., grid pattern) in the area (e.g., the masking area 1300) where the object 610 has originally existed.

According to an embodiment, the electronic device 101 may configure a relation between the object 610 and the masking area 1300. In an embodiment, the relation between the object 610 and the masking area 1300 may represent, for example, a link (or connection) between the object 610 and the masking area 1300, which allows the object 610 and the masking area 1300 to interoperate with each other, based on a user input based on the object 610 or the masking area 1300. In an embodiment, the electronic device 101 may display a dotted line (e.g., trap selection), based on a peripheral edge (or boundary or boundary surface) of the masking area 1300, and display the handler 900 for executing a function corresponding to the link.

In an embodiment, the handler 900 may include an undo object supporting a function of restoring to the previous state (e.g., returning to the original state). For example, the undo object may include an object supporting a function (e.g., a cancel function) of canceling a previously executed editing command, and returning to a state (e.g., a state before execution) before the editing command is given. According to an embodiment, the user may, when the user is to restore the object 610 again (e.g., restore to the original position) after editing (e.g., removing) the object 610 from the background image, may restore the object to return to its initial state (e.g., a state before image editing (e.g., removal)) by using the handler 900 (e.g., undo object) of the masking area 1300. For example, the electronic device 101 may restore the object 610, based on the masking area 1300 in response to a user input using the undo object, and provide the object as in the example of FIG. 10 which shows a state before image editing.

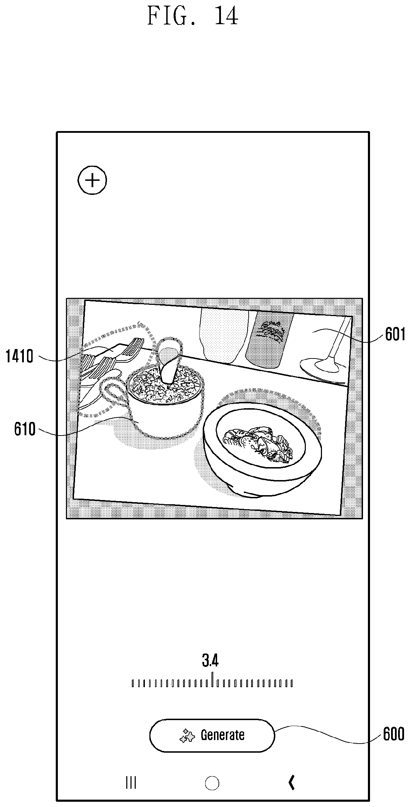

According to an embodiment, FIG. 14 may show an example of an operation in which the user additionally selects (or designates) an object 1410 for editing in the image 601 in a state where the object 610 is selected as in the example of FIG. 10 or FIG. 11. For example, in a state where the object 610 is selected based on FIG. 10 or FIG. 11, the user may perform an operation of selecting the additional object 1410 for editing in the image 601.

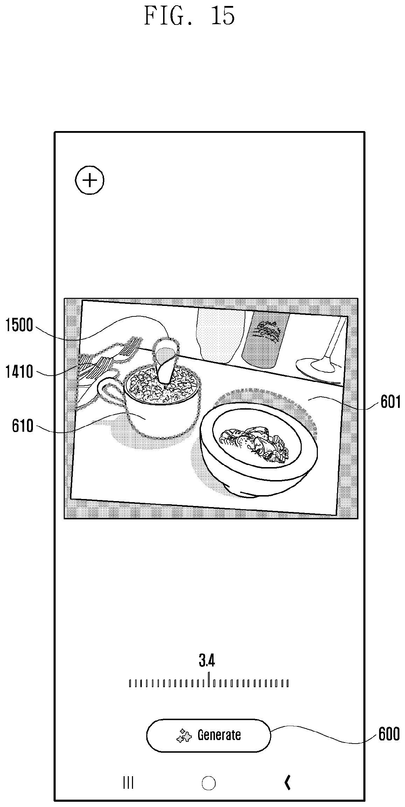

According to an embodiment, the electronic device 101 may, in a state where the object 610 is selected, when a part connected to a previously selected object area is selected (e.g., an object-based tap or an input of drawing a circle), select and provide an object continuously to the previous selection. For example, the electronic device 101 may, as illustrated in FIG. 15, connect a first object area of the previously selected object 610 and a second object area of the additionally selected object 1410 to provide a single object area 1500. For example, the object area 1500 may be configured based on a peripheral edge (or boundary or boundary surface) of a bundle object (or group object) including the previously selected object 610 and the additionally selected object 1410. For example, the electronic device 101 may connect the first object area and the second object area to provide a single target object (e.g., bundle object or group object) for editing of the previously selected object 610 and the additionally selected object 1410.

According to an embodiment, the user may perform various edits, such as movement, removal, copy, paste, rotation (or angle adjustment or tilt adjustment), object addition, horizontal alignment adjustment, vertical alignment adjustment, and/or size adjustment, based on the bundle object (or group object) (e.g., the multiple objects 610 and 1410). According to an embodiment, the bundle object may be edited by being separated from (or cropped out of) the image 601 (e.g., background image), so as to be edited individually (or independently) to the image 601.

According to an embodiment, the user may edit a bundle object 1600 (e.g., target object) selected in relation to editing in the example of FIG. 15, by using the handler 900. For example, the electronic device 101 and the user may perform editing for the bundle object 1600 through an operation corresponding to the description referring to FIG. 8 and FIG. 9. For example, the electronic device 101 may configure and display, as a masking area, an area (e.g., an area where the bundle object 1600 has been positioned before moved) where the bundle object 1600 has been originally positioned, based on the movement of the bundle object 1600. For example, the electronic device 101 may provide the handler 900 related to image editing, based on the bundle object 1600. For example, the user may perform at least one edit (e.g., an edit such as size adjustment, angle adjustment, and/or removal (or erasing)) related to the bundle object 1600, based on the handler 900 provided based on the bundle object 1600.

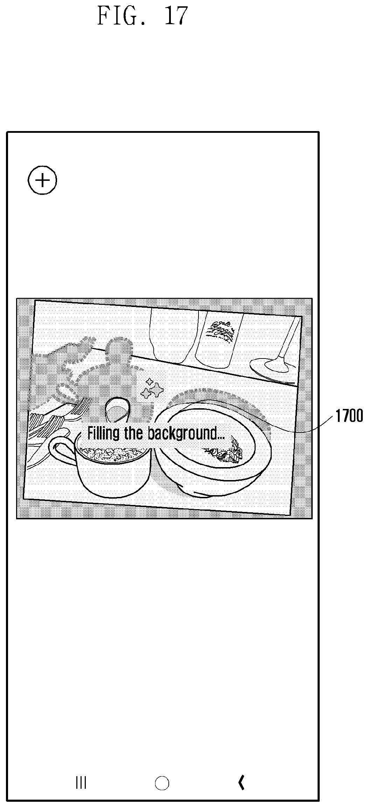

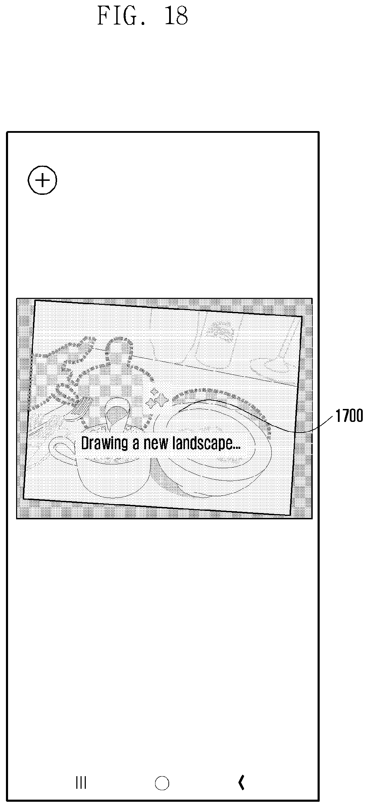

FIG. 17 and FIG. 18 are diagrams illustrating an example of a user interface during image generation in an electronic device according to an embodiment of the disclosure.

According to an embodiment, FIG. 17 and FIG. 18 may show a user interface during image generation (e.g., regeneration or reconfiguration) (e.g., while an image generation process is proceeding) and an operation example thereof. For example, FIG. 17 and FIG. 18 may represent an example of a user interface during an image generation process. According to an embodiment, the image generation process may include an operation enabling inpainting and/or outpainting to be performed, based on an edited image. For example, the electronic device 101 may generate an instruction (or prompt) causing inpainting and/or outpainting to be performed, based on an edited image. According to an embodiment, the electronic device 101 may provide the generated instruction to generative artificial intelligence to execute the image generation process, based on the generated instruction. According to an embodiment, the generated instruction may be provided to on-device generative artificial intelligence and/or generative artificial intelligence of a server.

According to an embodiment, the user may perform image editing for the image 601, based on performing of at least one operation illustrated in FIG. 6 to FIG. 16, and request image generation based on the edited image. In an embodiment, an image generation request may be performed by a designated command input. For example, the user may request image generation (or completing of image editing), based at least on a designated object (e.g., a software button (e.g., the generation object 600 in FIG. 6) provided on a user interface including the image), a designated voice command, and/or a designated motion gesture (e.g., shaking of the electronic device 101) for image generation (or regeneration). According to an embodiment, the electronic device 101 may, while performing image editing, based on interaction with the user, according to detection of a designated command input, determine to enter an operation of generating a new image based on the edited image.

According to an embodiment, the user may perform a user input of selecting a software button (e.g., the generation object 600) provided on a user interface as in the example of FIG. 6 to FIG. 16. According to an embodiment, the generation object 600 may be provided through a designated area while image editing is being performed (or in a state where the editing mode (or AI mode) has been entered). According to an embodiment, the electronic device 101 may receive a user input, based on the generation object 600 while performing image editing, based on interaction with the user.

According to an embodiment, the electronic device 101 may, in response to receiving a user input based on the generation object 600, perform a process (e.g., image generation process) related to generating a new image, based on an edited image. According to an embodiment, the image generation process may include an operation of image regeneration (e.g., reprocessing) based on the edited image, based on artificial intelligence (AI) (e.g., generative AI). In an embodiment, the image generation process may be provided on-device and/or based on the server.

According to an embodiment, as shown in the example in FIG. 17 and/or FIG. 18, the electronic device 101 may provide a relevant interface to the user while performing the image generation process. For example, the relevant interface may include a guide object 1700 notifying that the image generation process is proceeding. For example, the relevant interface may dim a background including an image and provide the guide object 1700 on the dimmed background.

In an embodiment, the guide object 1700 may be provided based on an indicator (e.g., guide object 1700) indicating an image generation process proceeding state. In an embodiment, the indicator (e.g., guide object 1700) may include an indicator (or icon, item, identifier, or object) (e.g., a moving icon (or animation icon), the state of which is changing) and/or text (e.g., a proceeding guide phrase). In an embodiment, the text (e.g., a proceeding guide phrase) may be changed to various content and provided together with the change of the indicator while the process is proceeding, as shown in the example of FIG. 17 and FIG. 18.

For example, the electronic device 101 may change and provide the guide phrase according to the change of the indicator (e.g., a moving icon). For example, the guide phrase may be changed and provided over time such as "Filling the background..." in FIG. 17 and "Drawing a new landscape..." in FIG. 18. In an embodiment, the guide phrase is not limited thereto, and may include various phrases pre-defined or automatically generated based on artificial intelligence. For example, various guide phrases such as "Adding missing areas..." or "Meticulously coloring..." may be provided.

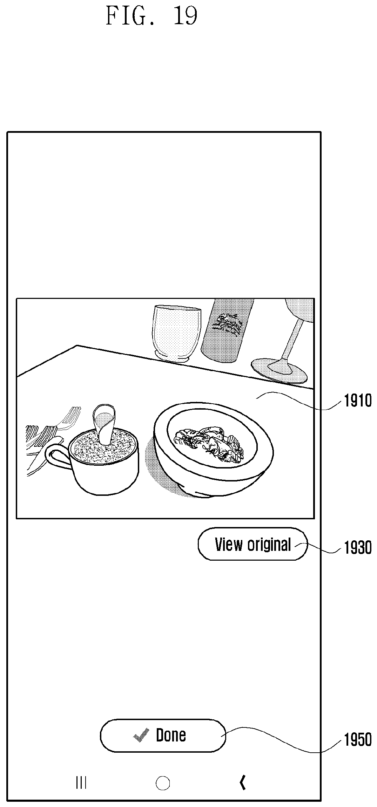

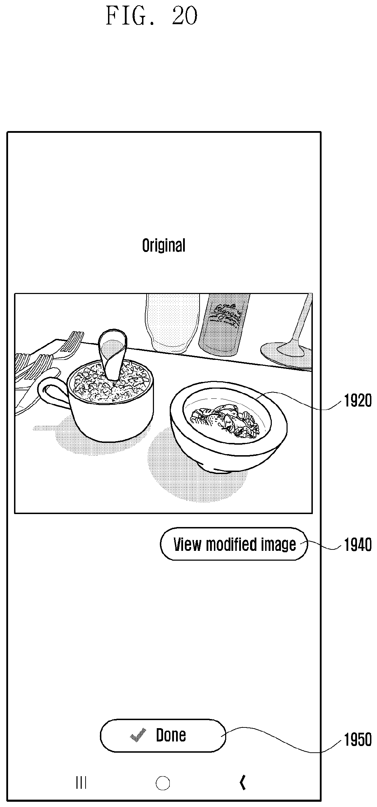

FIG. 19 and FIG. 20 are diagrams illustrating an example of providing a result image of image editing in an electronic device according to an embodiment of the disclosure.

According to an embodiment, FIG. 19 and FIG. 20 may show a user interface provided according to completion of an image generation process and an operation example thereof. According to an embodiment, the electronic device 101 may complete an image generation operation, based on completion of an image generation process, and provide a relevant interface.

According to an embodiment, the electronic device 101 may obtain a new image (or result image) in relation to an instruction (or prompt). According to an embodiment, the electronic device 101 may obtain (e.g., generate) a new image (e.g., result image) according to an image generation process (e.g., inpainting and/or outpainting based on the edited image) executed in relation to an instruction (or prompt) on on-device artificial intelligence. According to an embodiment, the electronic device 101 may obtain (or receive), from a server, an image (e.g., result image) generated by the server according to an image generation process (e.g., inpainting and/or outpainting based on the edited image) executed in relation to an instruction (or prompt) on server artificial intelligence. According to an embodiment, the electronic device 101 may determine (or decide) the completion of the image generation process, based on the generation and/or acquisition of a new image (e.g., result image).

According to an embodiment, the electronic device 101 may display a generated image 1910. According to an embodiment, the electronic device 101 may display the generated image 1910 in replacement of an image (e.g., original image) having been previously displayed on the display. According to an embodiment, the generated image 1910 may be, for example, an image in which an object and an empty area (e.g., masking area) generated by object editing have been reconfigured. For example, the generated image may be generated by generation (e.g., inpainting) of a masking area and inclusion (e.g., combination) of the edited object in a background image.

According to an embodiment, the electronic device 101 may provide a function of comparison through conversion between the generated image 1910 (e.g., result image) and an original image 1920 (e.g., the image 601), as illustrated in FIG. 19 and FIG. 20. For example, as illustrated in FIG. 19 and FIG. 20, the user interface may include an object (e.g., toggle object) supporting display conversion between the generated image 1910 and the original image 1920. According to an embodiment, the object (e.g., toggle object) for display conversion may include a first toggle object 1930 for converting the generated image 1910 to the original image 1920 (e.g., view original), as in the example of FIG. 19, and a second toggle object 1940 for converting the converted original image 1920 to the generated image 1910 (e.g., view modified image), as in the example of FIG. 20.

According to an embodiment, as the result image (e.g., the generated image 1910), N or more result images (e.g., multiple result images) may be provided. For example, the electronic device 101 may generate multiple result images, based on generative artificial intelligence, and provide respective previews (e.g., thumbnails) corresponding to the multiple result images as a bottom menu for the result image (e.g., the generated image 1910). According to an embodiment, when multiple result images are provided, the user may sequentially convert the multiple result images in a manner of sliding previews (e.g., a flick or swipe gesture input). For example, the electronic device 101 may sequentially convert and display the multiple result images in response to the user's input of converting previews.

According to an embodiment, the user may perform an operation of selecting a desired image among the multiple result images or an operation of regeneration using the selected image. For example, when the user doesn't like a displayed result image (e.g., the generated image 1910), the user may perform additional image generation for the result image through a generation button.

According to an embodiment, as illustrated in FIG. 19 and FIG. 20, the user interface may include a completion object 1950 (or completion button). For example, the user may identify the generated image 1910, and may perform a user input of selecting the completion object 1950 to complete image editing. According to an embodiment, the electronic device 101 may determine to terminate an image editing operation (e.g., editing mode or AI mode) in response to a user input using the completion object 1950.

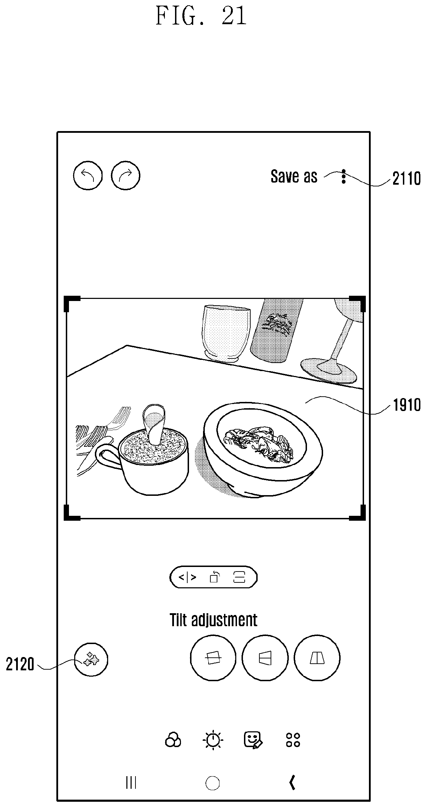

FIG. 21 is a diagram illustrating an example of providing a result image of image editing in an electronic device according to an embodiment of the disclosure.

According to an embodiment, FIG. 21 may show an example of providing a result image of image editing in an electronic device according to an embodiment of the disclosure. According to an embodiment, the electronic device 101 may terminate (e.g., release (or deactivate) an editing mode) an editing operation, based on determination to terminate the editing operation, and provide a user interface (e.g., an execution screen of an application) including the generated image 1910.

According to an embodiment, the user interface may include a storage object 2110 supporting a function of storing the generated image 1910 in internal memory (e.g., the memory of the electronic device 101) and/or external memory (e.g., cloud), and an indicator 2120 (e.g., artificial intelligence object) indicating that the displayed image is an image generated based on artificial intelligence. According to an embodiment, the user interface may, for example, include the generated image 1910, the storage object 2110, and/or the indicator 2120 in the user interface 500 as described in the description given with reference to FIG. 5.

Various embodiments related to an image editing operation based on an object according to an embodiment are described with reference to the drawings mentioned below.

FIG. 22 to FIG. 26 are diagrams illustrating an operation example of image editing in an electronic device according to an embodiment of the disclosure.

According to an embodiment, FIG. 22 to FIG. 26 are diagrams illustrating an example of an operation relating to image editing in the electronic device 101. According to an embodiment, FIG. 22 to FIG. 26 may illustrate an example of an operation relating to a second edit among image editing operations according to the disclosure. In an embodiment, a second edit (or a second editing operation) of an image may include an operation of supporting expanding of a background (or background area) outward from the image, and generating (e.g., inpainting and/or outpainting) of an image, based on an area expanded outward from the image.

According to an embodiment, as illustrated in FIG. 22 to FIG. 26, the electronic device 101 may perform an editing operation (e.g., second edit) based on background expansion of a displayed image 2201, based on a user input (e.g., a first input on an image or a second input based on an editing tool). For example, as illustrated in FIG. 22 to FIG. 26, the user may rotate the image 2201 to the left or right through a designated input (e.g., rotation based on two-finger touches) on the image 2201, or may rotate the image 2201 to the left or right through scrolling (or dragging) an editing tool 2210 (e.g., an image rotation tool or dialer) to the left or right.

According to an embodiment, the second edit (or second editing operation) of the image 2201 may include an edit of generating an image through background expansion of the image 2201 (e.g., regenerating or reconfiguring the image 2201) and may support background expansion, based on various designated inputs (e.g., an input relating to tilt change of the image 2201) related to the background expansion. For example, the electronic device 101 may, as illustrated in FIG. 22 to FIG. 26, perform an edit (e.g., tilt adjustment) for the image 2201 to generate a new image (e.g., regenerate or reconfigure the image 2201).

According to an embodiment, the image 2201 in the example of FIG. 22 to FIG. 26 may be, for example, the original image 501 before editing is performed as illustrated in FIG. 5. For example, the example of FIG. 22 to FIG. 26 may represent an example of performing image editing, based on background expansion of the original image 501. The disclosure is not limited thereto, and the second edit may also be performed based in an image edited according to the first edit as described in the description given with reference to FIG. 6 to FIG. 16. For example, the second edit may be continuously performed in an image edited by the first edit.

According to an embodiment, the second edit (or second editing operation) of the image 2201 may include, for example, a function of generating (e.g., regenerate an object) a background around an object (e.g., subject) in contact with an edge of the image 2201 (e.g., a landscape picture, a portrait picture, a background picture, an object picture, or an animal picture) to provide a naturally expanded background so as to, even if the tilt of the image 2201 is changed, enable the object in the image 2201 to be placed in a desired area within the image 2201 and enable the user to edit the image 2201 to have a desired angle and composition.

According to an embodiment, FIG. 22 may show an example of a state where the electronic device 101 displays the image 2201 in an editing mode. For example, as described in the example of FIG. 5, the electronic device 101 may enter the editing mode, based on a designated input for supporting image editing in a state where the image 501 is displayed. According to an embodiment, the electronic device 101 may provide, in the editing mode, a guide object (e.g., guide text) that guides the user about an image editing method. According to an embodiment, the electronic device 101 may provide, in the editing mode, an editing tool 2210 (e.g., dialer) that supports editing of the image 2201.

According to an embodiment, the electronic device 101 may provide, in the editing mode, the object 600 (e.g., generation object (or button)) for requesting (e.g., image editing completion) image generation (e.g., regeneration (or reconfiguration) of the image 2201), based on an image edited by the user. According to an embodiment, the electronic device 101 may provide, in the editing mode, the editing tool 2210 (e.g., image rotation tool or dialer) that supports image editing. In an embodiment, the editing tool 2210 may provide a user input, and provide a real-time change state (e.g., information (e.g., tilt or angle information) on a rotation state) of the image 2201 in response to image editing based on the user input.

According to an embodiment, as illustrated in FIG. 22 to FIG. 24, the user may perform an input of a designated touch gesture (e.g., a touch gesture of rotating the image 2201 to the left or right, based on two-finger touches) on the image 2201, or an input of a touch gesture (e.g., a touch gesture of scrolling (or dragging) a dialer to the left or right) of manipulating the editing tool 2210 (e.g., an image rotation tool or dialer). According to an embodiment, FIG. 22 to FIG. 24 may show an example of a state where the image 2201 is rotated to the left according to a user input.

According to an embodiment, the electronic device 101 may generate and display a masking area 2220 representing an area where a background is generatable around the outer line of the image 2201, in response to the rotation of the image 2201 based on a user input. In an embodiment, the masking area 2220 may represent an expandable area (e.g., at least one of above/below/left/right areas of the image 2201) around the image 2201. For example, image editing may include an operation of generating an image due to background expansion, based on tilt change of the image 2201. According to an embodiment, a second edit may include an edit of generating (e.g., regenerate an object) a background around an object (e.g., subject) in contact with an edge of the image 2201 to provide a naturally expanded background so as to, even if the tilt of the image 2201 is changed, enable the object in the image 2201 to be placed in a desired area within the image 2201 and enable the image 2201 to have the user's desired angle and composition.

According to an embodiment, when image editing (e.g., second edit) (e.g., background expansion function or background expansion mode) is executed, the electronic device 101 may provide a real-time change state (e.g., a degree at which the masking area 2220 is displayed) of the masking area 2220 (or expandable area) (e.g., at least one of above/below/left/right areas of the image 2201) around the image 2201 according to the rotation of the image 2201 based on a user input. For example, the masking area 2220 (or expandable area) may be defined by about n% (e.g., n is a natural number) of the image 2201, and the masking area 2220 may be larger than an area displayed on the display of the electronic device 101. According to an embodiment, while displaying the masking area 2220, the electronic device 101 may change to and provide a state where the tilt (e.g., rotation), ratio, movement, horizontal alignment, and/or vertical alignment of the image 2201 are adjustable.

According to an embodiment, the electronic device 101 may use, as a background expansion area, up to an outside area of the image 2201 rather than the inside of a cropper (or image cropper) (not illustrated). In an embodiment, the cropper (or image cropper) may be software (or application or program) (e.g., plugin (e.g., flutter plugin)) supporting an image when the image is required to be cropped to a repetitive and standardized shape. For example, in the conventional definition, the inside of the cropper is an area to which the background area of an image is expected to be expanded. However, in the disclosure, a background expansion area may be defined to be the outside of the image 2201 rather than the inside of the cropper.

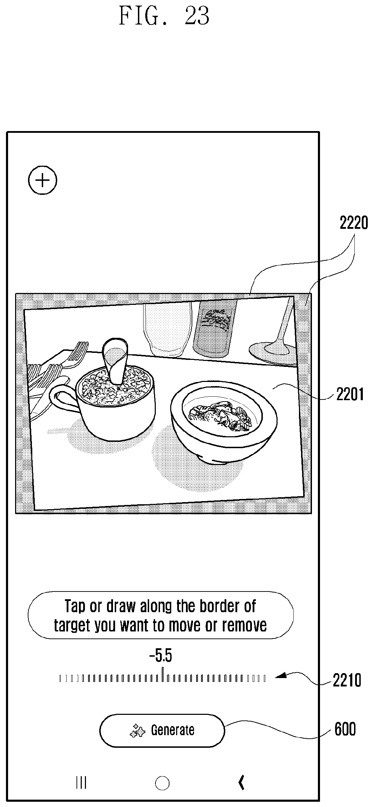

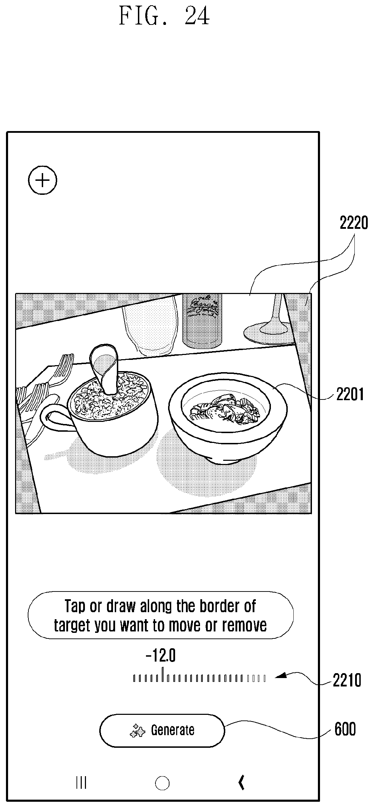

According to an embodiment, the electronic device 101 may provide a real-time change state (e.g., the state change according to left rotating) of the image 2201, based on the editing tool 2210 in response to the rotation of the image 2201 based on a user input. For example, the electronic device 101 may provide information (e.g., tilt or angle information) (e.g., "-2.8" in FIG. 22, "-5.5" in FIG. 23, and "-12.0" in FIG. 24 representing a current position value of the dialer) on a rotation state of the image 2201.

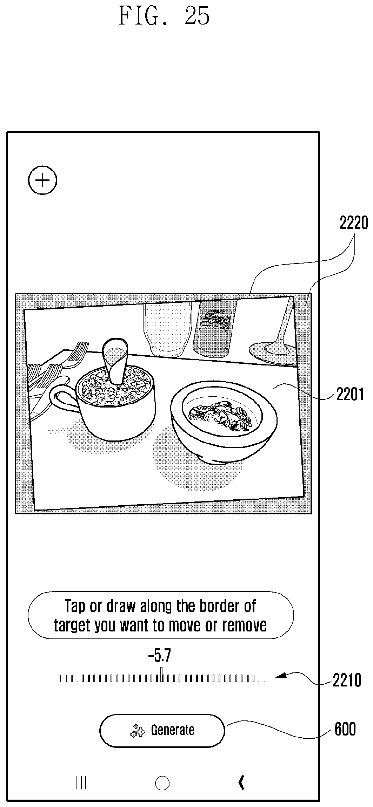

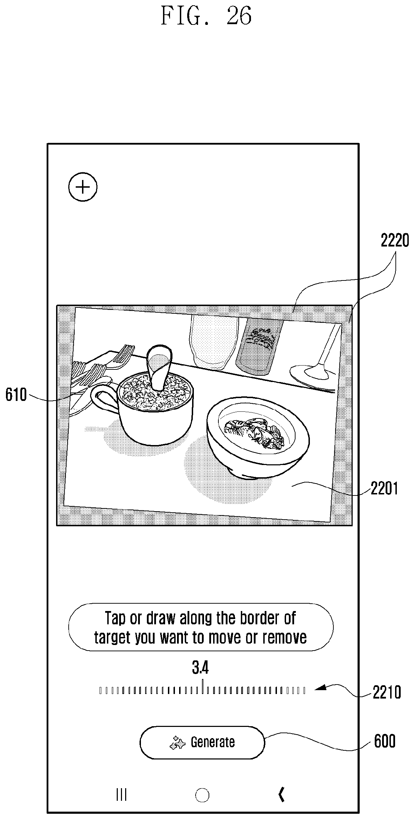

According to an embodiment, as illustrated in FIG. 25 and FIG. 26, FIG. 25 and FIG. 26 may show an example of a state where the image 2201 is rotated to the right according to a user input. For example, the user may, as illustrated in the example of FIG. 22 to FIG. 24, while rotating the image 2201 to the left or after rotating same, perform a user input of rotating the image 2201 to the right to identify an opposite composition, thereby changing the rotation direction (or tilt) of the image 2201 to an opposite direction.

According to an embodiment, as illustrated in FIG. 25 and FIG. 26, the electronic device 101 and the user may perform an image editing operation for the image 2201 through an operation corresponding to the description referring to FIG. 22 to FIG. 24. For example, the electronic device 101 may, in response to the rotation of the image 2201 based on a user input, while displaying the change of the masking area 2220 representing an area where background generation is possible around the outer line of the image 2201, provide a real-time change state (e.g., the state change according to right rotating) of the image 2201. For example, the electronic device 101 may provide information (e.g., tilt or angle information) (e.g., "-5.7" in FIG. 25 and "3.4" in FIG. 26 representing a current position value of the dialer) on a rotation state of the image 2201.

According to an embodiment, the user may perform second edit-based image editing for the image 2201, based on performing of at least one operation illustrated in FIG. 22 to FIG. 26, and request image generation based on the edited image. In an embodiment, an image generation request may be performed by a designated command input. For example, the user may request image generation (or completing of image editing), based at least on a designated object (e.g., the generation object 600), a designated voice command, and/or a designated motion gesture (e.g., shaking of the electronic device 101) for image generation (or regeneration). According to an embodiment, the electronic device 101 may, while performing image editing, based on interaction with the user, according to detection of a designated command input, determine to enter an operation of generating a new image based on the edited image.

According to an embodiment, the electronic device 101 may obtain a new image (or result image) in relation to an instruction (or prompt). According to an embodiment, the electronic device 101 may, while performing image editing, based on interaction with the user, according to detection of a designated command input, perform a process (e.g., image generation process) related to generating of a new image (e.g., result image), based on the edited image. According to an embodiment, the electronic device 101 may perform an image generation process through an operation corresponding to the description referring to FIG. 17 and FIG. 18 by interacting with the user.

According to an embodiment, the electronic device 101 may, when the image generation process is completed, provide an operation corresponding to the description referring to FIG. 19 and FIG. 20 by interacting with the user. For example, the electronic device 101 may provide a function of comparison through conversion between a generated image and an original image.

According to an embodiment, the electronic device 101 may, when the image generation process is completed, perform an operation corresponding to FIG. 19 and

FIG. 20 and then, when image editing is completed, complete an image editing operation through an operation corresponding to the description referring to FIG. 21 by interacting with the user. For example, the electronic device 101 may release (or deactivate) an editing mode, and provide a user interface (e.g., an execution screen of an application) including the generated image (e.g., result image). According to an embodiment, the electronic device 101 may provide a reconfigured image, based on a result of performing a second editing operation, for example, through background expansion based on an empty area (e.g., masking area) generated by image rotation. For example, the reconfigured image may be generated through generation (e.g., outpainting) of a masking area. For example, the electronic device 101 may provide an image which is obtained by expanding an image to the outside background area thereof and generating a background (e.g., a background in which an object in contact with an edge of the image is filled) in an empty area (e.g., masking area) generated as the background area, based on the image.

Various embodiments related to an image editing operation based on tilt adjustment of an image according to an embodiment are described with reference to the drawings mentioned below.

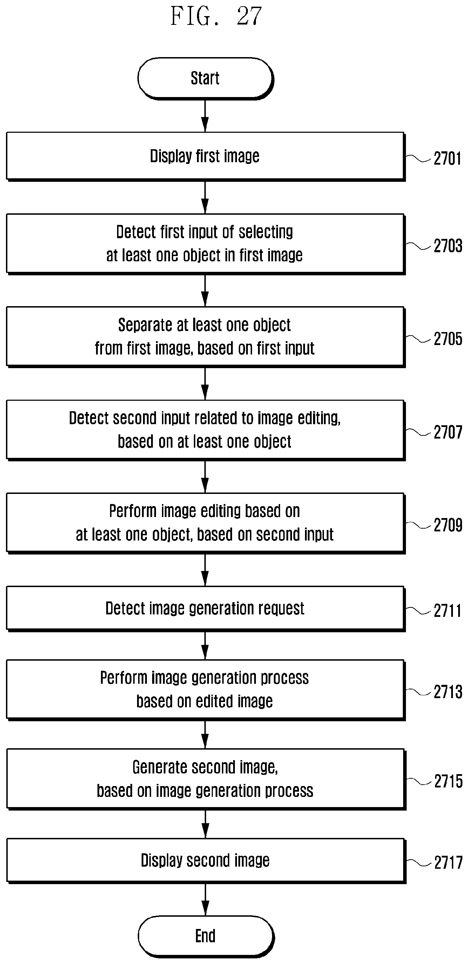

FIG. 27 is a flowchart illustrating an operation method of an electronic device according to an embodiment of the disclosure.

According to an embodiment, FIG. 27 may show an example of a method of supporting image editing and/or generation (e.g., regeneration or reprocessing) in the electronic device 101 according to an embodiment. According to an embodiment, FIG. 27 may show an example of a method of supporting a first edit (e.g., image editing based on an object) in the electronic device 101 according to an embodiment.

The method of supporting image editing and/or generation in the electronic device 101 according to an embodiment of the disclosure may be performed according to, for example, the flowchart illustrated in FIG. 27. The flowchart illustrated in FIG. 27 is an example according to an embodiment of an operation of the electronic device 101, and at least some operations may be changed in sequence or performed in parallel, may be performed as independent operations, or may be supplemented by at least some other operations. According to an embodiment of the disclosure, operation 2701 to operation 2717 may be performed by at least one processor (e.g., the processor 120 and 230 in FIG. 1 to FIG. 3) of the electronic device 101.

According to an embodiment, an operation described with reference to FIG. 27 may be, for example, heuristically performed in combination with the operations described with reference to FIG. 4 to FIG. 26, may be heuristically performed in replacement of at least some operations among the described operations and in combination with at least other some operations, or may be heuristically performed as detailed operations of at least some operations among the described operations.

As illustrated in FIG. 27, an operation method performed by the electronic device 101 according to an embodiment may include an operation 2701 of displaying a first image, an operation 2703 of detecting a first input of selecting at least one object in the first image, an operation 2705 of separating the at least one object from the first image, based on the first input, an operation 2707 of detecting a second input related to image editing, based on the at least one object, an operation 2709 of performing image editing based on the at least one object, based on the second input, an operation 2711 of detecting an image generation request, an operation 2713 of performing an image generation process based on the edited image, an operation 2715 of generating a second image, based on the image generation process, and an operation 2717 of displaying a second image.

Referring to FIG. 27, in operation 2701, the processor 120 of the electronic device 101 may display a first image. According to an embodiment, the processor 120 may execute an application (e.g., a gallery application, an image capturing application, and/ or an image editing application) and display, on the display, the first image selected by the user.

In operation 2703, the processor 120 may detect a first input of selecting at least one object in the first image. According to an embodiment, the processor 120 may detect an input of executing image editing based on the first image. According to an embodiment, while the first image is being displayed, the processor 120 may detect a designated input for editing the first image. In an embodiment, the designated input may include various touch gestures of selecting an object on the first image.

In operation 2705, the processor 120 may separate the at least one object from the first image, based on the first input. According to an embodiment, the processor 120 may separate the selected at least one object from a background image including another object not selected in the first image, based on the first input.

In operation 2707, the processor 120 may detect a second input related to image editing, based on the at least one object. In an embodiment, the second input may include various inputs of editing the at least one object, such as movement, removal, copy, paste, rotation (or tilt adjustment), object addition, and/or size adjustment of the at least one object.

In operation 2709, the processor 120 may perform image editing based on the at least one object, based on the second input. According to an embodiment, the processor 120 may edit (e.g., a first edit) the at least one object having been separated from the first image, independently to the background image, based on the second input. According to an embodiment, the processor 120 may fixedly display the background image, and change the separated at least one object according to the second input.

In operation 2711, the processor 120 may detect an image generation request. According to an embodiment, the user may edit the at least one object within the first image, based on the second input, and complete image editing. In an embodiment, the completing of image editing may be performed by a designated command input. For example, the user may request completing of image editing (or image generation), based at least on a designated object (e.g., a software button provided on a user interface), a designated voice command, and/or a designated motion gesture (e.g., shaking of the electronic device 101) for image editing completion (or image generation (or regeneration)). According to an embodiment, the processor 120 may, while performing image editing, based on interaction with the user, according to detection of a designated command input, determine that generation of a new image based on the edited image is requested.

In operation 2713, the processor 120 may perform an image generation process based on the edited image. According to an embodiment, the processor 120 may perform an image generation process related to generating of a second image (e.g., new image), based on the first image edited by image editing based on the second input, based on detecting the image generation request. According to an embodiment, the image generation process may include an operation of generating (e.g., regeneration or reprocessing) a new image by using the edited image, based on artificial intelligence (AI) (e.g., generative AI). In an embodiment, the image generation process may be performed on-device and/or based on a server. According to an embodiment, the processor 120 may provide, for the image generation process and to the generative artificial intelligence, the edited image and/or a prompt (or generative AI prompt) (e.g., a question or indication input to the generative artificial intelligence) for image generation based on the edited image.

In operation 2715, the processor 120 may generate a second image, based on the image generation process. According to an embodiment, the processor 120 may generate a second image according to the image generation process based on the on-device artificial intelligence. According to an embodiment, the processor 120 may obtain (or receive) a second image from the server according to the image generation process based on the server artificial intelligence. According to an embodiment, the processor 120 may determine the completion of image generation, based on the generation and/or acquisition of the second image.

In operation 2717, the processor 120 may display the second image. According to an embodiment, the processor 120 may display the second image on an execution screen of an application through the display. According to an embodiment, the processor 120 may display the second image in replacement of the first image having been previously displayed. According to an embodiment, the processor 120 may display the second image, and provide a comparison function of comparison through conversion between the first image and the second image, based on a user input. According to an embodiment, the processor 120 may display the second image, and provide a storage function of storing the second image in internal memory (e.g., the memory 130 of the electronic device 101) and/or external memory (e.g., cloud), based on a user input.

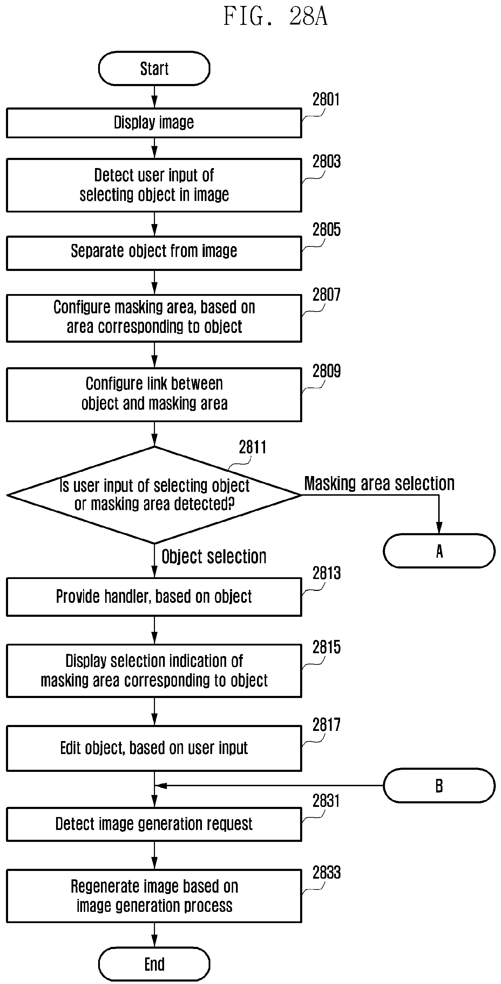

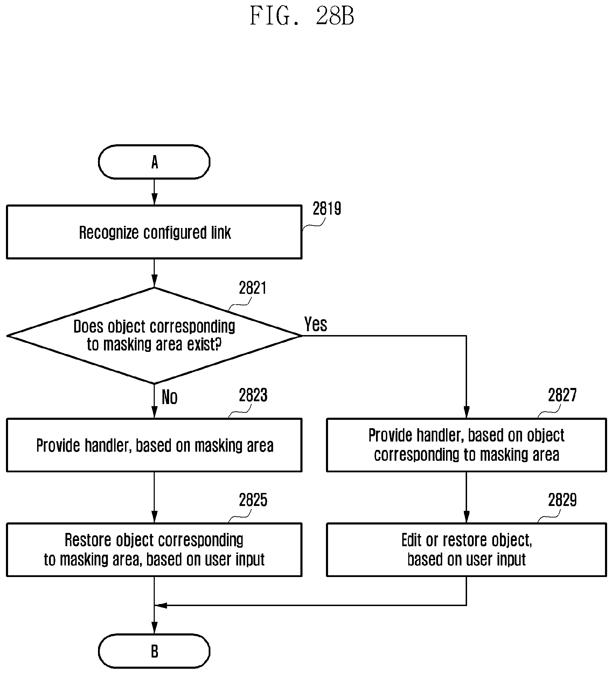

FIG. 28A and FIG. 28B are flowcharts illustrating an operation method of an electronic device according to an embodiment of the disclosure.

According to an embodiment, FIG. 28A and FIG. 28B may show an example of a method of supporting image editing and/or generation (e.g., regeneration or reprocessing) in the electronic device 101 according to an embodiment. According to an embodiment, FIG. 28A and FIG. 28B may show an example of a method of supporting a first edit (e.g., image editing based on an object) in the electronic device 101 according to an embodiment.

The method of supporting image editing and/or generation in the electronic device 101 according to an embodiment of the disclosure may be performed according to, for example, the flowcharts illustrated in FIG. 28A and FIG. 28B. The flowcharts illustrated in FIG. 28A and FIG. 28B is an example according to an embodiment of an operation of the electronic device 101, and at least some operations may be changed in sequence or performed in parallel, may be performed as independent operations, or may be supplemented by at least some other operations. According to an embodiment of the disclosure, operation 2801 to operation 2833 may be performed by at least one processor (e.g., the processor 120 and 230 in FIG. 1 to FIG. 3) of the electronic device 101.

According to an embodiment, an operation described with reference to FIG. 28A and FIG. 28B may be, for example, heuristically performed in combination with the operations described with reference to FIG. 4 to FIG. 27, may be heuristically performed in replacement of at least some operations among the described operations and in combination with at least other some operations, or may be heuristically performed as detailed operations of at least some operations among the described operations.

As illustrated in FIG. 28A and FIG. 28B, an operation method performed by the electronic device 101 according to an embodiment may include an operation 2801 of displaying an image, an operation 2803 of detecting a user input of selecting an object in the image, an operation 2805 of separating the object from the image, an operation 2807 of configuring a masking area, based on an area corresponding to the object, an operation 2809 of configuring a link between the object and the masking area, an operation 2811 of detecting a user input of selecting the object or the masking area, an operation 2813 of providing a handler, based on the object according to the user input of selecting the object, an operation 2815 of displaying a selection indication of the masking area corresponding to the object, an operation 2817 of editing the object, based on a user input, an operation 2819 of recognizing the configured link, based on the user input of selecting the masking area, an operation 2821 of determining whether the object corresponding to the masking area exists, an operation 2823 of providing a handler, based on the masking area according to the object not existing, an operation 2825 of restoring the object corresponding to the masking area, based on a user input, an operation 2827 of providing a handler, based on the object corresponding to the masking area, based on the object existing, an operation 2829 of editing or restoring the object, based on a user input, an operation 2831 of detecting an image generation request, and an operation 2833 of regenerating the image, based on an image generation process.

Referring to FIG. 28A and FIG. 28B, in operation 2801, the processor 120 of the electronic device 101 may display an image. According to an embodiment, the processor 120 may execute an application (e.g., a gallery application, an image capturing application, and/ or an image editing application) and display, on the display, an image (e.g., a first image or original image) selected by a user.

In operation 2803, the processor 120 may detect a user input of selecting an object in the image. According to an embodiment, the processor 120 may detect an input of executing image editing based on the image. According to an embodiment, while the image is being displayed, the processor 120 may detect a designated input of selecting the image. In an embodiment, the designated input may include various touch gestures of selecting an object on the image.

In operation 2805, the processor 120 may separate the object from the image. According to an embodiment, the processor 120 may separate a background image including another object not selected in the image, and one or more objects selected based on a designated input.

In operation 2807, the processor 120 may configure a masking area, based on an area corresponding to the object. According to an embodiment, the masking area may include an empty area generated by object editing. According to an embodiment, the processor 120 may configure and display, as a masking area, an area (e.g., an area where the object has been positioned before moved) where the object selected in the image has been originally positioned, based the separation of the selected object from the image. For example, the processor 120 may display masking (e.g., grid pattern) in the area where the selected object has originally existed. In an embodiment, the masking area may be an area representing removal (e.g., masking) using a designated graphic object (e.g., grid pattern) to indicate that the object has been removed (or eliminated) from the existing position (e.g., masking area) after separation of the object in the image.

In operation 2809, the processor 120 may configure a link between the object and the masking area. According to an embodiment, the processor 120 may configure a relation between the selected object and the masking area. In an embodiment, the relation between the selected object and the masking area may represent, for example, a link (or connection) between the object and the masking area, which allows the object and the masking area to interoperate with each other, based on a user input based on the selected object and the masking area. In an embodiment, the processor 120 may display a designated graphic object (e.g., a dotted line (e.g., trap selection) or edge highlighting), based on a peripheral edge (or boundary or boundary surface) of the masking area, to provide, to the user, a state where the masking area is configured.

In operation 2811, the processor 120 may detect a user input of selecting the object or the masking area.

Based on a user input of selecting the object in operation 2811, the processor 120 may provide a handler, based on the selected object in operation 2813. According to an embodiment, the processor 120 may provide a handler related to image editing in association with the object. According to an embodiment, the user may perform at least one edit (e.g., a first edit such as movement, position, size, angle, and/or removal) related to the object, based on the handler provided based on the object. In an embodiment, the handler may include a handler box and at least one tool (e.g., an editing tool or function tool). In an embodiment, the handler box may be provided as a quadrangular box surrounding at least one target object (e.g., the selected object). In an embodiment, the tool may include at least one functional object (or tool object) corresponding to each option (or tool) related to editing of at least one target object (e.g., the selected object). For example, the tool may include a first functional object (e.g., undo object) and a second functional object (e.g., eraser object or recycle bin can).

In operation 2815, the processor 120 may display a selection indication of the masking area corresponding to the object. According to an embodiment, the processor 120 may determine the masking area corresponding to the selected object, based on the input of selecting the object. According to an embodiment, the processor 120 may recognize the configured link, based on the input of selecting the object, and determine the masking area corresponding to the selected object, based on the configured link. According to an embodiment, the processor 120 may display a selection indication of the determined masking area. In an embodiment, the processor 120 may display a designated graphic object (e.g., a dotted edge line or edge highlighting), based on a peripheral edge (or boundary or boundary surface) of the masking area, to provide, to the user, a state where the masking area is selected.

In operation 2817, the processor 120 may edit the object, based on a user input. According to an embodiment, the processor 120 may, based on a user input, perform movement, removal, copy, pasting, rotation (or tilt adjustment) and/or size adjustment of the at least one object or perform object editing (e.g., image editing based on the object) in the image, such as addition of a new object. According to an embodiment, the processor 120 may edit (e.g., a first edit) the object having been separated from the image, independently to the background image, based on a user input. According to an embodiment, the processor 120 may fixedly display the background image, and change the separated object according to a user input.

Based on a user input of selecting the masking area in operation 2811, the processor 120 may recognize the configured link in operation 2819. According to an embodiment, the processor 120 may recognize the link configured between the object and the masking area, based on the input of selecting the masking area. According to an embodiment, the processor 120 may display a selection indication of the selected masking area, based on the input of selecting the masking area. In an embodiment, the processor 120 may display a designated graphic object (e.g., a dotted edge line or edge highlighting), based on a peripheral edge (or boundary or boundary surface) of the masking area, to provide, to the user, a state where the masking area is selected.

In operation 2821, the processor 120 may determine whether the object corresponding to the masking area exists. According to an embodiment, the processor 120 may determine the object corresponding to the selected masking area, based on the recognition of the configured link. According to an embodiment, the processor 120 may recognize the configured link, based on the input of selecting the masking area, and determine whether the object corresponding to the selected masking area exists on the image, based on the configured link.

Based on that the object corresponding to the masking area does not exist on the image, in operation 2821 (e.g., based on detecting of absence of the object on the image), the processor 120 may provide a handler, based on the masking area in operation 2823. In an embodiment, a case where the object corresponding to the masking area does not exist may include, for example, a case where the object corresponding to the masking area has been removed by the user's object editing. According to an embodiment, if the object corresponding to the masking area does not exist on the image, the processor 120 may provide a handler related to image editing in association with the masking area. In an embodiment, the handler may include a handler box and at least one tool (e.g., an editing tool or function tool). In an embodiment, the handler box may be provided as a quadrangular box surrounding a target masking area (e.g., the selected masking area). In an embodiment, the tool may include a functional object (e.g., undo object) related to restoring of the object corresponding to the masking area.

In operation 2825, the processor 120 may restore the object corresponding to the masking area, based on a user input. According to an embodiment, the user may perform at least one edit (e.g., restore) related to the object, based on the handler provided based on the masking area. According to an embodiment, the processor 120 may detect a user input through the functional object (e.g., undo object) of the handler, and restore and provide, in the masking area, the object (e.g., removed object) corresponding to the masking area, based on the user input based on the functional object.

Based on that the object corresponding to the masking area exists on the image, in operation 2821 (e.g., based on detecting of existence of the object on the image), the processor 120 may provide a handler, based on the object corresponding to the masking area in operation 2827. According to an embodiment, if the object corresponding to the masking area exists, the processor 120 may provide a handler related to image editing in association with the object corresponding to the masking area. In an embodiment, the handler may include a handler box and at least one tool (e.g., an editing tool or function tool). In an embodiment, the handler box may be provided as a quadrangular box surrounding a target object (e.g., the object corresponding to the selected masking area). In an embodiment, the tool may include a functional object (e.g., eraser object or recycle bin object) related to editing of a target object and a functional object (e.g., undo object) related to restoring of the object.

In operation 2829, the processor 120 may edit or restore the object, based on a user input. According to an embodiment, the user may perform at least one edit (e.g., a first edit such as movement, position, size, angle, and/or removal) related to the object, based on the handler provided based on the object, or cancel editing of the object and return to the masking area. According to an embodiment, the processor 120 may detect a user input, based on the handler and edit and provide the object, based on a function (e.g., editing or restoring) according to the user input or restore and provide, in the masking area, the object (e.g., the edited object) corresponding to the masking area.

In operation 2831, the processor 120 may detect an image generation request. According to an embodiment, the user may complete image editing, based on a designated command input. In an embodiment, the designated command input may include an input of completing image editing (or generating an image), based on a designated object (e.g., a software button (e.g., a generation object)), a designated voice, and/or a designated motion gesture (e.g., shaking of the electronic device 101) for image editing completion (or image generation (or regeneration)). According to an embodiment, the processor 120 may, while performing image editing, based on interaction with the user, according to detection of a designated command input, determine that generation of a new image based on the edited image (or regeneration of the image) is requested.

In operation 2833, the processor 120 may regenerate the image, based on an image generation process. According to an embodiment, the processor 120 may perform an image generation process related to generating of a new image (e.g., second image), based on the edited image (e.g., first image), based on detecting the image generation request. According to an embodiment, the image generation process may include an operation of generating (e.g., regeneration or reprocessing) a second image by using a first image, based on artificial intelligence (AI) (e.g., generative AI). In an embodiment, the image generation process may be performed on-device and/or based on a server.

According to an embodiment, the processor 120 may provide, for the image generation process and to the generative artificial intelligence, the edited image and/or a prompt (or generative AI prompt) (e.g., a question or indication input to the generative artificial intelligence) for image generation based on the edited image. According to an embodiment, the processor 120 may generate a second image, based on the image generation process. According to an embodiment, the processor 120 may provide the generated second image to the user. For example, the processor 120 may display the second image on the display.

According to an embodiment, the processor 120 may display the second image, and provide a comparison function of comparison through conversion between the first image and the second image, based on a user input. According to an embodiment, the processor 120 may display the second image, and provide a storage function of storing the second image in internal memory (e.g., the memory 130 of the electronic device 101) and/or external memory (e.g., cloud), based on a user input.

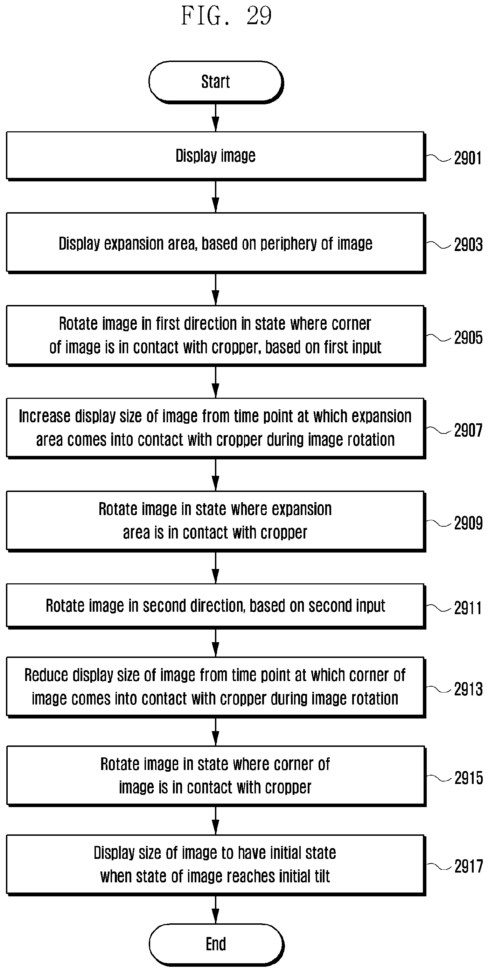

FIG. 29 is a flowchart illustrating an operation method of an electronic device according to an embodiment of the disclosure.

According to an embodiment, FIG. 29 may show an example of a method of supporting image editing and/or generation (e.g., regeneration or reprocessing) in the electronic device 101 according to an embodiment. According to an embodiment, FIG. 29 may show an example of a method of supporting a second edit (e.g., image editing based on an image) in the electronic device 101 according to an embodiment.

The method of supporting image editing and/or generation in the electronic device 101 according to an embodiment of the disclosure may be performed according to, for example, the flowchart illustrated in FIG. 29. The flowchart illustrated in FIG. 29 is an example according to an embodiment of an operation of the electronic device 101, and at least some operations may be changed in sequence or performed in parallel, may be performed as independent operations, or may be supplemented by at least some other operations. According to an embodiment of the disclosure, operation 2901 to operation 2917 may be performed by at least one processor (e.g., the processor 120 and 230 in FIG. 1 to FIG. 3) of the electronic device 101.

According to an embodiment, an operation described with reference to FIG. 29 may be, for example, heuristically performed in combination with the operations described with reference to FIG. 4 to FIG. 28B, may be heuristically performed in replacement of at least some operations among the described operations and in combination with at least other some operations, or may be heuristically performed as detailed operations of at least some operations among the described operations.

As illustrated in FIG. 29, an operation method performed by the electronic device 101 according to an embodiment may include an operation 2901 of displaying an image, an operation 2903 of displaying an expansion area, based on the periphery of the image, an operation 2905 of rotating the image in a first direction in a state where a corner of the image is in contact with a cropper, based on a first input, an operation of 2907 of increasing and displaying a display size of the image from a time point at which the expansion area comes into contact with the cropper during the image rotation, an operation 2909 of rotating the image in a state where the expansion area is in contact with the cropper, an operation 2911 of rotating the image in a second direction, based on a second input, an operation 2913 of reducing and displaying the display size of the image from a time point at which a corner of the image comes into contact with the cropper during the image rotation, an operation 2915 of rotating the image in a state where the corner of the image is in contact with the cropper, and an operation 2917 of displaying the size of the image to have an initial state when a state of the image reaches an initial tilt.

Referring to FIG. 29, in operation 2901, the processor 120 of the electronic device 101 may display an image. According to an embodiment, the processor 120 may execute an application (e.g., a gallery application, an image capturing application, and/ or an image editing application) and display, on the display, an image (e.g., a first image or original image) selected by a user.

In operation 2903, the processor 120 may display an expansion area, based on the periphery of the image. According to an embodiment, the processor 120 may detect an input of executing image editing based on the image. According to an embodiment, the processor may convert to an editing mode, based on image editing execution, and display an expansion area (e.g., masking area) to be expanded based on the periphery of the image in the editing mode.

In operation 2905, the processor 120 may rotate the image in a first direction in a state where a corner of the image is in contact with a cropper, based on a first input. According to an embodiment, the user may perform the first input to adjust the tilt (e.g., image rotation) of the image. For example, the user may perform a touch gesture input of rotating the image to the left or right, based on two-finger touches, an input of a touch gesture (e.g., a touch gesture of scrolling (or dragging) a dialer to the left or right) of manipulating an editing tool (e.g., an image rotation tool or dialer), or a direct input of a tilt angle (e.g., number). For example, the user may manipulate the image to be rotated to the right according to the first input.

According to an embodiment, the processor 120 may adjust the tilt (e.g., image rotation) in a state where a corner of the image is in contact with a cropper, based on the first input. According to an embodiment, the tilt of the image may be adjusted in a state where at least two corners of the image are inside the cropper and the remaining two corners are in contact with the cropper. According to an embodiment, the processor 120 may, when the image is rotated according to the adjusted tilt, the expansion area (e.g., masking area) connected to the image may also be rotated together.

In operation 2907, the processor 120 may increase a display size of the image from a time point at which the expanded area comes into contact with the cropper during the image rotation. According to an embodiment, while the tilt of the image is being adjusted in a state where the image is in contact with the cropper, when the rotation angle of the image becomes larger, the expansion area may come into contact with the cropper. According to an embodiment, the processor 120 may increase and display the display size of the image from a time point at which the expanded area comes into contact with the cropper. According to an embodiment, the processor 120 may rotate the expansion area of the image in a state where the expansion area is in contact with the cropper, and increase the size of the image and the expansion area so as to adjust the tilt of the image and the expansion area.

In operation 2909, the processor 120 may rotate the image in a state where the expansion area is in contact with the cropper. According to an embodiment, the expansion area of the image is rotated in a state where the expansion area is in contact with the cropper, and the size of the image and the expansion area may be adjusted while being increased. For example, from a time point at which the image and the expansion area simultaneously come into contact with the cropper, the tilt (e.g., image rotation) of the image may be adjusted while the image becomes larger (e.g., the image falls out of the cropper). According to an embodiment, the processor 120 may maintain the expansion area in contact with the cropper in an operation in which the image and the expansion area are adjusted while being increased.

In operation 2911, the processor 120 may rotate the image in a second direction, based on a second input. According to an embodiment, while rotating the image, based on the first input, the user may perform the second input of converting the first direction based on the first input to the second direction opposite thereto, and rotating the image. For example, the user may manipulate the image to be rotated to the left according to the second input.

In operation 2913, the processor 120 may reduce the display size of the image from a time point at which a corner of the image comes into contact with the cropper during the image rotation. According to an embodiment, while the tilt of the image is being adjusted in a state where the image is out of the cropper, when the rotation angle of the image becomes smaller, a corner of the image may come into contact with the cropper. According to an embodiment, the processor 120 may reduce and display the display size of the image from a time point at which a corner of the image comes into contact with the cropper. According to an embodiment, at least two corners of the image may move into the cropper and the remaining two corners may come into contact with the cropper.

In operation 2915, the processor 120 may rotate the image in a state where the corner of the image is in contact with the cropper. According to an embodiment, the processor 120 may rotate the expansion area of the image in a state where the expansion area is in contact with the cropper, and decrease the size of the image and the expansion area so as to adjust the tilt of the image and the expansion area.

In operation 2917, the processor 120 may display the size of the image to have an initial state when a state of the image reaches an initial tilt.

Hereinafter, an example of various operations supporting image editing in an electronic device (e.g., the electronic device 101 or 201 in FIG. 1 to FIG. 3) (hereinafter, the electronic device 101) of various embodiments is described.

According to an embodiment, a user may have needs of changing into a composition desired by the user at the time of photographing or with respect to an image stored in the electronic device 101 (e.g., a picture (or image) captured by the electronic device 101 or an image downloaded from the outside). According to an embodiment, the electronic device 101 may support the composition of an image (e.g., a photographed picture) to be freely changed, so as to satisfy the needs of the user who wants to change the composition of an incorrectly captured image or an image, the composition of which is desired to be changed by the user.

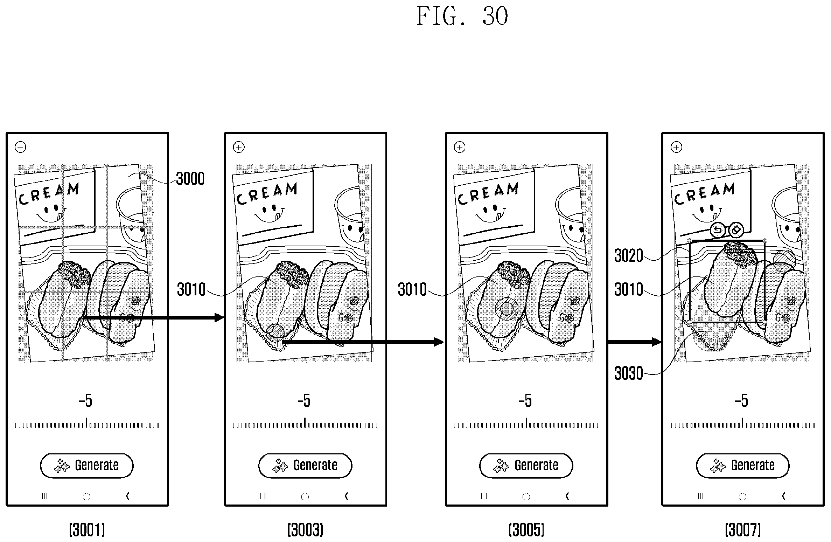

According to an embodiment, FIG. 30 to FIG. 60 may show an example of an operation of supporting image editing, based on artificial intelligence (AI) in the electronic device 101 according to an embodiment. According to an embodiment, artificial intelligence may include generative artificial intelligence (AI). Generative artificial intelligence may refer to artificial intelligence technology that newly creates similar content by using existing content, such as text, audio, and/or images. For instance, generative artificial intelligence may correspond to artificial intelligence technology capable of generating content (e.g., text, audio, images, and/or video) corresponding to a given input.

According to an embodiment, the electronic device 101 may generate (e.g., image reconfiguration) and provide an image and/or an object to correspond to a user's image editing, based on generative artificial intelligence (e.g., on-device AI). According to an embodiment, the electronic device 101 may request, from a server, generation (e.g., image reconfiguration) corresponding to image editing, and receive, from the server, and provide an image generated based on generative artificial intelligence of the server.

According to an embodiment, as illustrated in FIG. 30 to FIG. 60, an operation method performed by the electronic device 101 according to an embodiment may include editing an image, based on interaction with a user, generating (or reconfiguring) an image on a server or on device, based on the edited image, and providing the generated image. According to an embodiment, an operation of editing an image may include an operation relating to a first edit and an operation relating to a second edit.

According to an embodiment, an operation described with reference to FIG. 30 to FIG. 60 may be, for example, heuristically performed in combination with the operations described with reference to FIG. 4 to FIG. 29, may be heuristically performed in replacement of at least some operations among the described operations and in combination with at least other some operations, or may be heuristically performed as detailed operations of at least some operations among the described operations.

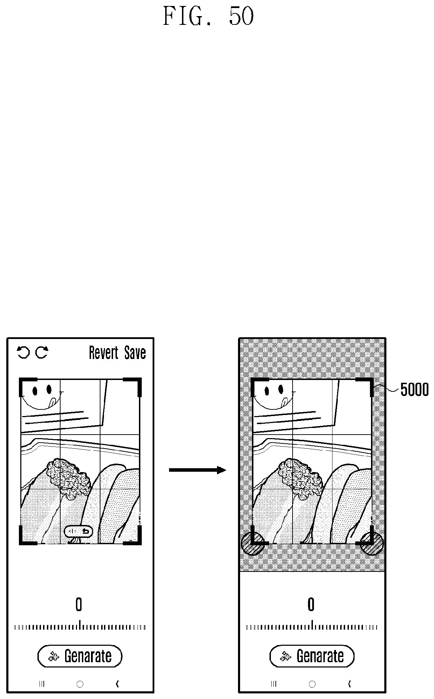

According to an embodiment, FIG. 30 to FIG. 49B may show an operation example of various image editing based on a first edit according to an embodiment. For example, FIG. 30 to FIG. 49B may show an operation example of generating (e.g., regenerating or reconfiguring) an image, based on object editing in an image. According to an embodiment, FIG. 50 to FIG. 60 may show an operation example of various image editing based on a second edit according to an embodiment. For example, FIG. 50 to FIG. 60 may show an operation example of generating (e.g., regenerating or reconfiguring) an image, based on background expansion of an image.

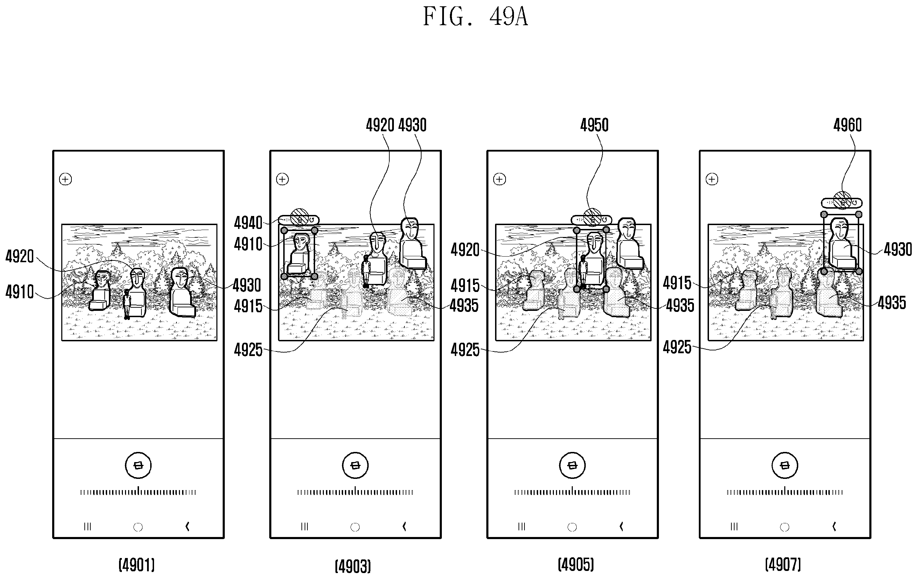

According to an embodiment, a first editing operation based on FIG. 30 to FIG. 49B and a second editing operation based on FIG. 50 to FIG. 60 may be performed individually, collectively, and/or continuously to any operation of them.

FIG. 30 is a diagram illustrating an operation example of supporting image editing in an electronic device according to an embodiment of the disclosure.

Referring to FIG. 30, as illustrated in example <3001>, the electronic device 101 may display, on the display, an image 3000 selected by the user. According to an embodiment, the image 3000 may be provided through a designated user interface related to image editing. According to an embodiment, the electronic device 101 may enter an editing mode (e.g., an artificial intelligence mode or artificial intelligence editing mode), based on image editing execution for the selected image 3000, and provide a user interface of the editing mode including the selected image 3000.

According to an embodiment, as illustrated in example <3003>, the electronic device 101 may select an object 3010 in the image 3000.

According to an embodiment, as illustrated in example <3005> and example <3007>, the electronic device 101 may crop (e.g., separate from the image 3000) and move the object 3010 selected in the image 3000, based on a designated input (e.g., tap & hold gesture). According to an embodiment, the electronic device 101 may, when the object 3010 in the image 3000 is selected, provide a guide phrase indicating that the object is movable through a designated input. According to an embodiment, the electronic device 101 may select the object 3010 in response to a first input (e.g., an input of selecting an area part of the object 3010 in the image 3000), and crop a part corresponding to the object 3010 and move the cropped part (e.g., the object 3010) in response to a second input (e.g., a tap & move gesture of selecting and moving the object 3010). According to an embodiment, the electronic device 101 may not provide a guide phrase when the object 3010 is selected and then immediately moved through a designated input.

According to an embodiment, the electronic device 101 may, in a state where the object 3010 is selected, when a designated input is received in a part connected to a previously selected object area, select and provide an object area continuously to the previous selection. An example therefor will be described.

According to an embodiment, the electronic device 101 may provide clipping (e.g., object manipulation state) of the object 3010 (or subject). For example, the electronic device 101 may crop (or separate) the object 3010 from the background image 3000, based on a user's designated input (e.g., tap & hold gesture) in the displayed image 3000. According to an embodiment, the electronic device 101 may fix the background image and may enable smooth movement of the selected object 3010. For example, the electronic device 101 may fix the background image in the object manipulation state. For example, the electronic device **101** may fix a background image except for the selected object 3010 from the image 3000, and support an object edit (e.g., movement, expansion, reduction, rotation, removal, or generation), based on the separated object 3010 (e.g., cropped part).

According to an embodiment, the electronic device **101** may provide a handler 3020 having a function of controlling (e.g., editing) the object 3010 around the separated object 3010, based on a designated input. For example, the electronic device **101** may crop a part corresponding to the object 3010 in the image 3000, and provide the handler 3020 through the periphery of the object 3010, based on movement of the cropped part from an original location in the image 3000. According to an embodiment, the user may perform an operation of editing (e.g., movement, expansion, reduction, rotation, removal, or generation) the object 3010, based on the handler 3020.

According to an embodiment, the electronic device **101** may, when an area (e.g., a background image area) other than the object 3010 is selected, remove (e.g., hidden) and not display the handler 3020 of the object 3010.

According to an embodiment, the electronic device **101** may separate the object 3010, and display masking (e.g., grid pattern) in an area 3030 (e.g., masking area) where the separated object 3010 has originally existed. According to an embodiment, in the object manipulation state, the background image may be fixedly provided, and the separated object 3010 is editable independently to the background image.

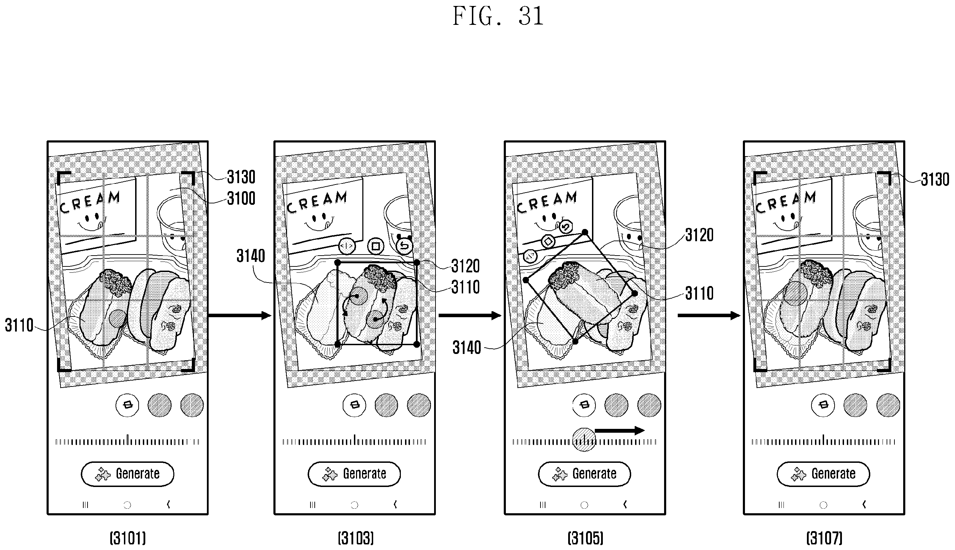

FIG. 31 is a diagram illustrating an operation example of supporting image editing in an electronic device according to an embodiment of the disclosure.

According to an embodiment, FIG. 30 may show a screen and an operation example when a cropper 3130 is not provided. According to an embodiment, FIG. 31 may show a screen and an operation example when the cropper 3130 is provided.

Referring to FIG. 31, as illustrated in example <3101>, the electronic device **101** may display, on the display, an image 3100 selected by the user. According to an embodiment, the image 3100 may be provided through a designated user interface related to image editing. According to an embodiment, the electronic device 101 may enter an editing mode (e.g., an artificial intelligence mode or artificial intelligence editing mode), based on image editing execution for the selected image 3100, and provide a user interface of the editing mode including the selected image 3100.

According to an embodiment, the electronic device 101 may provide the cropper 3130, based on the image 3100 to indicate a state where the editing mode has been entered, based on the entry into the editing mode. For example, the cropper 3130 may indicate a state where the image 3100 is controllable, and show a guide box in which the image 3100 is editable by using the cropper 3130. According to an embodiment, the cropper 3130 may be displayed or not displayed according to a configuration of the electronic device 101.

According to an embodiment, as illustrated in example <3103>, the electronic device 101 may select and move an object 3110 in the image 3100.

According to an embodiment, the electronic device 101 may crop (e.g., separate from the image 3100) and move the object 3110 selected in the image 3100, based on a designated input (e.g., tap & hold gesture). According to an embodiment, the electronic device 101 may select the object 3110 in response to a first input (e.g., an input of selecting an area part of the object 3110 in the image 3100), and crop a part corresponding to the object 3110 and move the cropped part (e.g., the object 3110) in response to a second input (e.g., a tap & hold gesture of selecting and moving the object 3110).

According to an embodiment, the electronic device 101 may crop (or separate) the object 3110 from the background image 3100, based on a user's designated input (e.g., tap & hold gesture) in the image 3100. According to an embodiment, the electronic device 101 may remove (e.g., hidden) and not display the cropper 3130 displayed on the image 3100, based on a designated input. For example, the electronic device 101 may remove the display of the cropper 3130 and fix the background image to enable smooth movement of the selected object 3110. For example, as illustrated in example <3105>, the electronic device 101 may fix a background image except for the selected object 3110 from the image 3100, and support an object edit (e.g., movement, expansion, reduction, rotation, removal, or generation), based on the separated object 3110 (e.g., cropped part).

According to an embodiment, the electronic device 101 may provide a handler 3120 having a function of controlling (e.g., editing) the object 3110 around the separated object 3010, based on a designated input. For example, the electronic device 101 may crop a part corresponding to the object 3110 in the image 3100, and provide the handler 3120 through the periphery of the object 3110, based on movement of the cropped part from an original location in the image 3100. According to an embodiment, the user may perform an operation of editing (e.g., movement, expansion, reduction, rotation, removal, or generation) the object 3110, based on the handler 3120.

According to an embodiment, the electronic device 101 may, when an area (e.g., a background image area) other than the object 3110 is selected, remove (e.g., hidden) and not display the handler 3120 of the object 3110, and select the background image and display the cropper 3130, as illustrated in example <3107>.

According to an embodiment, the electronic device 101 may separate the object 3110, and display masking (e.g., grid pattern) in an area 3140 (e.g., masking area) where the separated object 3110 has originally existed. According to an embodiment, in the object manipulation state, the background image may be fixedly provided, and the separated object 3110 is editable independently to the background image.

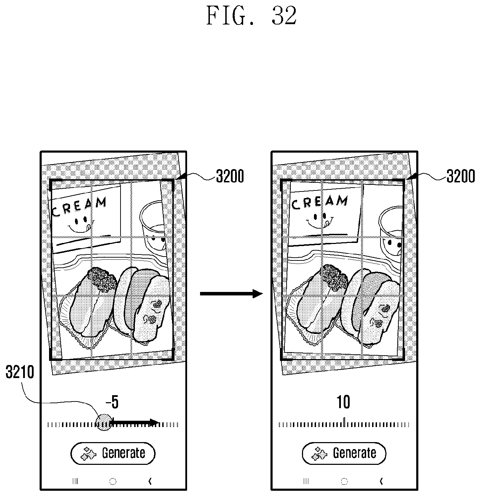

FIG. 32 is a diagram illustrating an operation example of supporting image editing in an electronic device according to an embodiment of the disclosure.

As illustrated in FIG. 32, FIG. 32 may represent an example of using an editing tool (or toolbar) (e.g., a cropper 3200 and/or the dialer 3210) to adjust the tilt, straightening, vertical alignment, and/or horizontal alignment of an image and/or a selected object in the image.

According to an embodiment, the electronic device 101 may, when an image (e.g., background image) is selected (e.g., image focusing), provide the cropper 3200, based on the image. According to an embodiment, when the image is selected (e.g., focused), the electronic device 101 may provide, to a bottom menu, the dialer 3210 capable of adjusting the tilt, straightening, vertical alignment, and/or horizontal alignment thereof. For example, the user may edit the image and/or a selected object in the image by using the cropper 3200 and/or the dialer 3210.

According to an embodiment, the electronic device 101 may, when the appearance of the image is reconfigured, provide the cropper 3200 for controlling an image to the image and support image editing by using the cropper 3200. According to an embodiment, the electronic device 101 may, when the appearance of the image is reconfigured, provide the dialer 3210 for controlling the image as a bottom menu and support image editing by using the dialer 3210.

According to an embodiment, when an area (e.g., background image area) other than a separated object is selected, the electronic device 101 may select a background image (e.g., background focusing) and support background image editing, based on the cropper 3200 and/or the dialer 3210 of the bottom menu. According to an embodiment, when the cropper 3200 is displayed on the image (e.g., background image), the user may edit the image, based on the cropper 3200 and/or the dialer 3210 of the bottom menu.

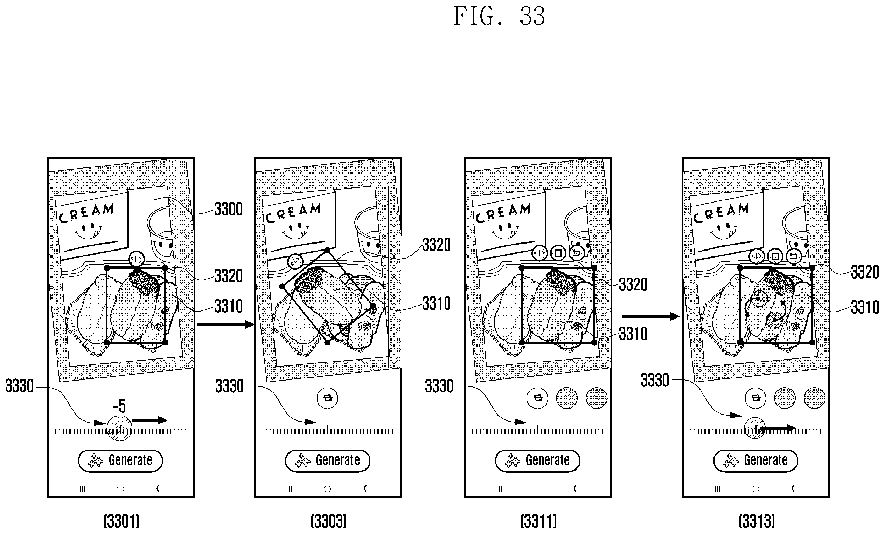

FIG. 33 is a diagram illustrating an operation example of supporting image editing in an electronic device according to an embodiment of the disclosure.

According to an embodiment, FIG. 33 may show an example of adjusting the tilt, straightening, vertical alignment, and/or horizontal alignment of an object 3310 separated from an image 3300 by using an editing tool (or toolbar), as illustrated in example <3301>, example <3303>, example <3311>, and/or example <3313>.

According to an embodiment, the electronic device 101 may, when the object 3310 is selected (e.g., image focusing) in the image 3300, provide a handler 3320, based on the object 3310. According to an embodiment, when the object 3310 is selected, the electronic device 101 may provide, to a bottom menu, a dialer 3330 capable of adjusting the tilt, straightening, vertical alignment, and/or horizontal alignment thereof. For example, the user may edit the object 3310 by using the handler 3320 and the dialer 3330.

According to an embodiment, the electronic device 101 may, when the appearance of the object 3310 is reconfigured, provide the handler 3320 for controlling the separated object 3310 around the focused object 3310 (e.g., separated object), and support object editing by using the handler 3320. According to an embodiment, the electronic device 101 may, when the appearance of the object is reconfigured, provide the dialer 3330 for controlling the separated object 3310 as a bottom menu and support object editing by using the dialer 3330. According to an embodiment, when the handler 3320 is displayed at the separated object 3310, the user may edit (e.g., adjustment of tilt, straightening, vertical alignment, and/or vertical alignment) the object 3310, based on the handler 3320 and/or the dialer 3330 of the bottom menu.

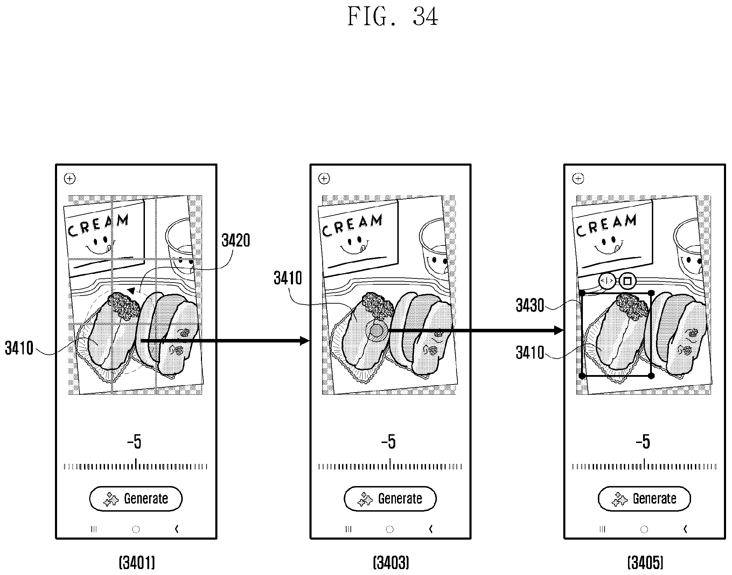

FIG. 34 is a diagram illustrating an operation example of supporting image editing in an electronic device according to an embodiment of the disclosure.

According to an embodiment, FIG. 34 may show an example of a user input of selecting an object 3410 (e.g., an object to be edited) in an image, as illustrated in example <3401>, example <3403>, and example <3405>. For example, the user may select (or designate) at least one target object (e.g., the object 3410) for image editing in an image, as illustrated in example <3401>, example <3403>, and example <3405>. According to an embodiment, the electronic device 101 may select, as a target object for image editing, at least one object corresponding to a user input in an image.

According to an embodiment, various user inputs of selecting a target object, related to image editing, are not limited to an input using a user's finger, and may include an input using various input devices (e.g., a stylus pen, an electronic pen, and a mouse). According to an embodiment, a user input may include an input based on at least one of various inputs based on a touch gesture.

For example, a user input is an input for designating selection of the object 3410 in the image, and may include a first gesture (e.g., a single tap, double taps, triple taps, or long press) of tapping the object 3410 on the image, a second gesture of selecting the object 3410 on the image by using a quadrangle or circle, a third gesture (e.g., drawing a closed curve, drawing a circle, or drawing a trap) enabling more free and flexible selection of the object 3410 through an input (e.g., an input of drawing a circle to include the object 3410 therein) of drawing a relatively circular shape rather than a designated shape, and/or a fourth gesture (e.g., tap & move or long tap & move) of selecting and moving the object 3410 in the image.

In an embodiment, FIG. 34 may show an example of selection of the object 3410, based on the third gesture.

According to an embodiment, the user may perform a user input 3420 (e.g., an input of drawing a relatively circular shape to include the periphery of the object 3410 therein) of drawing a line along the periphery of the object 3410 on the image. According to an embodiment, the electronic device 101 may select, as a target object for image editing, the at least one object 3410 within a range (e.g., a circle) drawn according to the user input 3420 on the image. According to an embodiment, the electronic device 101 may provide a handler 3430 in association with the object 3410, based on the selection of the object 3410. In an embodiment, the handler 3430 may include a handler box and/or at least one functional object.

In an embodiment, the electronic device 101 may display an object area with respect to (or around) the selected object 3410. In an embodiment, the object area may display a dotted line (e.g., trap selection), based on a peripheral edge (or boundary or boundary surface) of the object 3410 to provide a selected state of the object 3410 to the user.

According to an embodiment, the user may perform various edits, such as movement, removal, copy, paste, rotation (or angle adjustment or tilt adjustment), object addition, horizontal alignment adjustment, vertical alignment adjustment, and/or size adjustment based on the selected object 3410, according to the selected object 3410. According to an embodiment, the selected object 3410 may be separated from (or cropped out of) the image (e.g., background area), based on a user input so as to be edited individually (or independently) to the image. For example, the object 3410 in the image may be cropped by the user input 3420 so as to be movable and/or editable. In an embodiment, the electronic device 101 may crop a part corresponding to the object 3410 to crop (or separate) the part from the image. For example, the electronic device 101 may crop the object 3410 from a background image including another object, which is not selected, based on the user input 3420 in the image, and edit the cropped part individually to the background area, based on a designated input.

According to an embodiment, the electronic device 101 may, after selecting the object 3410, release the drawn area, based on a designated input (e.g., a tap input in the background area) related to selection release. For example, in a state where the object 3410 is selected by drawing or a tap, when a designated input related to selection release is detected, the electronic device 101 may release the selection of the selected object 3410.

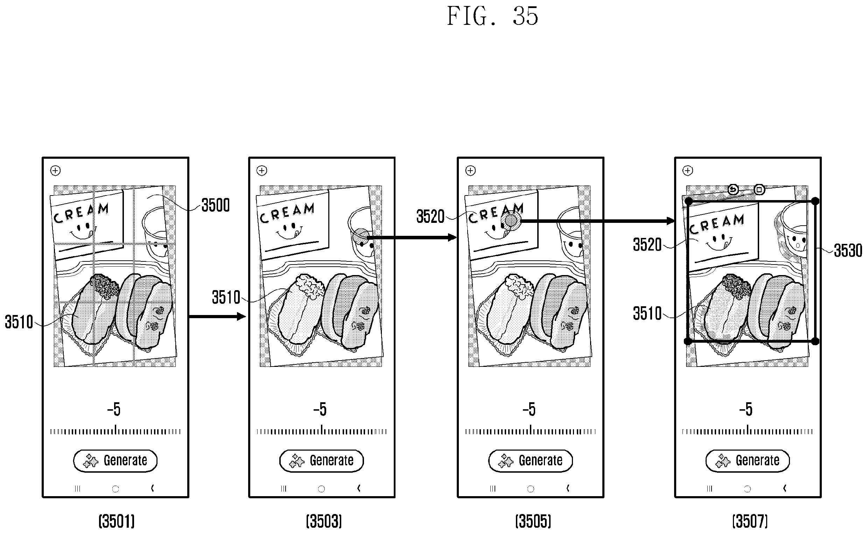

FIG. 35 is a diagram illustrating an operation example of supporting image editing in an electronic device according to an embodiment of the disclosure.

According to an embodiment, FIG. 35 may show an operation example of supporting selection of multiple objects (e.g., a first object 3510 and a second object 3520) on an image 3500, based on a user input.

According to an embodiment, FIG. 35 may represent an example of an operation of selecting multiple objects (e.g., the first object 3510 and the second object 3520) into one bundle object (or group object) in the image 3500, as illustrated in example <3501>, example <3503>, example <3505>, and example <3507>. According to an embodiment, the user may select each object (e.g., the first object 3510 and the second object 3520) on the image 3500 to designate the objects as a bundle object. For example, the electronic device 101 may support multi-selection for multiple objects on the image.

According to an embodiment, the electronic device 101 may, after the multiple objects 3510 and 3520 are selected, based on a designated input (e.g., touch & hold or long press) based on the lastly selected object (e.g., the second object 3520), configure the selected multiple objects 3510 and 3520 as a group to configure the objects as a bundle object (or group object). According to an embodiment, the electronic device 101 may expand and provide a handler 3530 to include the multiple objects 3510 and 3520. According to an embodiment, the electronic device 101 may adjust (e.g., expand) an area of a handler box of the handler 3530 to include the multiple objects 3510 and 3520.

For example, the electronic device 101 may, after multi-selection of the objects, bundle the multiple objects 3510 and 3520 into one group and provide one selection object (e.g., bundle object), based on a designated input. For example, the electronic device 101 may, after the multiple objects 3510 and 3520 are selected, in response to a designated input based on one object (e.g., the lastly selected object 3520), bundle the selected multiple objects 3510 and 3520 into one group and support an operation of image editing (e.g., movement, removal, copy, paste, rotation, horizontal alignment adjustment, vertical alignment adjustment, and/or size adjustment based on a bundle object) based on a bundle object.

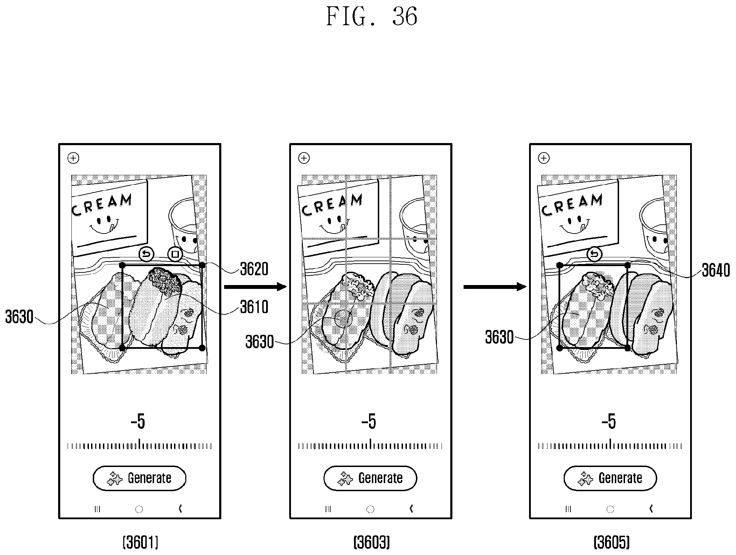

FIG. 36 is a diagram illustrating an operation example of supporting image editing in an electronic device according to an embodiment of the disclosure.

According to an embodiment, FIG. 36 may show an operation example of supporting restoration of an object separated from an image.

As illustrated in example <3601>, example <3603>, and example <3605>, the electronic device 101 may provide a functional object (e.g., undo object) supporting restoration of an object 3610, based on a first handler 3620 provided through the object 3610. According to an embodiment, when the object 3610 is removed, the electronic device 101 may provide a functional object supporting restoration of the object 3610, based on a second handler 3640 provided through a masking area 3630 corresponding to the object 3610.

According to an embodiment, the user may, while adjusting the object 3610 separated from the image, restore the separated object (e.g., an object being edited) to its original state by using a designated functional object (e.g., undo object) of the first handler 3620 of the object 3610. For example, the electronic device 101 may, while editing the object 3610, in response to a user input based on a designated functional object of the first handler 3620, restore the object 3601 to its original state and provide the restored object. According to an embodiment, the electronic device 101 may remove a configuration (e.g., link) relating to the masking area 3630 of the object 3610 and the masking area 3630 on the image, based on the restoration of the object 3610.

According to an embodiment, the user may remove the separated object 3610 from the image by using a functional object (e.g., eraser object or recycle bin object) of the first handler 3620 of the separated object 3610. According to an embodiment, the electronic device 101 may, in response to a request to remove the object 3610, remove the object 3610 from the image and maintain the masking area 3630 corresponding to (linked to) the removed object 3610. According to an embodiment, the electronic device 101 may remove the object 3610 from the image, based on a user input, and may provide the second handler 3640, based on the masking area 3630 corresponding to the removed object 3610.

According to an embodiment, the user may restore the removed object 3610 to its original state by using a designated functional object (e.g., undo object) of the second handler 3640 of the masking area 3630 corresponding to the object 3610 removed from the image. For example, the electronic device 101 may, after removing the object 3610, based on selection of the masking area 3630 corresponding to the removed object 3610, provide the second handler 3640 to the selected masking area 3630. According to an embodiment, the electronic device 101 may, in response to a user input based on a designated functional object of the second handler 3640 of the masking area 3630, restore the removed object 3601 to its original state and provide the restored object. According to an embodiment, the electronic device 101 may remove a configuration (e.g., link) relating to the masking area 3630 of the object 3610 and the masking area 3630 on the image, based on the restoration of the object 3610.

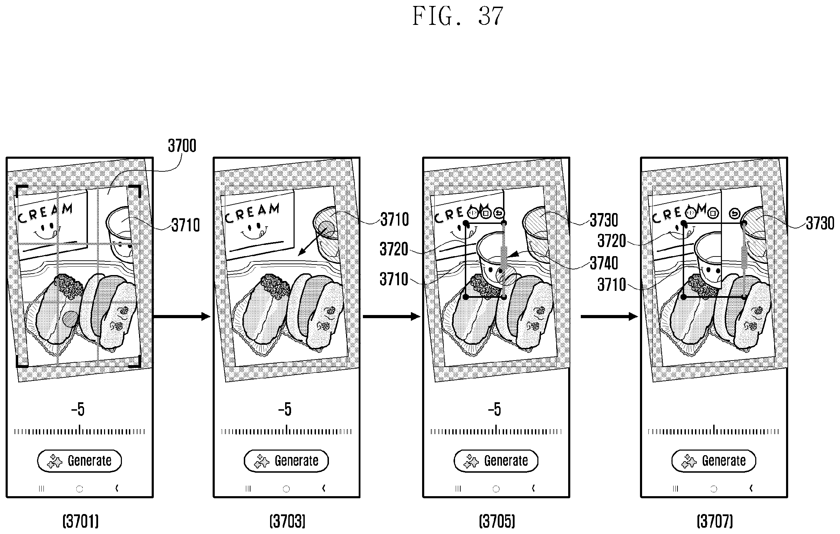

FIG. 37 is a diagram illustrating an operation example of supporting image editing in an electronic device according to an embodiment of the disclosure.

According to an embodiment, FIG. 37 may show an operation example of, when a separated object is a cut object in contact with an edge or a cut object hidden by another object, expanding or reducing a selection area of the cut object.

As illustrated in example <3701>, example <3703>, example <3705>, and example <3707>, in a case of an object 3710 separated from an edge of an image 3700, a part of the object 3710 may have been cut out. In an embodiment, an object selectable at or separable from an edge may be an object, one side (or surface) of which is in contact with the edge. For example, selection and separation of an object, two sides of which are in contact with an edge may not be supported. For example, an object, two sides of which are in contact with an edge of the image 3700 may be blocked.

According to an embodiment, the electronic device 101 may, when the cut object 3710 is selected and moved, provide a handler 3720 (e.g., a handler box and a functional object), based on the periphery of the object 3710. According to an embodiment, the electronic device 101 may, when the object 3710 is selected and moved, display masking (e.g., grid pattern) in an area 3730 (e.g., masking area) where the object 3710 has originally existed.

According to an embodiment, when the object 3710 in contact with an edge of the image 3700 is selected and moved, provide an expansion object 3740 supporting expansion of a handler box at a boundary surface (e.g., a right surface of the handler box) of the handler box at the side (e.g., a right side of the object 3710) of the area of the object 3710 having been in contact with the edge. According to an embodiment, the user may expand the handler box of the handler 3720 by using the expansion object 3740 of the handler box (e.g., expand the handler box, based on dragging the expansion object 3740 to the right).

According to an embodiment, the electronic device 101 may support expanding or reducing a selection area, based on a handler box even in a case of an object that is not in contact with an edge and is cut by being hidden by another object.

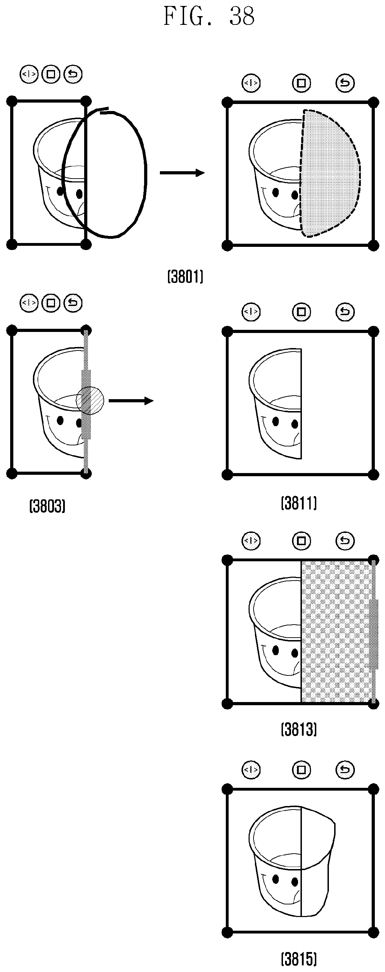

FIG. 38 is a diagram illustrating an operation example of supporting image editing in an electronic device according to an embodiment of the disclosure.

According to an embodiment, FIG. 38 may show an operation example of supporting expansion of a selection area of a cut object.

FIG. 38 may show, as illustrated therein, an example of various inputs of configuring an area required to be expanded from an object (or an area for outpainting) (e.g., a cut area).

As illustrated in example <3801>, the user may, based on an input of drawing a cut area (e.g., an area for outpainting) (e.g., an input of drawing the cut area by using a relatively circular shape), expand the area. According to an embodiment, the electronic device 101 may expand and provide a handler box with respect to the cut area, based on a user input.

As illustrated in example <3803> and example <3811>, the user may, based on an input of moving an expansion object provided based on a cut area (e.g., an area for outpainting) at the handler box, expand the area. According to an embodiment, the electronic device 101 may expand and provide the handler box with respect to the cut area, based on a user input.

According to an embodiment, when the area is expanded based on a user input, the electronic device 101 may provide visual information on an object (e.g., an area to be filled through outpainting of the cut object) to be generated based on the cut area in various ways. According to an embodiment, the electronic device 101 may, as illustrated in example <3811>, based on the area being expanded, provide an expansion area (e.g., cut area) as an empty state without change.

According to an embodiment, the electronic device 101 may, as illustrated in example <3813>, provide the expansion area (e.g., cut area) through masking (e.g., a semi-transparent grid pattern). According to an embodiment, the electronic device 101 may, as illustrated in example <3815>, provide a virtual object generated in real time in the expansion area (e.g., cut area) by drawing the virtual object. In an embodiment, an operation of actually filling the cut area may be performed on device or by generative artificial intelligence of a server.

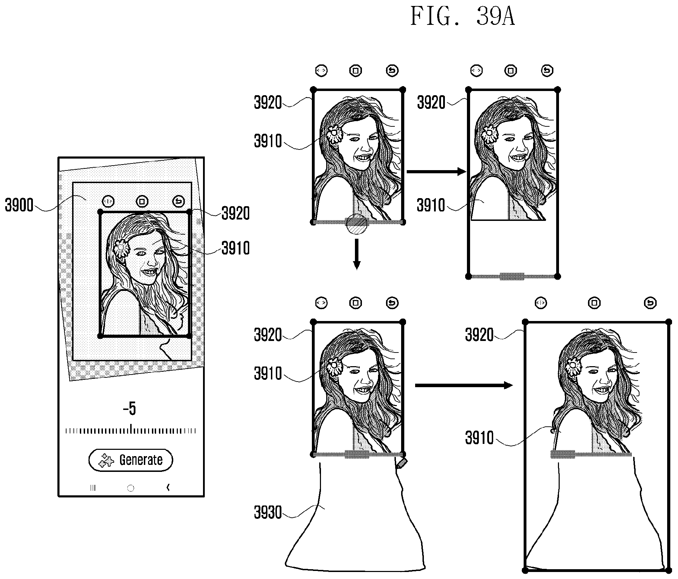

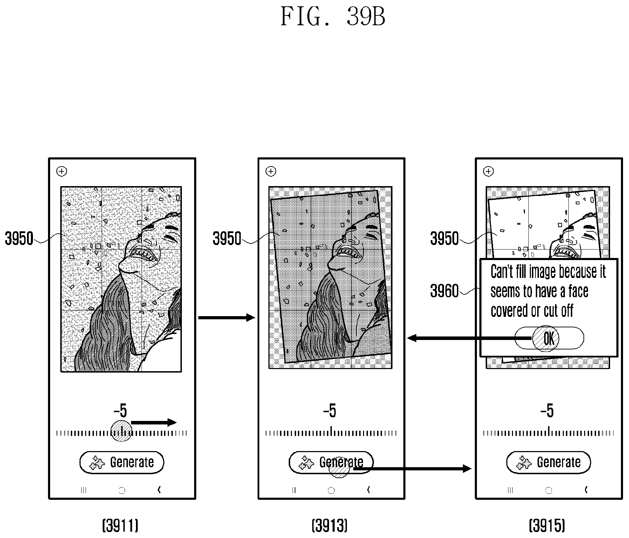

FIG. 39A and FIG. 39B are diagrams illustrating an operation example of supporting image editing in an electronic device according to an embodiment of the disclosure.

According to an embodiment, FIG. 39A and FIG. 39B may show an operation example of supporting expansion of a selection area when an image includes a person, for example, when an object is a person.

According to an embodiment, FIG. 39A may show an example of supporting expansion of a selection area when an object 3910 selected in an image 3900 is a person (e.g., individual) and there is no cut part in a facial area of the object 3910. According to an embodiment, FIG. 39B may show an operation example of a case where an image 3950 includes a person object and there is a cut part in a facial area of the object.

As illustrated in FIG. 39A, the electronic device 101 may, when the separated cut object 3910 is a person, recognize a face in the object 3910 and support expansion in a designated direction (e.g., a downward direction), based on the face. In an embodiment, an expansion area may be obtained by expanding a selection area in a method (e.g., adjustment based on a handler 3920) corresponding to the description referring to FIG. 37 and FIG. 38.

According to an embodiment, when the cut object 3910 is moved and then the area is expanded, the electronic device 101 may, if the cut object 3910 is a person, recognize the face and operate to enable area expansion in a downward direction. For example, an area filled through outpainting of the cut object 3910 may be an area 3930 positioned under the object 3910. For example, the electronic device 101 may block the area expansion to the left or right when the cut object 3910 is a person.

As illustrated in FIG. 39B, when the image 3950 is an image having a cut facial part, an unintended facial result may be generated in generative artificial intelligence. According to an embodiment, at the time of an image generation process operation, the electronic device 101 may analyze the image 3950, and when a cut facial part is identified in the image 3950, based on a result of the analysis, may not transfer the image 3950 to generative artificial intelligence and block same. For example, the electronic device 101 may not perform an image generation process and provide an error message 3960 to the user.

For example, the user may, as illustrated in example <3911> and example <3913>, edit (e.g., rotate) the image 3950 and request the electronic device 101 to execute an image generation process. According to an embodiment, the electronic device 101 may, in response to the image generation process request, analyze the image 3950, and when a cut facial part is identified in the image 3950, may not process the image generation process and, as illustrated in example <3915>, display the error message 3960 through a pop-up manner.

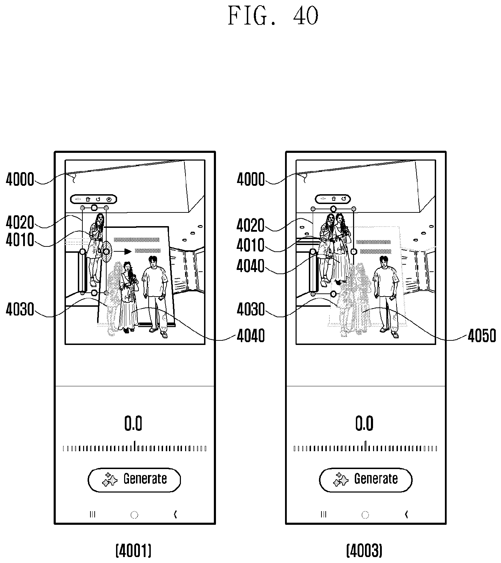

FIG. 40 is a diagram illustrating an operation example of supporting image editing in an electronic device according to an embodiment of the disclosure.

According to an embodiment, FIG. 40 may show an operation example of expanding a selection area of an object in an image 4000 and selecting multiple objects as a bundle object (or group object).

As illustrated in FIG. 40, the electronic device 101 may, when an object (e.g., a first object 4010) selected in the image 4000 is separated and moved, provide a handler 4020 (e.g., a handler box and a functional object), based on the periphery of the first object 4010. According to an embodiment, a handler box of the handler 4020 may provide an expansion object (e.g., an indicator (e.g., an arrow button) indicating top/bottom/left/right expansion directions) capable of expanding a selection area of an object. According to an embodiment, the user may expand (e.g., select the expansion object and expand the handler box, based on a drag) an object selection area by moving the handler box in at least one direction among top/bottom/left/right directions by using the expansion object of the handler box.

According to an embodiment, as illustrated in example <4001>, the user may expand the handler box to include a second object 4040 to be additionally included in a selection area including the first object 4010, by using the expansion object of the handler box. In an embodiment, the first object 4010 may represent an object separated from the image 4000 and then moved. In an embodiment, the handler 4020 may be provided around the first object 4010. In an embodiment, the image 4000 may include a first masking area 4030 corresponding to the first object 4010, and a link between the first object 4010 and the first masking area 4030 may be configured.

According to an embodiment, the electronic device 101 may recognize the expansion of the handler box, based on the expansion object of the handler box. According to an embodiment, the electronic device 101 may recognize the second object 4040 in an expansion direction (e.g., right direction) of the handler box by referring to the first masking area 4030 of the first object 4010 in the image 4000. For example, the electronic device 101 may recognize the second object 4040, which is in an expansion direction of the handler box and is adjacent to the first object 4010 (e.g., substantially, the first masking area 4030 in the drawing), based on an area (e.g., the first masking area 4030) where the first object 4010 has been originally positioned in the image 4000.

According to an embodiment, as illustrated in example <4003>, when the second object 4040 is recognized, the electronic device 101 may separate (e.g., crop a part corresponding to the second object 4040) the second object 4040 from the image 4000, and move the second object 4040 to the selection area to include same in the selection area. For example, the electronic device 101 may configure the first object 4010 and the second object 4040 as one bundle object (or group object). According to an embodiment, the electronic device 101 may configure and display a second masking area 4050 corresponding to the second object 4040 at an original position of the second object 4040 in the image 4000.

According to an embodiment, when the first object 4010 and the second object 4040 operate as a bundle object, the first masking area 4030 and the second masking area 4050 may also be expanded to be displayed as a masking area (e.g., a bundle masking area) corresponding to the bundle object, and a link between the bundle object and the bundle masking area may be configured.

According to an embodiment, the electronic device 101 may, when another object around the separated first object 4010 is recognized, generate and provide an expansion object capable of expanding the handler box. According to an embodiment, the electronic device 101 may, when a selection area is expanded based on the expansion object, recognize the second object 4040, based on a range to which the selection area is expanded.

According to an embodiment, if the second object 4040 is recognized within the expanded range, the electronic device 101 may include the second object 4040 in the selection area of the first object 4010, expand the handler box of the handler 4020 by an area including the second object 4040, and provide the expanded handler box. According to an embodiment, if the second object 4040 is not recognized within the expanded range or another masking area (e.g., a masking area of another object having been already separated) is recognized around the first object 4010 (around the first masking area 4030), the electronic device 101 may not support expansion of the handler box.

According to an embodiment, when another object around the separated first object 4010 is not recognized, or another masking area (e.g., a masking area of another object having been already separated) is recognized around the first object 4010 (around the first masking area 4030), the electronic device 101 may not provide an expansion object.

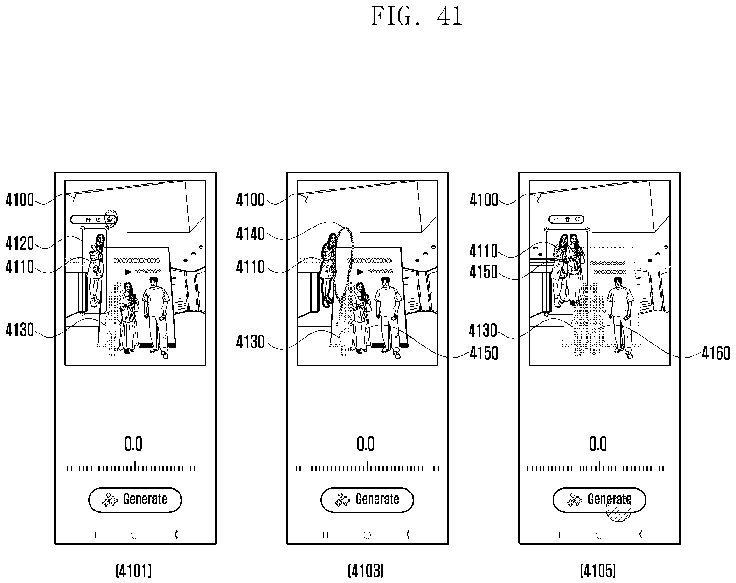

FIG. 41 is a diagram illustrating an operation example of supporting image editing in an electronic device according to an embodiment of the disclosure.

According to an embodiment, FIG. 41 may show an operation example of expanding a selection area of an object in an image 4100 and selecting multiple objects as a bundle object (or group object).

As illustrated in FIG. 41, the electronic device 101 may, when an object (e.g., a first object 4110) selected in the image 4100 is separated and moved, provide a handler 4120 (e.g., a handler box and a functional object), based on the periphery of the first object 4110. According to an embodiment, the functional object may include a drawing object. According to an embodiment, the user may convert into a drawing mode by using the drawing object, and expand an object selection area through drawing in the drawing mode. According to an embodiment, the drawing object may operate to be provided when another object adjacent to an object (e.g., the first object 4110) in a selection area is recognized.

According to an embodiment, as illustrated in example <4101>, the user may select the drawing object, based on the handler 4120. According to an embodiment, the electronic device 101 may convert into a drawing mode, based on the selection of the drawing object.

According to an embodiment, as illustrated in example <4103>, the electronic device 101 may hide the handler 4120 not to be displayed, based on the conversion into the drawing mode. According to an embodiment, the user may perform a drawing 4140 to include an area corresponding to a second object 4150 to be additionally included in the selection area including the first object 4110 in the drawing mode. In an embodiment, the first object 4110 may represent an object separated from the image 4100 and then moved. In an embodiment, the handler 4120 may be provided around the first object 4110. In an embodiment, the image 4100 may include a first masking area 4130 corresponding to the first object 4110, and a link between the first object 4110 and the first masking area 4130 may be configured.

According to an embodiment, the electronic device 101 may recognize the second object 4150, based on a position (e.g., the right side of the first object 4110, based on a user's line of sight) corresponding to an area drawn according to the drawing 4140, by referring to the first masking area 4130 of the first object 4110 in the image 4100. For example, the electronic device 101 may recognize the second object 4150, which is located at a position corresponding to a drawing area and is adjacent to the first object 4110 (e.g., substantially, the first masking area 4130 in the drawing), based on an area (e.g., the first masking area 4130) where the first object 4110 has been originally positioned in the image 4100.

According to an embodiment, as illustrated in example <4105>, when the second object 4150 is recognized, the electronic device 101 may separate (e.g., crop a part corresponding to the second object 4150) the second object 4150 from the image 4100, and move the second object 4150 to the selection area to include same in the selection area. For example, the electronic device 101 may configure the first object 4110 and the second object 4150 as one bundle object (or group object). According to an embodiment, the electronic device 101 may configure and display a second masking area 4160 corresponding to the second object 4150 at an original position of the second object 4150.

According to an embodiment, when the first object 4110 and the second object 4150 operate as a bundle object, the first masking area 4130 and the second masking area 4160 may also be expanded to be displayed as a masking area (e.g., a bundle masking area) corresponding to the bundle object, and a link between the bundle object and the bundle masking area may be configured.

According to an embodiment, when the second object 4150 is not recognized at a position (e.g., the right area of the first masking area 4130 in the drawing) corresponding to an area drawn according to the drawing 4140, or another masking area (e.g., a masking area of another object having been already separated) is recognized around the first object 4110 (around the first masking area 4130), the electronic device 101 may not expand the handler box.

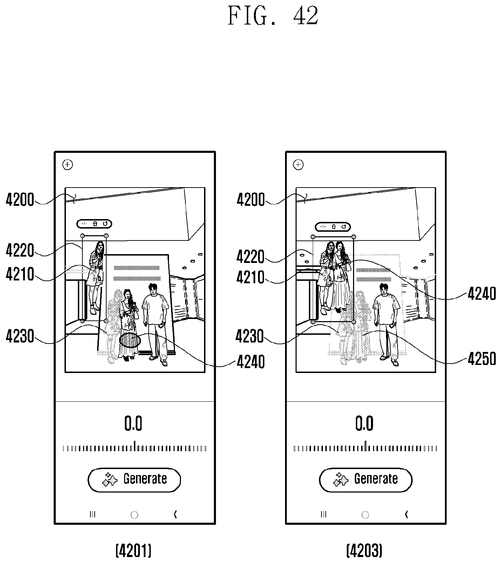

FIG. 42 is a diagram illustrating an operation example of supporting image editing in an electronic device according to an embodiment of the disclosure.

According to an embodiment, FIG. 42 may show an operation example of expanding a selection area of an object in an image 4200 and selecting multiple objects as a bundle object (or group object).

As illustrated in FIG. 42, the electronic device 101 may, when a first object 4210 is separated from the image 4200 and moved, provide a handler 4220 (e.g., a handler box and a functional object), based on the periphery of the first object 4210. In an embodiment, the image 4200 may include a first masking area 4230 corresponding to the first object 4210, and a link between the first object 4210 and the first masking area 4230 may be configured.

According to an embodiment, as illustrated in example <4201>, the user may individually separate the first object 4210 from the image 4200 through a designated input (e.g., a first input such as a long press) based on the first object 4210. According to an embodiment, the electronic device 101 may receive a first input, and separate (e.g., crop a part corresponding to the first object 4210) the first object 4210 from the image 4200, based on the first input. According to an embodiment, the electronic device 101 may provide the handler 4220, based on the first object 4210 (e.g., the cropped part), mask an area where the first object 4210 has been originally positioned in the image 4200, and provide the masked area as a masking area (e.g., the first masking area 4230).

According to an embodiment, the user may select a second object 4240 through a designated input (e.g., a second input such as a tap) based on the second object 4240 to be bundled with the first object 4210 in the image 4200. According to an embodiment, the electronic device 101 may receive a second input, and separate (e.g., crop a part corresponding to the second object 4240) the second object 4240 from the image 4200, based on the second input.

According to an embodiment, as illustrated in example <4203>, the electronic device 101 may move the second object 4240 (e.g., the cropped part) to a selection area to include same in the selection area. According to an embodiment, the electronic device 101 may configure the first object 4210 and the second object 4240 included in the selection area as one bundle object (or group object). According to an embodiment, the electronic device 101 may configure and display a second masking area 4250 corresponding to the second object 4240 at an original position of the second object 4240 in the image 4200.

According to an embodiment, when the first object 4210 and the second object 4240 operate as a bundle object, the first masking area 4230 and the second masking area 4250 may also be expanded to be displayed as a masking area (e.g., a bundle masking area) corresponding to the bundle object, and a link between the bundle object and the bundle masking area may be configured.

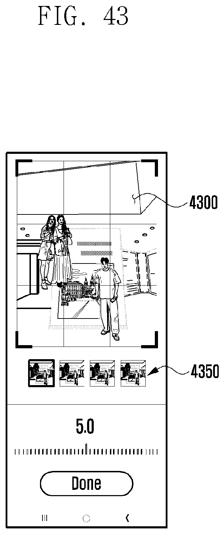

FIG. 43 is a diagram illustrating an operation example of supporting image editing in an electronic device according to an embodiment of the disclosure.

According to an embodiment, FIG. 43 may show an example of a result image 4300 generated according to an image generation process (e.g., inpainting and/or outpainting) performed by generative artificial intelligence after image editing based on a selection area expansion operation illustrated in FIG. 40 to FIG. 42.

According to an embodiment, the user may perform image editing based on selection area expansion, based on performing of an operation illustrated in FIG. 40 to FIG. 42, and request image generation based on the edited image. In an embodiment, an image generation request may be performed by a designated command input. For example, the user may request image generation (or completing of image editing), based at least on a designated object (e.g., generation object), a designated voice command, and/or a designated motion gesture (e.g., shaking of the electronic device 101) for image generation (or regeneration or reconfiguration). According to an embodiment, the electronic device 101 may, while performing image editing, based on interaction with the user, according to detection of a designated command input, determine to enter an operation of generating a new image based on the edited image.

According to an embodiment, the electronic device 101 may, in response to receiving a designated command input, perform a process (e.g., image generation process) related to generating a new image, based on the edited image. According to an embodiment, the electronic device 101 may perform an image generation process through an operation corresponding to the description referring to FIG. 17 and FIG. 18 by interacting with the user. According to an embodiment, the image generation process may include an operation of generating (e.g., regenerating or reprocessing) an image, based on the edited image by using artificial intelligence (AI) (e.g., generative AI). In an embodiment, the image generation process may be provided on-device and/or based on a server.

According to an embodiment, the electronic device 101 may obtain the result image 4300, based on the image generation process, and display the result image 4300 on the display. According to an embodiment, the electronic device 101 may obtain a new image (e.g., the result image 4300) in relation to an instruction (or prompt) related to image generation. For example, the electronic device 101 may obtain (e.g., generate) a new image (e.g., the result image 4300) according to an image generation process (e.g., inpainting and/or outpainting based on the edited image) executed in relation to an instruction (or prompt) on on-device artificial intelligence. For example, the electronic device 101 may obtain (or receive), from a server, an image (e.g., the result image 4300) generated by the server according to an image generation process (e.g., inpainting and/or outpainting based on the edited image) executed in relation to an instruction (or prompt) on server artificial intelligence.

According to an embodiment, the electronic device 101 may display the result image 4300 on the display. According to an embodiment, the result image 4300 may be, for example, an image in which an object and an empty area (e.g., masking area) generated by object editing have been reconfigured. For example, the result image may be provided by generation (e.g., inpainting) of a masking area and inclusion (e.g., combination) of a separated bundle object (e.g., the first object and the second object) in a background image.

According to an embodiment, as the result image 4300, N (e.g., at least four) or more result images (e.g., multiple result images) may be provided. For example, the electronic device 101 may obtain multiple result images 4350 (e.g., a first result image, a second result image, a third result image, and a fourth result image), based on generative artificial intelligence, and provide respective previews (e.g., thumbnails) corresponding to the multiple result images 4350 as a bottom menu for the result image 4300. According to an embodiment, the user may select a desired image among the multiple result images 4350.

According to an embodiment, the electronic device 101 may receive an input of selecting one image from among the multiple result images 4350. According to an embodiment, the electronic device 101 may display, on the display as the result image 4300, an image selected based on the input. According to an embodiment, the electronic device 101 may display the result image 4300, and complete image generation, based on a designated input (e.g., an input received through a "Done" button) related to image generation completion.

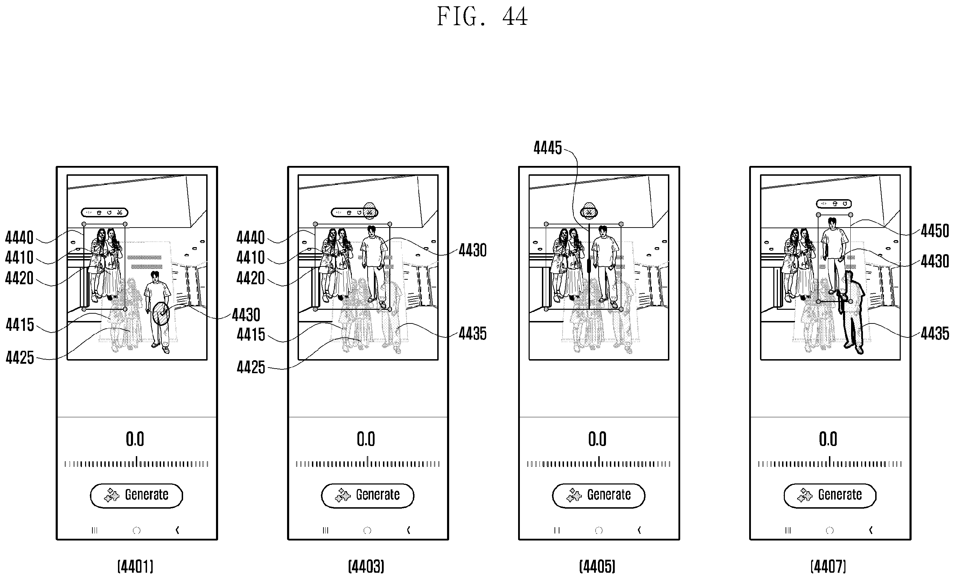

FIG. 44 is a diagram illustrating an operation example of supporting image editing in an electronic device according to an embodiment of the disclosure.

According to an embodiment, FIG. 44 may show an operation example of separating an independent object from a bundle object in an image, and dividing a selection area of the bundle object, based on object separation.

According to an embodiment, as illustrated in example <4401>, the electronic device 101 and the user may perform an operation of configuring a first object 4410 and a second object 4420 as one bundle object through an operation corresponding to the description referring to FIG. 40 to FIG. 42. According to an embodiment, the electronic device 101 may configure and display a first masking area 4415 corresponding to the first object 4410 at an original position of the first object 4410 in the image, and configure and display a second masking area 4425 corresponding to the second object 4420 at an original position of the second object 4420. According to an embodiment, the electronic device 101 may provide the first masking area 4415 and the second masking area 4425 as a bundle masking area corresponding to the bundle object of the first object 4410 and the second object 4420.

According to an embodiment, the electronic device 101 may provide a handler 4440 (e.g., a handler box and a functional object), based on the periphery of the bundle object. According to an embodiment, the functional object may include a cropping object (or cutting object). According to an embodiment, the user may convert into an object separation mode (or cutting mode) by using the cropping object, and separate an object in an object selection area in the object separation mode. According to an embodiment, the cropping object may operate to be provided when a bundle object of multiple objects is recognized.

According to an embodiment, as illustrated in example <4403>, the user may include a third object 4430 in a selection area of the bundle object including the first object 4410 and the second object 4420 through an operation based on FIG. 40 to FIG. 42. According to an embodiment, the electronic device 101 may configure the first object 4410, the second object 4420, and the third object 4430 as one bundle object. According to an embodiment, the electronic device 101 may configure and display a third masking area 4435 corresponding to the third object 4430 at an original position of the third object 4430.

In an embodiment, the bundle object of the first object 4410, the second object 4420, and the third object 4430 may represent an object separated from the image and then moved. In an embodiment, the handler 4440 may be provided around the bundle object. In an embodiment, the functional object of the handler 4440 may include a cropping object.

In an embodiment, the image may include a bundle masking area (e.g., the first masking area 4415 corresponding to the first object 4410, the second masking area 4425 corresponding to the second object 4420, and the third masking area 4435 corresponding to the third object 4430) corresponding to the bundle object (e.g., the first object 4410, the second object 4420, and the third object 4430), and a link between the bundle object and the bundle masking area may be configured. For example, when the first object 4410, the second object 4420, and the third object 4430 operate as a bundle object, the first masking area 4415, the second masking area 4425, and the third masking area 4435 may also be expanded to be displayed as a bundle masking area corresponding to the bundle object, and a link between the bundle object and the bundle masking area may be configured.

According to an embodiment, as illustrated in example <4405>, the user may separate the third object 4430 from the bundle object included in the selection area to separate the third object 4430 from the bundle object of the first object 4410 and the second object 4420. According to an embodiment, when the user is to modify a selection area in which two or more objects are combined, the user may use the cropping object of the handler 4440 to separate an object at a user's desired position.

According to an embodiment, the user may select a first cropping object, based on the handler 4440 of the bundle object. According to an embodiment, the electronic device 101 may convert into an object separation mode (or cropping mode), based on the selection of the first cropping object. According to an embodiment, the electronic device 101 may provide a divider 4445, based on the handler 4440 (e.g., the handler box), based on the conversion into the object separation mode.

According to an embodiment, the user may select at least one object (or area) (e.g., the third object 4430) to be separated from the bundle object by using the divider 4445 in the object separation mode. For example, the user may use the divider 4445 (e.g., move the divider 4445 to the left or right) to manipulate the third object 4430 to be included in a selection area to be separated from the bundle object. According to an embodiment, the user may select the third object 4430 (e.g., include same in the selection area) to be separated from the bundle object through the divider 4445, and select a second cropping object. In an embodiment, the second cropping object and the divider 4445 may operate in conjunction with each other. For example, in the object separation mode, the second cropping object may move to correspond to left or right movement of the divider 4445.

According to an embodiment, as illustrated in example <4407>, when the second cropping object is selected, the electronic device 101 may separate the third object 4430 in the configured selection area from the bundle object. According to an embodiment, the electronic device 101 may separate the third masking area 4435 corresponding to the third object 4430 from the bundle masking area, based on the separation of the third object 4430 from the bundle object. According to an embodiment, the electronic device 101 may display a handler 4450 around the third object 4430 separated from the bundle object, and configure and display (e.g., a dotted line or highlighting) the third masking area 4435 corresponding to the third object 4430.

In an embodiment, the handler 4450 generated based on the third object 4430 may not include a cropping object because the third object 4430 is a single object. For example, if a selected object is a single object, the handler 4450 of the single object may not include a cropping object. For example, a cropping object may be provided when the object is a bundle object of multiple bundle objects.

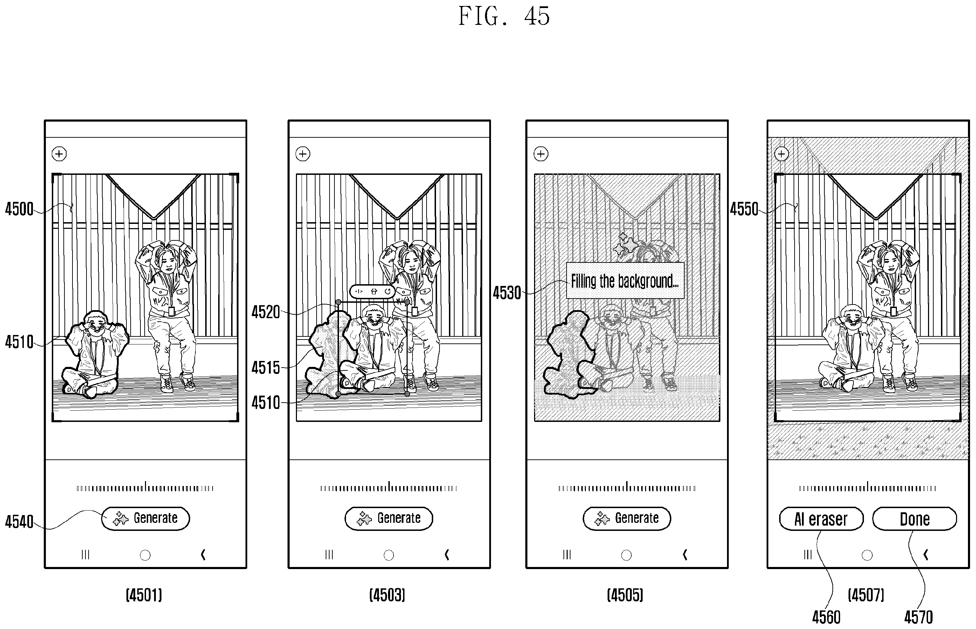

FIG. 45 is a diagram illustrating an operation example of supporting image editing in an electronic device according to an embodiment of the disclosure.

According to an embodiment, FIG. 45 may show an operation example of, based on a result image 4550 according to an image generation process (e.g., inpainting and/or outpainting), supporting modification of the result image 4550 through an artificial intelligence eraser (AI eraser) function.

According to an embodiment, as illustrated in example <4501>, the user may select (or designate) at least one target object (e.g., an object 4510) for image editing in an image 4500. According to an embodiment, the electronic device 101 may select, as a target object for image editing, the at least one object 4510 corresponding to a user input in the image 4500.

According to an embodiment, as illustrated in example <4503>, the electronic device 101 may crop (e.g., separate from the image 4500) and move the object 4510 selected in the image 4500, based on a designated input (e.g., tap & hold gesture). According to an embodiment, the electronic device 101 may select the object 4510 in response to a first input (e.g., an input of selecting an area part of the object 4510 in the image 4500), and crop a part corresponding to the object 4510 and move the cropped part (e.g., the object 4510) in response to a second input (e.g., a tap & move gesture of selecting and moving the object 4510).

According to an embodiment, as illustrated in example <4503>, the electronic device 101 may, when the object 4510 is selected and moved, provide a handler 4520 (e.g., a handler box and a functional object), based on the periphery of the object 4510. According to an embodiment, the electronic device 101 may, when the object 4510 is selected and moved, display masking (e.g., grid pattern) in an area (e.g., masking area 4515) where the object 4510 has originally existed.

According to an embodiment, as illustrated in example <4505>, the electronic device 101 may perform image editing by interacting with the user, and perform an image generation process, based on the edited image.

According to an embodiment, the user may edit (e.g., adjustment of tilt, straightening, vertical alignment, and/or horizontal alignment) the object 4510, based on the handler 4520, and request image generation, based on a designated object 4540 (e.g., generation object) for image generation.

According to an embodiment, the electronic device 101 may, in response to receiving an input through the designated object 4540, perform a process (e.g., image generation process) related to generating a new image, based on the edited image 4500. According to an embodiment, the electronic device 101 may provide a relevant interface to the user while performing the image generation process. For example, the relevant interface may include a guide object 4530 notifying that the image generation process is proceeding. For example, the relevant interface may dim a background including an image and provide the guide object 4530 on the dimmed background.

According to an embodiment, the image generation process may include an operation of generating (e.g., regenerating or reprocessing) an image, based on the edited image by using artificial intelligence (AI) (e.g., generative AI). In an embodiment, the image generation process may be provided on-device and/or based on a server.

According to an embodiment, as illustrated in example <4507>, the electronic device 101 may obtain the result image 4550, based on the image generation process, and display the result image 4550 on the display. According to an embodiment, the electronic device 101 may obtain a new image (e.g., the result image 4550) in relation to an instruction (or prompt) related to image generation. For example, the electronic device 101 may obtain (e.g., generate) a new image (e.g., the result image 4550) according to an image generation process (e.g., inpainting and/or outpainting based on the edited image) executed in relation to an instruction (or prompt) on on-device artificial intelligence. For example, the electronic device 101 may obtain (or receive), from the server, an image (e.g., the result image 4550) generated by the server according to an image generation process (e.g., inpainting and/or outpainting based on the edited image) executed in relation to an instruction (or prompt) on server artificial intelligence.

According to an embodiment, the electronic device 101 may display the result image 4550 on the display. According to an embodiment, the result image 4550 may be, for example, an image in which an empty area (e.g., the masking area 4515) generated by object editing is filled and the object and/or the background image are reconfigured. For example, the result image may be provided by generation (e.g., inpainting) of the masking area 4515 and combination of the object 4510 with the background image. According to an embodiment, an object (or area) not desired (or unintended) by the user may be added to the result image 4550.

According to an embodiment, the electronic device 101 may analyze the result image 4550 generated according to the image generation process, and determine whether the result image needs to be corrected. For example, if a new object (or area) (e.g., an object (or area) not desired (or unintended) by the user) is added to (or detected in) the object separated from the background image and then reconfigured, the electronic device 101 may determine that correction is needed.

According to an embodiment, the electronic device 101 may provide an artificial intelligence eraser function, based on determining to correct the result image 4550. For example, the electronic device 101 may provide an artificial intelligence eraser object 4560 (or indicator or button) capable of activating the artificial intelligence eraser function as a bottom menu for the result image 4550. According to an embodiment, the user may execute the artificial intelligence eraser function, based on the selection of the artificial intelligence eraser object 4560.

In an embodiment, the artificial intelligence eraser function may indicate a function capable of selecting and erasing an unnecessary object from an image, such as object erasing, shadow erasing, and/or light reflection erasing. For example, the user may execute the artificial intelligence eraser function to select an object to be corrected in an image. According to an embodiment, the electronic device 101 may, based on object selection of the user, analyze the selected object by using artificial intelligence and erase same from the image.

According to an embodiment, the electronic device 101 may, after displaying the result image 4550 or correcting the result image 4550, complete image generation, based on receiving an input through a designated object 4570 related to image generation completion.

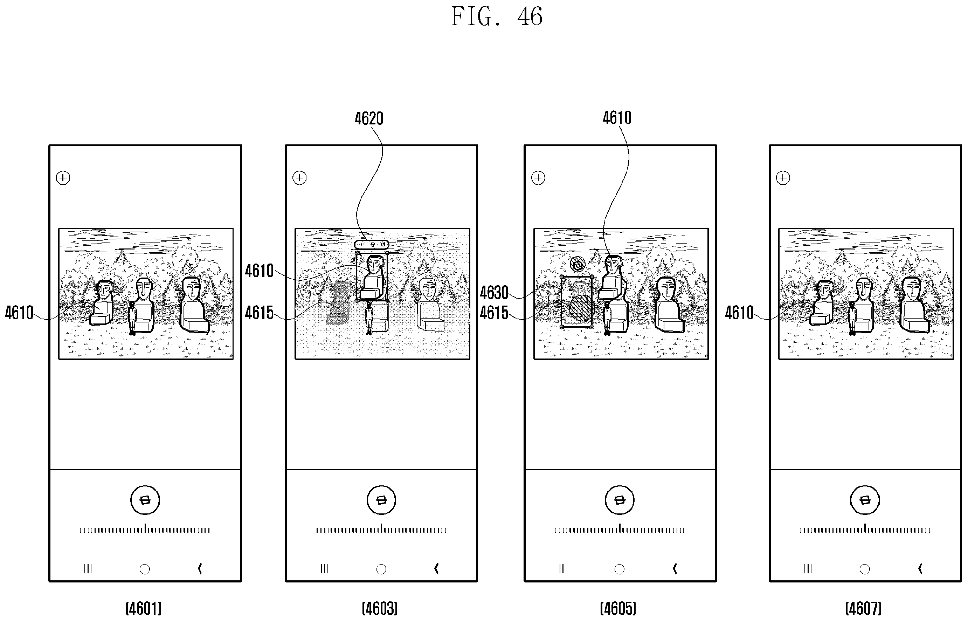

FIG. 46 is a diagram illustrating an operation example of supporting image editing in an electronic device according to an embodiment of the disclosure.

According to an embodiment, FIG. 46 may show an operation example of separating an object from an image and restoring the object, based on a masking area corresponding to the object. According to an embodiment, FIG. 46 may represent an example of a case where there is one object 4610 separated from the image and one masking area 4615 corresponding to the one object 4610 is configured.

According to an embodiment, as illustrated in example <4601> and example <4603>, the user may select the first object 4610 in the image, separate same from the image, and move the first object 4610 to another area on the image. According to an embodiment, the electronic device 101 may separate (e.g., crop a part corresponding to the first object 4610) the first object 4610 from the image, based on a user input, and move and display the first object 4610 (e.g., the cropped part) to and at a position corresponding to the user input.

According to an embodiment, the electronic device 101 may provide a first handler 4620 around the first object 4610. According to an embodiment, the electronic device 101 may configure and display (e.g., a grid pattern, a dotted line, or highlighting) the first masking area 4615 corresponding to the first object 4610, based on an original position (e.g., an area where the first object 4610 has been originally positioned on the image) of the first object 4610 in the image. According to an embodiment, the electronic device 101 may configure a link between the first object 4610 and the first masking area 4615. In an embodiment, the first masking area 4615 may support a function of controlling the first object 4610, and visually represent information on the area where the first object 4610 has been originally positioned.

According to an embodiment, as illustrated in example <4605>, the user may select the first masking area 4615 corresponding to the first object 4610. According to an embodiment, the electronic device 101 may provide a second handler 4630 around the first masking area 4615, based on an input of selecting the first masking area 4615. According to an embodiment, the electronic device 101 may hide and not display the first handler 4620 provided around the first object 4610.

In an embodiment, the second handler 4630 of the first masking area 4615 may include an undo (or revert) object. In an embodiment, the undo object may include an object supporting a function of restoring to the previous state (e.g., returning to the original state). For example, the undo object may include an object supporting a function (e.g., a cancel function) of canceling a previously executed editing command, and returning to a state (e.g., a state before execution) before the editing command is given.

According to an embodiment, as illustrated in example <4605> and example <4607>, the user may, after editing (e.g., moving) the first object 4610, be to restore the edited (e.g., moved) first object 4610 again (e.g., restore to the original position) in the image. For example, the user may use the second handler 4630 (e.g., undo object) of the first masking area 4615 to restore the moved first object 4610 to its initial state (e.g., a state before image editing (e.g., movement)). For example, the user may select the undo object of the second handler 4630. According to an embodiment, the electronic device 101 may, in response to an input of selecting the undo object of the second handler 4630, restore the first object 4610 to the first masking area 4615 corresponding to the area where the first object 4610 has been originally positioned in the image, and restore same to a state before image editing.

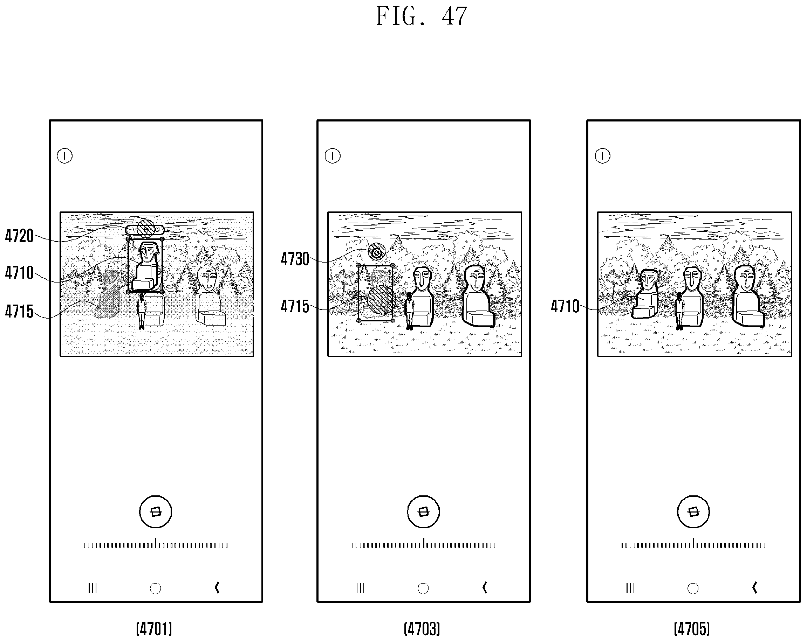

FIG. 47 is a diagram illustrating an operation example of supporting image editing in an electronic device according to an embodiment of the disclosure.

According to an embodiment, FIG. 47 may show an operation example of removing an object separated from an image and restoring the object, based on a masking area corresponding to the removed object. According to an embodiment, FIG. 47 may represent an example of a case where there is one object 4710 separated from the image and one masking area 4715 corresponding to the one object 4710 is configured.

According to an embodiment, as illustrated in example <4701> and example <4703>, the user may select the first object 4710 in the image, separate same from the image, and remove the first object 4710 from the image. According to an embodiment, the user may remove the first object 4710 from the image by using an eraser object (or recycle bin object) of a first handler 4720 generated around the first object 4710. According to an embodiment, the electronic device 101 may separate (e.g., crop a part corresponding to the first object 4710) the first object 4710 from the image, based on an input of removing the first object 4710, and remove (or hide) and not display the first object 4710 (e.g., the cropped part), based on the user input.

According to an embodiment, the electronic device 101 may, at the time of separation of the first object 4710, configure and display (e.g., a grid pattern, a dotted line, or highlighting) the first masking area 4715 corresponding to the first object 4710, based on an original position (e.g., an area where the first object 4710 has been originally positioned on the image) of the first object 4710 in the image. According to an embodiment, the electronic device 101 may configure a link between the first object 4710 and the first masking area 4715. In an embodiment, the first masking area 4715 may support a function of controlling the first object 4710, and visually represent information on the area where the first object 4710 has been originally positioned.

According to an embodiment, as illustrated in example <4703>, the user may select the first masking area 4715 corresponding to the first object 4710. According to an embodiment, the electronic device 101 may provide a second handler 4730 around the first masking area 4715, based on an input of selecting the first masking area 4715.

In an embodiment, the second handler 4730 of the first masking area 4715 may include an undo (or revert) object. In an embodiment, the undo object may include an object supporting a function of restoring to the previous state (e.g., returning to the original state). For example, the undo object may include an object supporting a function (e.g., a cancel function) of canceling a previously executed editing command, and returning to a state (e.g., a state before execution) before the editing command is given.

According to an embodiment, as illustrated in example <4703> and example <4705>, the user may, after editing (e.g., removing) the first object 4710, be to restore the edited (e.g., removed) first object 4710 again (e.g., restore to the original state) in the image. For example, the user may use the second handler 4730 (e.g., undo object) of the first masking area 4715 to restore the removed first object 4710 to its initial state (e.g., a state before image editing (e.g., movement and removal)). For example, the user may select the undo object of the second handler 4730. According to an embodiment, the electronic device 101 may, in response to an input of selecting the undo object of the second handler 4730, restore the first object 4710 to the first masking area 4715 corresponding to the area where the first object 4710 has been originally positioned in the image, and restore same to a state before image editing.

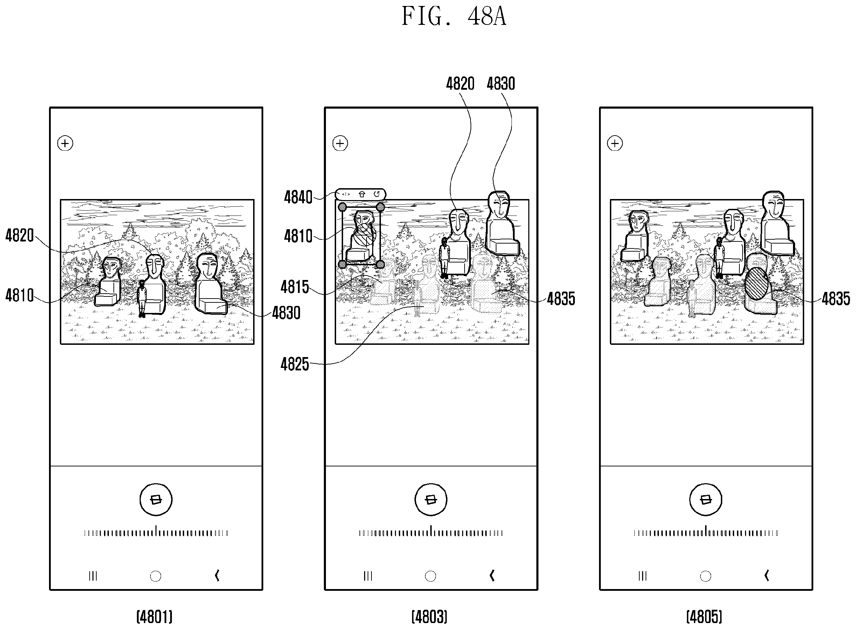

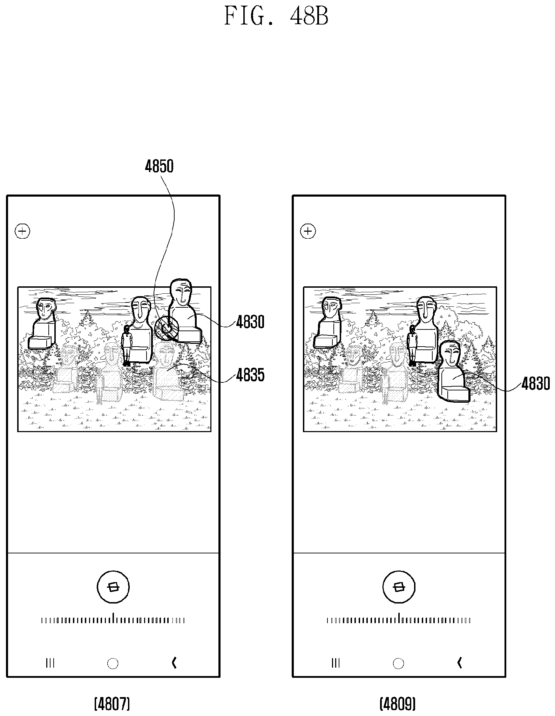

FIG. 48A and FIG. 48B are diagrams illustrating an operation example of supporting image editing in an electronic device according to an embodiment of the disclosure.

According to an embodiment, FIG. 48A and FIG. 48B may show an operation example of separating multiple objects (e.g., a first object 4810, a second object 4820, and a third object 4830) from an image, and restoring a target object (e.g., at least one object), based on respective masking areas (e.g., a first masking area 4815, a second masking area 4825, and a third masking area 4835) corresponding to the multiple objects 4810, 4820, and 4830. According to an embodiment, FIG. 48A and FIG. 48B may represent an example of a case where there are three object 4810, 4820, and 4830 separated from the image and respective masking areas 4815, 4825, and 4835 corresponding to the three object 4810, 4820, and 4830 are configured. In an embodiment, FIG. 48A and FIG. 48B may represent an example in which the first object 4810, the second object 4820, and the third object 4830 are not a bundle object and are single objects.

According to an embodiment, as illustrated in example <4801> and example <4803>, the user may select each of the first object 4810, the second object 4820, and the third object 4830 in the image, separate same from the image, and move the first object 4810, the second object 4820, and the third object 4830 to different areas on the image. According to an embodiment, the electronic device 101 may separate (e.g., crop respective parts corresponding to the first object 4810, the second object 4820, and the third object 4830) the first object 4810, the second object 4820, and the third object 4830 from the image, based on a user input, and move and display the first object 4810, the second object 4820, and the third object 4830 to and at respective positions corresponding to the user input.

According to an embodiment, the number of objects movable in the image may be one or more. According to an embodiment, the electronic device 101 may restrict movable objects when supporting object movement. For example, the electronic device 101 may limit the number of movable objects according to a configuration of the electronic device 101. For example, the number of movable objects may be limited to 3, 5, or 10. According to an embodiment, the electronic device 101 may not include the number of removed objects in the count of the movable objects, and may limit the number of the objects by only counting the number of objects, the tilt, position, and/or size of which has been changed. According to an embodiment, the electronic device 101 may provide feedback (e.g., a toast message) for a user input of selecting an additional object in a state where there is a number limit.

According to an embodiment, the electronic device 101 may provide a first handler 4840 around a lastly selected object (e.g., the first object 4810). According to an embodiment, the electronic device 101 may configure and display the first masking area 4815 corresponding to the first object 4810, based on an original position (e.g., an area where the first object 4810 has been originally positioned on the image) of the first object 4810 in the image. According to an embodiment, the electronic device 101 may configure and display the second masking area 4825 corresponding to the second object 4820, based on an original position (e.g., an area where the second object 4820 has been originally positioned on the image) of the second object 4820 in the image. According to an embodiment, the electronic device 101 may configure and display the third masking area 4835 corresponding to the third object 4830, based on an original position (e.g., an area where the third object 4830 has been originally positioned on the image) of the third object 4830 in the image.

According to an embodiment, the electronic device 101 may configure each of a link between the first object 4810 and the first masking area 4815, a link between the second object 4820 and the second masking area 4825, and a link between the third object 4830 and the third masking area 4835.

In an embodiment, each of the masking areas 4815, 4825, and 4835 may support a function of controlling each of the objects 4810, 4820, and 4830 corresponding to the masking area 4815, 4825, and 4835, and visually represent information on the area where a corresponding object has been originally positioned. According to an embodiment, a selection state may be provided by emphasizing (e.g., a dotted line or highlighting) a masking area (e.g., the first masking area 4815) corresponding to a currently selected object (e.g., the first object 4810) among the first object 4810, the second object 4820, or the third object 4830. For example, the electronic device 101 may support the user to easily identify an original position of a selected object through an emphasis indication (or a selection indication) (e.g., a dotted line or highlighting) of the masking area of the object.

According to an embodiment, as illustrated in example <4805>, the user may select a masking area of an object desired to be restored (e.g., moved) to its original position among the edited (e.g., moved) objects. According to an embodiment, the user may select the third masking area 4835 corresponding to the third object 4830. According to an embodiment, the electronic device 101 may provide a second handler 4850 around the third masking area 4835, based on an input of selecting the third masking area 4835. According to an embodiment, the electronic device 101 may hide and not display the first handler 4840 provided around the first object 4810.

In an embodiment, the second handler 4850 of the third masking area 4835 may include an undo (or revert) object. In an embodiment, the undo object may include an object supporting a function of restoring to the previous state (e.g., returning to the original state). For example, the undo object may include an object supporting a function (e.g., a cancel function) of canceling a previously executed editing command, and returning to a state (e.g., a state before execution) before the editing command is given.

According to an embodiment, as illustrated in example <4807> and example <4809>, the user may, after editing (e.g., moving) the third object 4830, be to restore the edited (e.g., moved) third object 4830 again (e.g., restore to the original position) in the image. For example, the user may use the second handler 4850 (e.g., undo object) of the third masking area 4835 to restore the moved third object 4830 to its initial state (e.g., a state before image editing (e.g., movement)). For example, the user may select the undo object of the second handler 4850. According to an embodiment, the electronic device 101 may, in response to an input of selecting the undo object of the second handler 4850, restore the third object 4830 to the third masking area 4835 corresponding to the area where the third object 4830 has been originally positioned in the image, and restore same to a state before image editing. According to an embodiment, the first object 4810, the first masking area 4815 corresponding to the first object 4810, the second object 4820, and the second masking area 4825 corresponding to the second object 4820 may be maintained as having been separated, and the third object 4830 may be moved and restored to its original position.

According to an embodiment, the electronic device 101 may include an operation of restoring the moved first object 4810 and/or the moved second object 4820 and providing same to the user, based on the above restoring operation, by interacting with the user.

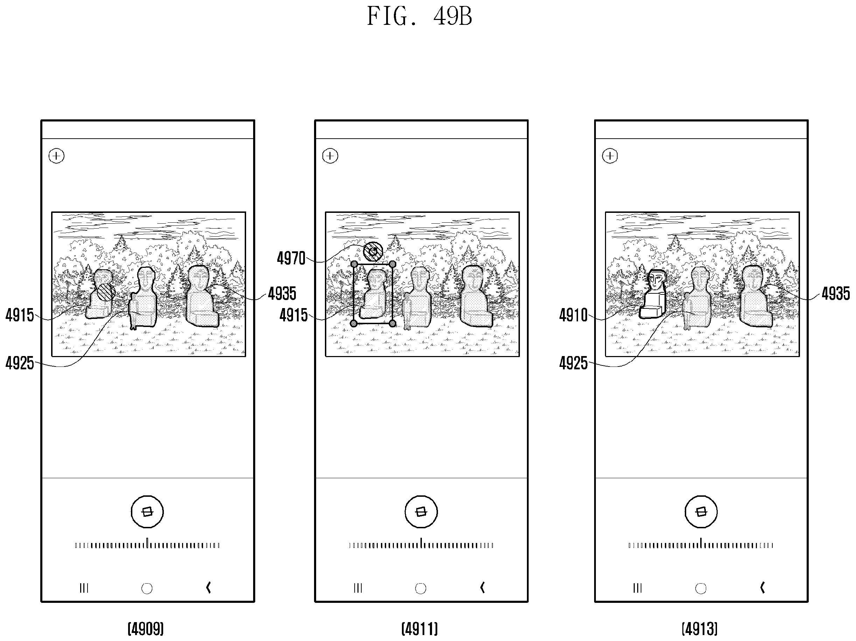

FIG. 49A and FIG. 49B are diagrams illustrating an operation example of supporting image editing in an electronic device according to an embodiment of the disclosure.

According to an embodiment, FIG. 49A and FIG. 49B may show an operation example of separating multiple objects (e.g., a first object 4910, a second object 4920, and a third object 4930) from an image, and restoring a target object (e.g., at least one object), based on respective masking areas (e.g., a first masking area 4915, a second masking area 4925, and a third masking area 4935) corresponding to the multiple objects 4910, 4920, and 4930. According to an embodiment, FIG. 49A and FIG. 49B may represent an example of a case where there are three object 4910, 4920, and 4930 separated from the image and respective masking areas 4915, 4925, and 4935 corresponding to the three object 4910, 4920, and 4930 are configured. In an embodiment, FIG. 49A and FIG. 49B may represent an example in which the first object 4910, the second object 4920, and the third object 4930 are not a bundle object and are single objects.

According to an embodiment, as illustrated in example <4901> and example <4903>, the user may select each of the first object 4910, the second object 4920, and the third object 4930 in the image, separate same from the image, and remove each of the first object 4910, the second object 4920, and the third object 4930 from the image.

According to an embodiment, as illustrated in example <4903>, example <4905>, and example <4907>, the user may remove the first object 4910 from the image by using an eraser object (or recycle bin object) of a first handler 4940 generated around the first object 4910. According to an embodiment, the user may remove the second object 4920 from the image by using an eraser object (or recycle bin object) of a second handler 4950 generated around the second object 4920. According to an embodiment, the user may remove the third object 4930 from the image by using an eraser object (or recycle bin object) of a third handler 4960 generated around the third object 4930.

According to an embodiment, the electronic device 101 may separate the first object 4910, the second object 4920, and the third object 4930 from the image, based on a user input, and remove (or hide) and not display each of the separated first object 4810, second object 4820, and third object 4830.

According to an embodiment, the electronic device 101 may, at the time of separation of the first object 4910, configure and display the first masking area 4915 corresponding to the first object 4910, based on an original position (e.g., an area where the first object 4910 has been originally positioned on the image) of the first object 4910 in the image. According to an embodiment, the electronic device 101 may, at the time of separation of the second object 4920, configure and display the second masking area 4925 corresponding to the second object 4920, based on an original position (e.g., an area where the second object 4920 has been originally positioned on the image) of the second object 4920 in the image. According to an embodiment, the electronic device 101 may, at the time of separation of the third object 4930, configure and display the third masking area 4935 corresponding to the third object 4930, based on an original position (e.g., an area where the third object 4930 has been originally positioned on the image) of the third object 4930 in the image.

According to an embodiment, the electronic device 101 may configure each of a link between the first object 4910 and the first masking area 4915, a link between the second object 4920 and the second masking area 4925, and a link between the third object 4930 and the third masking area 4935.

In an embodiment, each of the masking areas 4915, 4925, and 4935 may support a function of controlling each of the objects 4910, 4920, and 4930 corresponding to the masking area 4915, 4925, and 4935, and visually represent information on the area where a corresponding object has been originally positioned. According to an embodiment, the electronic device 101 may support the user to easily identify an original position of a selected object through an emphasis indication (or a selection indication) (e.g., a dotted line or highlighting) of the masking area of the object.

According to an embodiment, as illustrated in example <4909> and example <4911>, the user may select a masking area of an object desired to be restored to its original position among the edited (e.g., removed) objects. According to an embodiment, the user may select the first masking area 4915 corresponding to the first object 4910. According to an embodiment, the electronic device 101 may provide a fourth handler 4970 around the first masking area 4915, based on an input of selecting the first masking area 4915.

In an embodiment, the fourth handler 4970 of the first masking area 4915 may include an undo (or revert) object. In an embodiment, the undo object may include an object supporting a function of restoring to the previous state (e.g., returning to the original state). For example, the undo object may include an object supporting a function (e.g., a cancel function) of canceling a previously executed editing command, and returning to a state (e.g., a state before execution) before the editing command is given.

According to an embodiment, as illustrated in example <4911> and example <4913>, the user may, after editing (e.g., removing) the first object, be to restore the edited (e.g., removed) first object 4910 again (e.g., restore to the original position) in the image. For example, the user may use the fourth handler 4970 (e.g., undo object) of the first masking area 4915 to restore the removed first object 4910 to its initial state (e.g., a state before image editing (e.g., removal)). For example, the user may select the undo object of the fourth handler 4970. According to an embodiment, the electronic device 101 may, in response to an input of selecting the undo object of the fourth handler 4970, restore the first object 4910 to the first masking area 4915 corresponding to the area where the first object 4910 has been originally positioned in the image, and restore same to a state before image editing. According to an embodiment, the second object 4920 and the third object 4930 may be maintained as having been removed, and the first object 4910 may be moved and restored to its original position.

According to an embodiment, the electronic device 101 may include an operation of restoring the removed second object 4920 and/or the removed third object 4930 and providing same to the user, based on the above restoring operation, by interacting with the user.

FIG. 50 is a diagram illustrating an operation example of supporting image editing in an electronic device according to an embodiment of the disclosure.

According to an embodiment, as illustrated in FIG. 50, the electronic device 101 may display, on the display, an image selected by the user. According to an embodiment, the image may be provided through a designated user interface related to image editing. According to an embodiment, the electronic device 101 may enter an editing mode (e.g., an artificial intelligence mode or artificial intelligence editing mode), based on image editing execution for the selected image, and provide a user interface of the editing mode including the selected image. According to an embodiment, the electronic device 101 may change to a state where the tilt of the image is adjustable, based on the entry into the editing mode.

According to an embodiment, the electronic device 101 may provide a cropper 5000 (or image cropper), based on the image to indicate a state where the editing mode has been entered, based on the entry into the editing mode. According to an embodiment, the cropper 5000 may be displayed or not displayed according to a configuration of the electronic device 101. According to an embodiment, FIG. 50 may show a screen and an operation example when the cropper 5000 is provided.

According to an embodiment, the electronic device 101 may, at the time of background generation (e.g., outpainting) around an object in contact with an edge of the image, may provide a background generation area as an expansion area for background generation with respect to the outside of the image (or the cropper 5000) rather than the inside of the image. According to an embodiment, the electronic device 101 may display an area (e.g., background generation area or background expansion area) to which the background area of an image is expected to be expanded, in the outside area of the image rather than the inside of the cropper 5000.

According to an embodiment, the user may execute image editing (e.g., background expansion or outpainting). According to an embodiment, the electronic device 101 may display an image and enter an editing mode (e.g., an artificial intelligence mode or artificial intelligence editing mode) for supporting image editing, based on a user input. According to an embodiment, the electronic device 101 may support an edit of regenerating the image through background expansion of the image in the editing mode, and support background expansion, based on various designated inputs (e.g., an input relating to tilt change of the image 2201 and/or manipulation of the cropper 5000) related to the background expansion.

According to an embodiment, the user may configure a background generation area, based on a designated input in the editing mode. For example, the user may configure an area (e.g., background generation area or background expansion area) to which the background area is expected to be expanded, based on a designated input.

In an embodiment, the designated input may include an input based on the cropper 5000 fitted to the image, an input of a designated touch gesture (e.g., a touch gesture of rotating the image to the left or right, based on two-finger touches) on the image, and/or an input of manipulating an editing tool (e.g., image rotation tool or dialer) of a bottom menu. For example, the designated input may include an interaction of selecting a background expansion button, an interaction of tapping & moving the image to one side in a state where the image is fitted in the cropper 5000, an interaction of performing pinch zoom-out and then reducing the size of the image, and/or an interaction of adjusting the tilt of the image.

According to an embodiment, the electronic device 101 may mask and provide an expandable area, based on a designated input. For example, the electronic device 101 may, based on a designated input, mask an area (e.g., background generation area or background expansion area) to which the background area is expected to be expanded, and visually provide the masked area to the user as a masking area.

According to an embodiment, the electronic device 101 may, based on a designated input, generate and display a masking area representing an area where a background is generatable around the outer line of the image. In an embodiment, the masking area may represent an expandable area (e.g., at least one of above/below/left/right areas of the image) around the image. According to an embodiment, the masking area may be defined as about n% (e.g., n is a natural number) of the image, such as about 120% compared to the original, about 140% compared to the original, and/or about 160% compared to the original, based on a designated input. According to an embodiment, the masking area may be larger than an area displayed on the display of the electronic device 101.

According to an embodiment, when a background expansion function (or background expansion mode) is executed, the electronic device 101 may provide a real-time change state (e.g., a degree at which the masking area is displayed) of the masking area (or expandable area) (e.g., at least one of above/below/left/right areas of the image) around the image according to a designated input.

According to an embodiment, the electronic device 101 may show, to the user, visual information (e.g., masking area) on an area in which an image is to be generated, and the user may be able to identify in real time and continuously adjust a composition related to a result image to be generated.

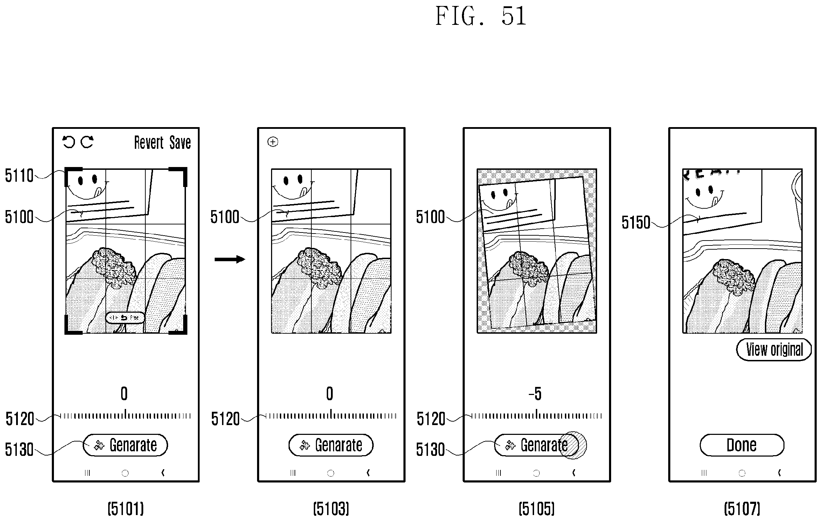

FIG. 51 is a diagram illustrating an operation example of supporting image editing in an electronic device according to an embodiment of the disclosure.

Referring to FIG. 51, as illustrated in example <5101>, the electronic device 101 may display, on the display, an image 5100 (e.g., a landscape picture, a portrait picture, a background picture, an object picture, or an animal picture).

According to an embodiment, as illustrated in example <5103>, the electronic device 101 may display the image 5100 and enter an editing mode (e.g., an artificial intelligence mode or artificial intelligence editing mode) for supporting image editing. According to an embodiment, the electronic device 101 may display a cropper 5110 fitted to the image 5100, at the time of the entry into the editing mode. According to an embodiment, the electronic device 101 may provide an editing tool 5120 (e.g., image rotation tool or dialer) supporting image editing, at the time of the entry into the editing mode. In an embodiment, the editing tool 5120 may provide a user input, and provide a real-time change state (e.g., information (e.g., tilt or angle information) on a rotation state) of the image 5100 in response to image editing based on the user input.

According to an embodiment, as illustrated in example <5105>, the user may perform an input of a designated touch gesture (e.g., a touch gesture of rotating the image to the left or right, based on two-finger touches) on the image 5100, or an input of a touch gesture (e.g., a touch gesture of scrolling (or dragging) a dialer to the left or right) of manipulating the editing tool 5120 (e.g., an image rotation tool or dialer). According to an embodiment, the electronic device 101 may change the tilt of the image 5100, based on a user input (e.g., an input on the image or an input based on the editing tool 5120). According to an embodiment, FIG. 51 may show an example of a state where the image 5100 is rotated to the left according to a user input. In an embodiment, the electronic device 101 may, in the editing mode, when changing the tilt of the image 5100, based on a user input, hide and not display the cropper 5110 fitted to the image 5100.

According to an embodiment, the electronic device 101 may display an area (e.g., background generation area or background expansion area) to which a background area is expected to be expanded, based on the tilt change of the image 5100. For example, the electronic device 101 may generate and display a masking area representing an area where a background is generatable around the outer line of the image 5100, in response to the rotation (e.g., tilt change) of the image 5100 based on a user input. In an embodiment, the masking area may represent an expandable area (e.g., at least one of above/below/left/right areas of the image) around the image 5100. According to an embodiment, the electronic device 101 may configure a background expansion area, based on the outside area of the image 5100.

According to an embodiment, the electronic device 101 may provide a real-time change state (e.g., the state change according to left rotating) of the image 5100, based on the editing tool 5120 in response to the rotation of the image based on a user input. For example, the electronic device 101 may provide information (e.g., tilt or angle information) (e.g., a current position value (e.g., a tilt angle between about -15 degrees and about 15 degrees) of the dialer) on a rotation state of the image 5100.

According to an embodiment, the user may request image generation in a state where the tilt of the image has been adjusted. In an embodiment, an image generation request may be performed by a designated command input. For example, the user may request image generation, based at least on a designated object 5130 (e.g., generation object), a designated voice command, and/or a designated motion gesture (e.g., shaking of the electronic device 101) for image generation (or regeneration). According to an embodiment, the electronic device 101 may, while performing image editing, based on interaction with the user, according to reception of a designated command input, determine to enter an operation of generating a new image based on the edited image.

According to an embodiment, the electronic device 101 may, in response to receiving a designated command input, perform a process (e.g., image generation process) related to generating a new image, based on the edited image (e.g., the image, the tilt of which has been adjusted). According to an embodiment, the image generation process may include an operation of generating (e.g., regenerating or reprocessing) an image, based on the edited image by using artificial intelligence (AI) (e.g., generative AI). In an embodiment, the image generation process may be provided on-device and/or based on a server.

According to an embodiment, as illustrated in example <5107>, the electronic device 101 may display, on the display, a result image 5150, based on the image generation process. According to an embodiment, the electronic device 101 may obtain a new image (e.g., the result image 5150) in relation to an instruction (or prompt) related to image generation. For example, the electronic device 101 may obtain (e.g., generate) a new image (e.g., the result image 5150) according to an image generation process (e.g., inpainting and/or outpainting based on the edited image) executed in relation to an instruction (or prompt) on on-device artificial intelligence. For example, the electronic device 101 may obtain (or receive), from a server, an image (e.g., the result image 5150) generated by the server according to an image generation process (e.g., inpainting and/or outpainting based on the edited image) executed in relation to an instruction (or prompt) on server artificial intelligence.

According to an embodiment, the electronic device 101 may display the result image 5150 on the display. According to an embodiment, the result image 5150 may be, for example, an image in which an empty area (e.g., masking area) expanded according to the tilt of the image 5100 is filled and an object and/or a background image are reconfigured. For example, the result image may be provided through generation (e.g., outpainting) of the masking area.

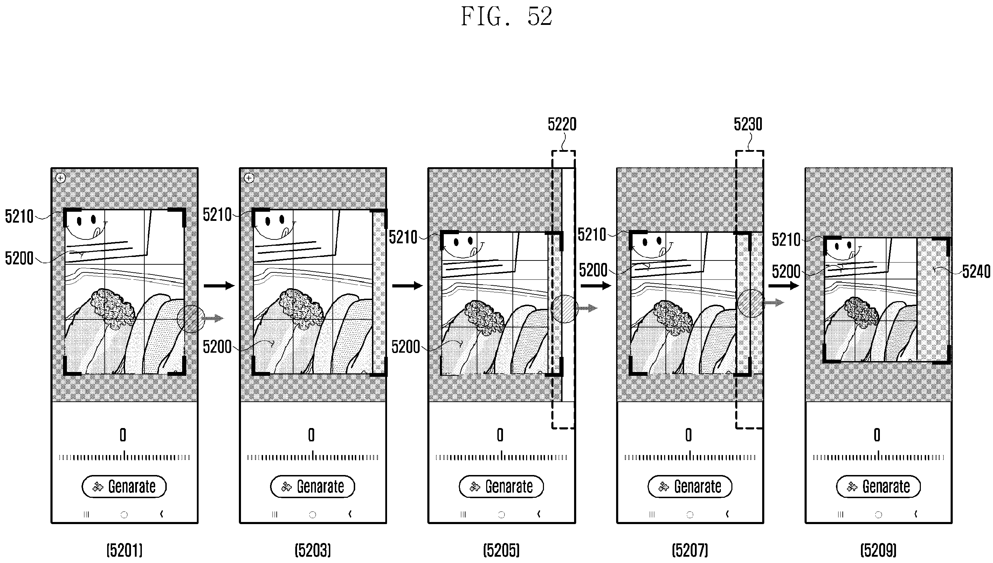

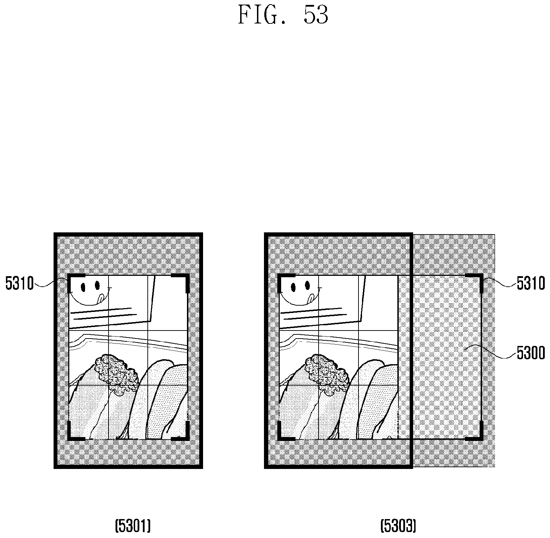

FIG. 52 and FIG. 53 are diagrams illustrating an operation example of supporting image editing in an electronic device according to an embodiment of the disclosure.

According to an embodiment, FIG. 52 and FIG. 53 may show an operation example of supporting adjustment of an expansion area 5240 (e.g., masking area) by using a cropper 5210 fitted to an image 5200.

As illustrated in example <5201>, example <5203>, and example <5205> of FIG. 52, the user may configure an expanded size of the image 5200 and/or an expansion direction of the image 5200 by using the cropper 5210. According to an embodiment, FIG. 52 may show an example of a state of expanding the image 5200 to the right according to a user input using the cropper 5210.

According to an embodiment, as illustrated in example <5205>, the user may select a right boundary surface (e.g., a right boundary surface of the cropper 5210, based on the user's line of sight) of the cropper 5210 fitted to the image 5200, and move same to the right direction. For example, the user may perform an input of tapping & moving the right boundary surface of the cropper 5210.

According to an embodiment, as illustrated in example <5205>, example <5207>, and example <5209>, the electronic device 101 may expand a right area of the cropper 5210 and display masking areas 5220 and 5230, based on a user input. According to an embodiment, the electronic device 101 may, when a user input reaches a boundary surface (e.g., a boundary surface of a display area) of the display, reduce a display ratio of the displayed image 5200 and display the expansion of the masking areas 5220 and 5230 in proportional to the reduction.

For example, as illustrated in FIG. 53, the electronic device 101 may adjust the display ratio of the image to provide a background expansion area 5300 (e.g., see example <5303>) larger than a basic background expansion area (e.g., see example <5301>). According to an embodiment, the electronic device 101 may support background expansion up to a maximum of M% compared to the size of the basic background expansion area via a cropper 5310. According to an embodiment, when M% is configured to be about 15%, the electronic device 101 may support background expansion up to about 15% of the size of the basic background expansion area.

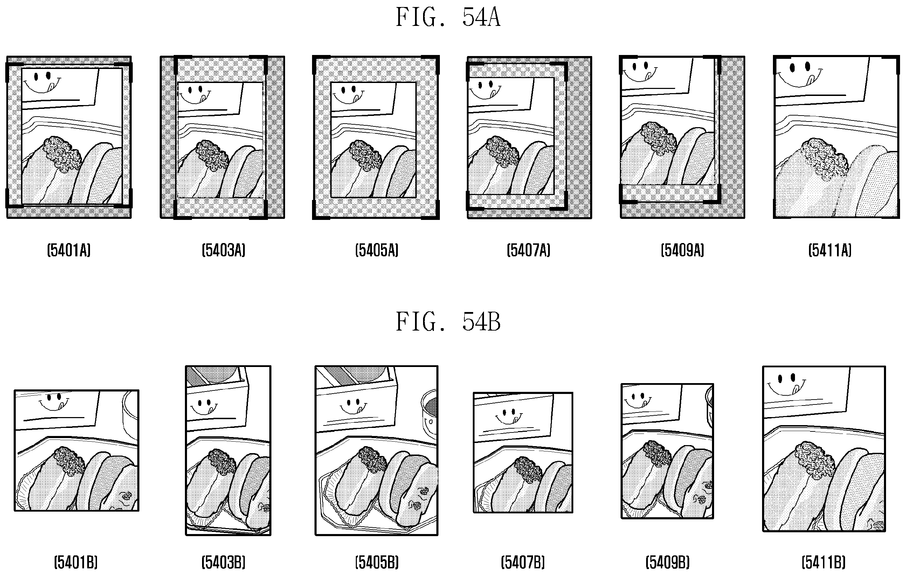

FIG. 54A and FIG. 54B are diagrams illustrating an operation example of supporting image editing in an electronic device according to an embodiment of the disclosure.

According to an embodiment, FIG. 54A and FIG. 54B may show an operation example of supporting various adjustment of an expansion area (or background expansion area) (e.g., masking area) in the electronic device 101. According to an embodiment, the user may determine the size or expansion direction of an expanded image through a user input, and adjust a background expansion area by using the image or a cropper.

According to an embodiment, example <5401A>, example <5403A>, example <5405A>, example <5407A>, example <5409A>, and example <5411A> in FIG. 54A may show an example of an expansion area according to a user input. According to an embodiment, example <5401B>, example <5403B>, example <5405B>, example <5407B>, example <5409B>, and example <5411B> in FIG. 54B may show various examples of a result image (e.g., a background generation result) generated in response to each expansion area adjustment of FIG. 54A.

According to an embodiment, the electronic device 101 may, when a transverse area of a cropper is fitted to an expansion area, generate and provide a background in above/below/left/right areas, based on an image.

According to an embodiment, the electronic device 101 may, when a longitudinal area of the cropper is fitted to the expansion area, generate and provide the background in above/below/left/right areas based on the image.

According to an embodiment, the electronic device 101 may, when the transverse area and the longitudinal area of the cropper are fitted to the expansion area, generate and provide the background in above/below/left/right areas, based on the image.

According to an embodiment, the electronic device 101 may, when the image is in contact with one side (e.g., left side) of the expansion area (e.g., the expansion area is concentrated on the right side of the image), generate and provide the background in above/below/right areas, based on the image.

According to an embodiment, the electronic device 101 may, when the image is in contact with one corner (e.g., upper-left corner) of the expansion area (e.g., the expansion area is concentrated on the right side and the lower side of the image), generate and provide the background in below/right areas, based on the image.

According to an embodiment, the electronic device 101 may, when the image is expanded, fill the entire expansion area with an image and provide the filled expansion area.

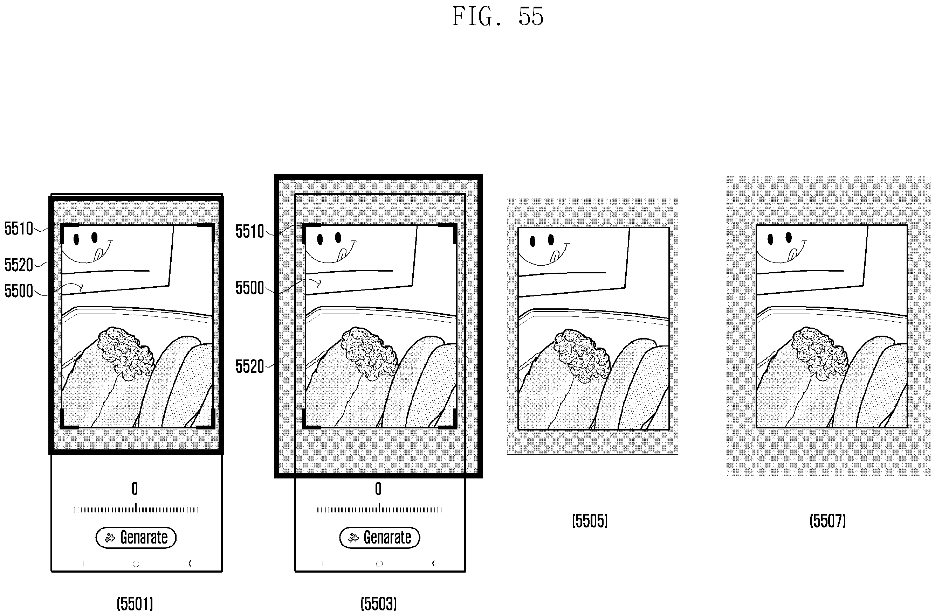

FIG. 55 is a diagram illustrating an operation example of supporting image editing in an electronic device according to an embodiment of the disclosure.

According to an embodiment, FIG. 55 may show an operation example of supporting adjustment of an expansion area (e.g., masking area) in the electronic device 101. According to an embodiment, the user may determine the expanded size or expansion direction of an image 5500 through a user input, and adjust a background expansion area 5520 by using the image 5500 or a cropper 5510.

According to an embodiment, as illustrated in example <5501>, an expansion area (e.g., an area shown to the user's eyes) displayed to the user may correspond to a display area of the display of the electronic device 101. According to an embodiment, as illustrated in example <5503>, an actually expandable area in the electronic device 101 may be more expanded by a designated ratio (e.g., about 120% or about 160%) compared to the original. For example, example <5505> may show an example of being expanded by about 120% compared to the original. For example, example <5507> may show an example of being expanded by about 160% compared to the original. According to an embodiment, an expansion area (e.g., masking area) may be larger than an area displayed on the display of the electronic device 101.

According to an embodiment, the electronic device 101 may provide an area (e.g., an expanded to at least one side among top/bottom/left/right sides) expanded by about N% of the image to the outside of the image. According to an embodiment, the electronic device 101 may generate and provide an expansion area (e.g., masking area) by the size of the cropper 5510 according to a situation.

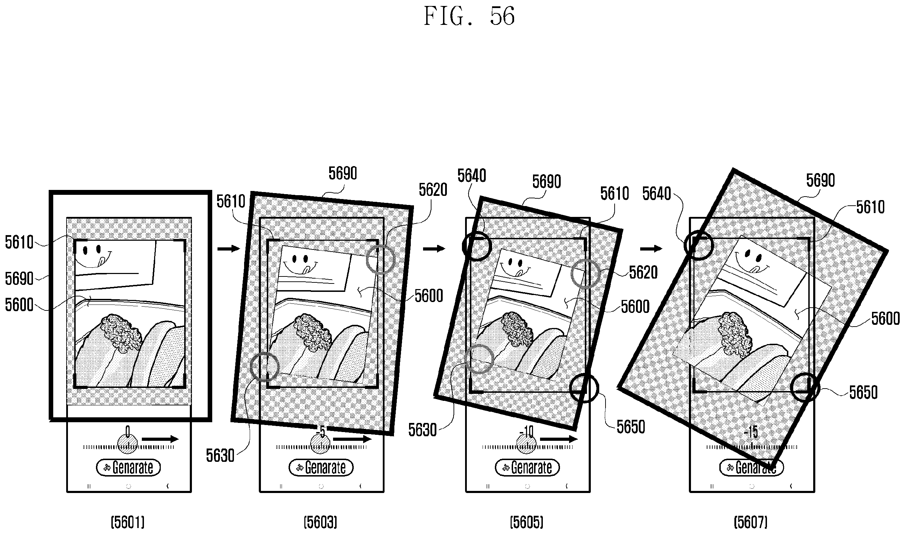

FIG. 56 is a diagram illustrating an operation example of supporting image editing in an electronic device according to an embodiment of the disclosure.

According to an embodiment, FIG. 56 may show an operation example of supporting adjustment of an expansion area 5690 (e.g., masking area), based on the tilt change of an image.

According to an embodiment, FIG. 56 may show an operation example (e.g., an operation example of adjusting a tilt angle of about 0 degrees to a particular tilt angle) of adjusting the expansion area 5690 in a state where corners 5620 and 5630 of an image 5600 are in contact with the inside of a cropper 5610 (or a virtual cropper not displayed).

According to an embodiment, as illustrated in example <5601>, the electronic device 101 may display the expansion area 5690 (e.g., masking area) to be expanded around the image 5600. According to an embodiment, the user may perform a designated input to adjust the tilt of the image 5600. For example, the user may perform a touch gesture input of rotating the image to the left or right, based on two-finger touches, an input of a touch gesture (e.g., a touch gesture of scrolling (or dragging) a dialer to the left or right) of manipulating an editing tool (e.g., an image rotation tool or dialer), or a direct input of a tilt angle (e.g., number). According to an embodiment, FIG. 56 may show an example of a state where the image is rotated to the right according to a designated input.

According to an embodiment, as illustrated in example <5603>, the electronic device 101 may adjust, based on a designated input, the tilt in a state where the corners 5620 and 5630 of the image 5600 are in contact with the cropper 5610. According to an embodiment, the tilt of the image 5600 may be adjusted in a state where at least two corners of the image 5600 are inside the cropper and the remaining two corners 5620 and 5630 are in contact with the cropper 5610.

According to an embodiment, as illustrated in example <5605> and example <5607>, when the image 5600 is rotated according to the adjusted tilt, the expansion area 5690 (e.g., masking area) connected to the image 5600 may also be rotated together. According to an embodiment, while the tilt of the image is being adjusted in a state where the image 5600 is in contact with the cropper 5610, when the rotation angle of the image 5600 becomes larger, the expansion area 5690 may also come into contact with the cropper 5610. For example, at least two sides (e.g., sides 5640 and 5650) among four sides of the expansion area 5690 may come into contact with the cropper 5610.

According to an embodiment, the electronic device 101 may, while the image 5600 is rotating, from a time point at which the expansion area 5690 comes into contact with the cropper 5610, not be able to display the outside area of the expansion area 5690 inside the cropper 5610. According to an embodiment, the electronic device 101 may increase and display the display size of the image 5600 from the time point at which the expansion area 5690 comes into contact with the cropper 5610. According to an embodiment, the electronic device 101 may rotate the expansion area 5690 of the image 5600 in a state where the expansion area is in contact with the cropper 5610, and increase the size of the image 5600 and the expansion area 5690 so as to adjust and provide the tilt of the image 5600 and the expansion area 5690.

According to an embodiment, the expansion area 5690 of the image 5600 may be adjusted by being rotated in a state where the expansion area is in contact with the cropper 5610, and increasing the size of the image 5600 and the expansion area 5690. For example, from a time point (e.g., see example <5605>) at which the image 5600 and the expansion area 5690 simultaneously come into contact with the cropper 5610, the tilt of the image 5600 may be adjusted while the image 5600 becomes larger (e.g., the image 5600 falls out of the range of the cropper 5610). According to an embodiment, the electronic device 101 may maintain the expansion area 5690 in contact with the cropper 5610 in an operation in which the image 5600 and the expansion area 5690 are adjusted while being increased.

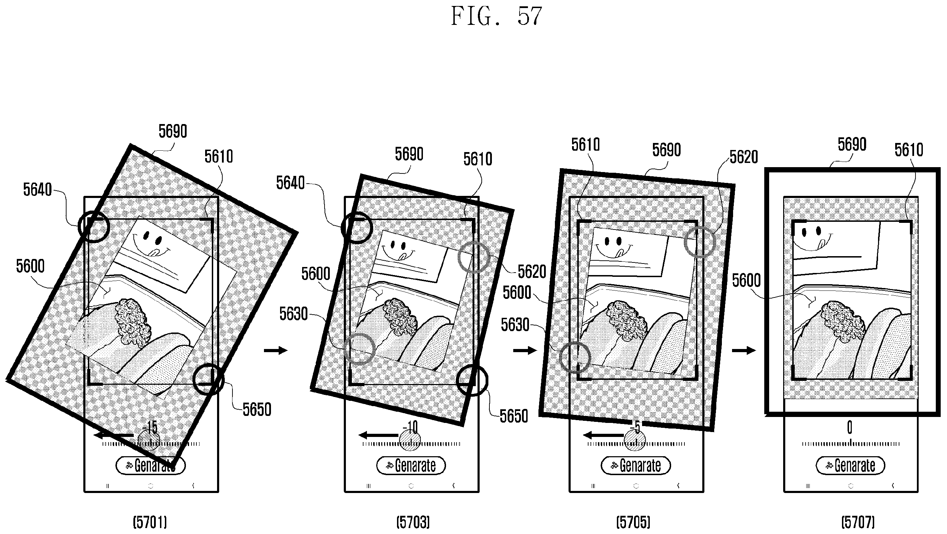

FIG. 57 is a diagram illustrating an operation example of supporting image editing in an electronic device according to an embodiment of the disclosure.

According to an embodiment, FIG. 57 may show an operation example of supporting adjustment of an expansion area 5690 (e.g., masking area), based on the tilt change of an image.

According to an embodiment, FIG. 57 may show an operation example (e.g., an operation example of adjusting a particular tilt angle to about 0 degrees) of adjusting the expansion area 5690 in a state where corners 5620 and 5630 of an image 5600 are in contact with the inside of a cropper 5610 (or a virtual cropper not displayed).

According to an embodiment, as illustrated in example <5701>, the user may perform a designated input to adjust the tilt of the image 5600. For example, the user may perform a touch gesture input of rotating the image to the left or right, based on two-finger touches, an input of a touch gesture (e.g., a touch gesture of scrolling (or dragging) a dialer to the left or right) of manipulating an editing tool (e.g., an image rotation tool or dialer), or a direct input of a tilt angle (e.g., number). According to an embodiment, FIG. 57 may show an example of a state where the image is rotated to the left according to a designated input in an operation of adjusting as illustrated in FIG. 56.

According to an embodiment, the electronic device 101 may perform adjustment of reducing the tilt of the image 5600 having been expanded to about 0 degrees, through a reverse operation of an operation corresponding to the description referring to FIG. 56.

According to an embodiment, as illustrated in example <5701>, example <5703>, and example <5705>, the electronic device 101 may perform an operation of reducing the tilt, based on a designated input in a state where the expansion area 5690 has come into contact with the cropper 5610 and thus has been increased. According to an embodiment, when the expansion area 5690 is in contact with the cropper 5610 and the tilt of the image 5600 is reduced in a state where the area of the image is out of the cropper 5610, there may occur a point (e.g., example <5703>) at which a corner of the image 5600 and a corner of the expansion area 5690 simultaneously come into contact with the cropper 5610.

According to an embodiment, the electronic device 101 may, when the corners 5620 and 5630 of the image 5600 come into contact with the cropper 5610 in the operation of reducing the tilt, reduce the tilt while maintaining the corners 5620 and 5630 of the image 5600 in contact with the cropper 5610. For example, from a time point (e.g., see example <5703>) at which a corner of the image 5600 and a corner of the expansion area 5690 simultaneously come into contact with the cropper 5610, the tilt may be reduced (e.g., the image 5600 is enlarged) in a state where the corners 5620 and 5630 of the image 5600 are in contact with the cropper 5610. According to an embodiment, the electronic device 101 may, when the tilt of the image 5600 becomes about 0 degrees (e.g., see example <5707>), display the size of the image 5600 to have an initial state. For example, the image 5600 may be displayed at an initial size at a time point at which the tilt becomes about 0 degrees.

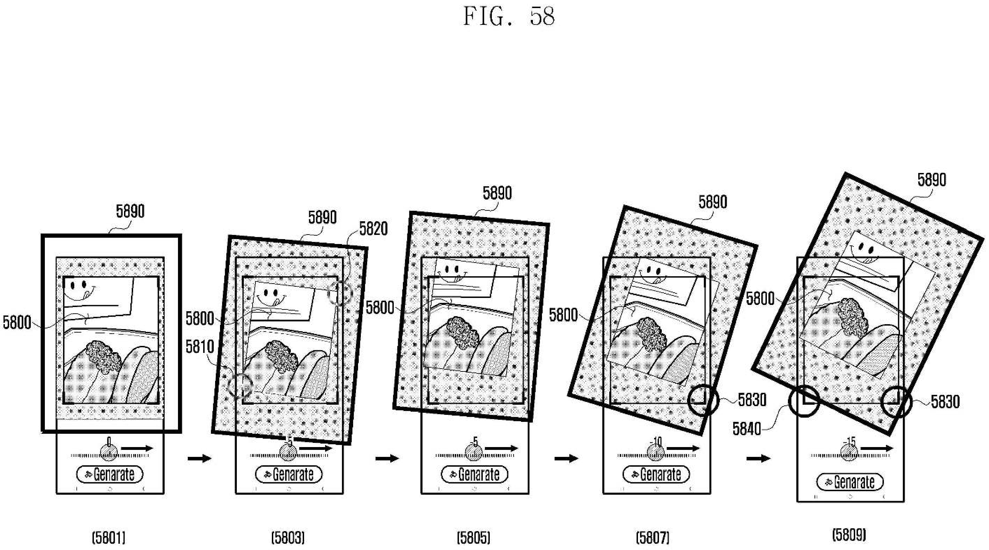

FIG. 58 is a diagram illustrating an operation example of supporting image editing in an electronic device according to an embodiment of the disclosure.

According to an embodiment, FIG. 58 may show an operation example of supporting adjustment of an expansion area 5890 (e.g., masking area), based on the tilt change of an image 5800.

According to an embodiment, FIG. 58 may show an operation example of, in an operation of adjusting the expansion area 5890 in a state where corners 5810 and 5820 of the image 5800 are in contact with the inside of a cropper (or a virtual cropper not displayed), when the location of the image 5800 is moved, adjusting the rotation of the image 5800 and the expansion area 5890 in response to the location movement of the image 5800. According to an embodiment, the location movement of the image 5800 may be performed before adjusting the tilt of the image 5800 or after adjusting the tilt of the image 5800.

According to an embodiment, as illustrated in example <5801>, the electronic device 101 may display the expansion area 5890 (e.g., masking area) to be expanded around the image 5800. According to an embodiment, the user may perform a designated input to adjust the tilt of the image 5800. For example, the user may perform a touch gesture input of rotating the image to the left or right, based on two-finger touches, an input of a touch gesture (e.g., a touch gesture of scrolling (or dragging) a dialer to the left or right) of manipulating an editing tool (e.g., an image rotation tool or dialer), or a direct input of a tilt angle (e.g., number). According to an embodiment, FIG. 58 may show an example of a state where the image is rotated to the right according to a designated input.

According to an embodiment, as illustrated in example <5803>, the electronic device 101 may adjust, based on a designated input, the tilt in a state where the corners 5810 and 5820 of the image 5800 are in contact with the cropper. According to an embodiment, the tilt of the image 5800 may be adjusted in a state where at least two corners of the image 5800 are inside the cropper and the remaining two corners 5810 and 5820 are in contact with the cropper. According to an embodiment, when the image 5800 is rotated according to the adjusted tilt, the expansion area 5890 (e.g., masking area) connected to the image 5800 may also be rotated together.

According to an embodiment, as illustrated in example <5805>, example <5807>, and example <5809>, when the location of the image 5800 is moved before adjusting the tilt of the image 5800 or after adjusting the tilt of the image 5800 (e.g., see example <5805>), an area of the image 5800 in contact with the cropper may be changed. For example, as illustrated in example <5807> and example <5809>, the user may, while adjusting the tilt of the image 5800, move the location of the image 5800 through a designated input (e.g., an input based on two-finger touches) and accordingly, an area of the image 5800 in contact with the cropper may be changed. For example, as illustrated in example <5803> and example <5809>, the first corners 5810 and 5820 of the image 5800 in contact with the cropper may be changed to second corners 5830 and 5840.

According to an embodiment, the electronic device 101 may, when the area of the image 5800 in contact with the cropper is changed, perform tilt adjustment (e.g., image rotation) about the center of the cropper. According to an embodiment, the electronic device 101 may rotate the image about the center of the cropper until two points of the expansion area 5890 come into contact with the cropper.

According to an embodiment, from a time point at which two points of the expansion area 5890 come into contact with the cropper, the electronic device 101 may expand the expansion area 5890 in a state where the expansion area is in contact with the cropper, while performing tilt adjustment (e.g., rotation of the image 5800) about the center of the cropper.

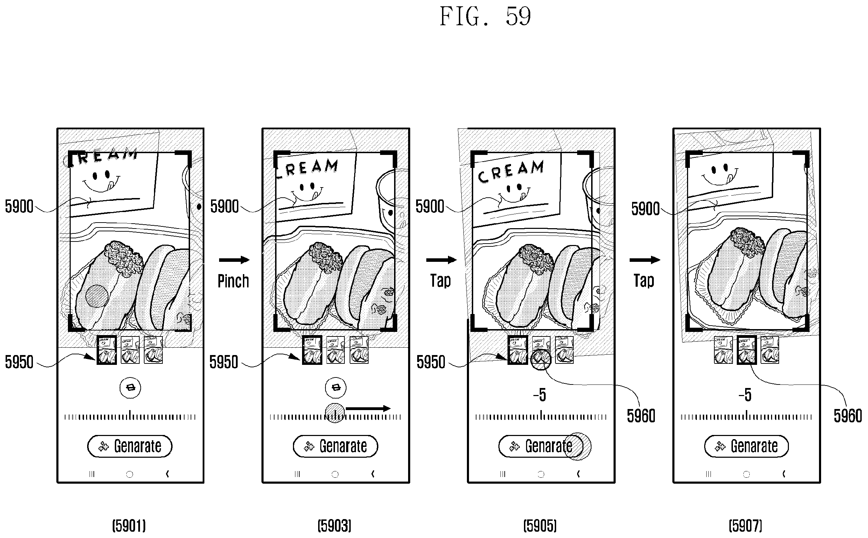

FIG. 59 is a diagram illustrating an operation example of supporting image editing in an electronic device according to an embodiment of the disclosure.

According to an embodiment, FIG. 59 may show an operation example of providing N or more result images (e.g., multiple result images) according to an image generation process (e.g., inpainting and/or outpainting).

According to an embodiment, as illustrated in example <5901>, the electronic device 101 may display, on the display, a result image 5900. According to an embodiment, as the result image 5900, N or more result images (e.g., multiple result images 5950) may be provided. For example, the electronic device 101 may obtain multiple result images (e.g., a first result image, a second result image, and a third result image), based on generative artificial intelligence, and provide respective previews (e.g., thumbnails) corresponding to the multiple result images 5950 as a bottom menu for the result image 5900. According to an embodiment, the user may select a desired image among the multiple result images 5950.

According to an embodiment, the electronic device 101 may receive an input of selecting one image from among the multiple result images 5950. According to an embodiment, the electronic device 101 may display, on the display as the result image 5900, an image selected based on the input.

According to an embodiment, the user may navigate and identify the multiple result images 5950 by using a navigator (e.g., a left/right arrow indicator, or thumbnail navigator).

According to an embodiment, as illustrated in example <5903> and example <5905>, in an operation of displaying the result image 5900, when an edit value (e.g., correction value) (e.g., tilt value) is adjusted through at least one of result image editing functions, the electronic device 101 may determine (e.g., analyze) a result image, which may have a better composition according to the adjusted edit value, among the multiple result images 5950 and recommend the result image to the user.

According to an embodiment, when the angle of the result image 5900 is adjusted, the electronic device 101 may provide a recommendation indication (e.g., star indication) to a thumbnail 5960 of the result image 5900 which may have a better composition at the adjusted angle. According to an embodiment, when the angle of the result image 5900 is adjusted, the electronic device 101 may determine the adjusted tilt and the tilt of the result image 5900 to provide a recommendation indication to a result image (e.g., the thumbnail 5960) which may provide a result more suitable for the current angle.

According to an embodiment, as illustrated in example <5907>, the electronic device 101 may display, on the display as the result image 5900, an image corresponding to the selected thumbnail 5960, based on an input of selecting the recommended result image (e.g., the thumbnail 5960).

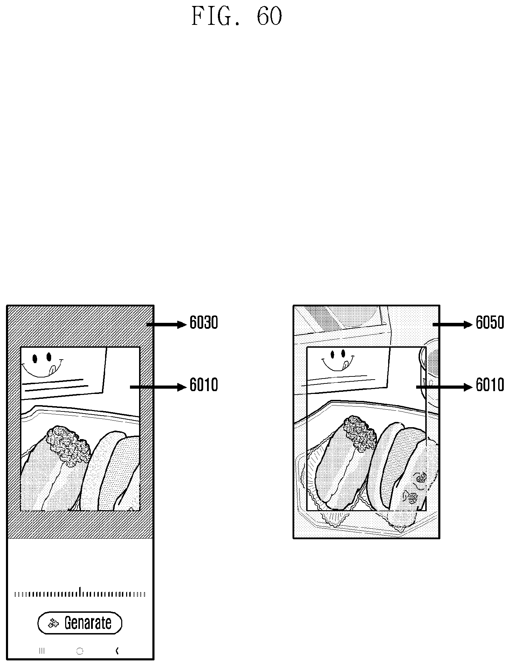

FIG. 60 is a diagram illustrating an operation example of supporting image editing in an electronic device according to an embodiment of the disclosure.

According to an embodiment, FIG. 60 may show an operation example of providing a result image according to an image generation process (e.g., inpainting and/or outpainting).

According to an embodiment, the electronic device 101 may merge an image 6010 and an expansion area 6030 to provide the merged image and expansion area to generative artificial intelligence. For example, the electronic device 101 may merge the image 6010 and the expansion area 6030 and provide a merged image to on-device artificial intelligence or server artificial intelligence. In an embodiment, the image generation process may be provided on-device and/or based on a server.

According to an embodiment, the electronic device 101 may obtain a result image, based on the image generation process. For example, the result image may be an image obtained (e.g., generated) according to an image generation process executed in relation to an instruction (or prompt) on the on-device artificial intelligence, or an image which is generated by the server according to an image generation process executed in relation to an instruction (or prompt) on the server artificial intelligence and then obtained (e.g., received) from the server.

According to an embodiment, the electronic device 101 may, when a result image is obtained, combine the image 6010 (e.g., the original image 6010) with a result image 6050 (e.g., the generation image 6050 including the expansion area) to generate one image. According to an embodiment, the electronic device 101 may display an image in which the result image 6050 and the original image 6010 are combined, on the display. For example, the electronic device 101 may, when the resolution of the result image 6050 is low, combine the original image 6010 with the result image 6050 and provide the combined original image and result image so as to improve the quality of the image.

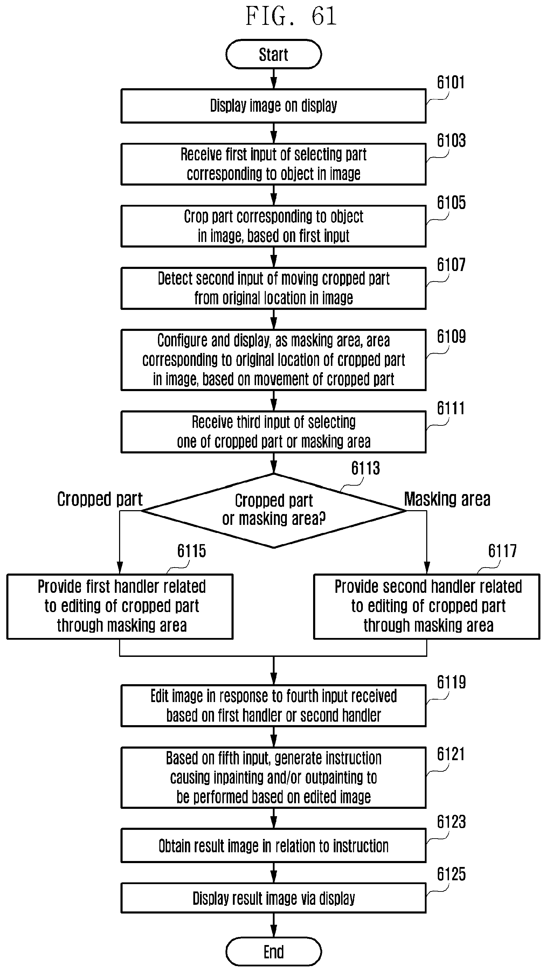

FIG. 61 is a flowchart illustrating an operation method of an electronic device according to an embodiment of the disclosure.

According to an embodiment, FIG. 61 may show an example of a method of supporting image editing and/or generation (e.g., regeneration or reprocessing) in the electronic device 101 according to an embodiment.

The method of supporting image editing and/or generation in the electronic device 101 according to an embodiment of the disclosure may be performed according to, for example, the flowchart illustrated in FIG. 61. The flowchart illustrated in FIG. 61 is an example according to an embodiment of an operation of the electronic device 101, and at least some operations may be changed in sequence or performed in parallel, may be performed as independent operations, or may be supplemented by at least some other operations. According to an embodiment of the disclosure, operation 6101 to operation 6125 may be performed by at least one processor (e.g., the processor 120 and 230 in FIG. 1 to FIG. 3) of the electronic device 101.

According to an embodiment, an operation described with reference to FIG. 61 may be, for example, heuristically performed in combination with the operations described with reference to FIG. 4 to FIG. 60, may be heuristically performed in replacement of at least some operations among the described operations and in combination with at least other some operations, or may be heuristically performed as detailed operations of at least some operations among the described operations.

As illustrated in FIG. 61, an operation method performed by the electronic device 101 according to an embodiment may include an operation 6101 of displaying an image on a display, an operation 6103 of receiving a first input of selecting a part corresponding to an object in the image, an operation 6105 of cropping the part corresponding to the object in the image, based on the first input, an operation 6107 of detecting a second input of moving the cropped part from an original location in the image, an operation 6109 of configuring and displaying, as a masking area, an area corresponding to the original location of the cropped part in the image, based on movement of the cropped part, an operation 6111 of receiving a third input of selecting one of the cropped part or the masking area, an operation 6113 of determining an area (e.g., cropped part or masking area) where the third input is received, an operation 6115 of, if the third input corresponds to selecting the cropped part, providing a first handler related to editing of the cropped part through the cropped part, an operation 6117 of, if the third input corresponds to selecting the masking area, providing a second handler related to editing of the cropped part through the masking area, an operation 6119 of editing the image in response to a fourth input received based on the first handler or the second handler, an operation 6121 of, based on a fifth input, generating an instruction causing inpainting and/or outpainting to be performed based on the edited image, an operation 6123 of obtaining a result image in relation to the instruction, and an operation 6125 of displaying the result image via the display.

Referring to FIG. 61, in operation 6101, the processor 120 of the electronic device 101 may display an image on the display.

In operation 6103, the processor 120 may receive a first input of selecting a part corresponding to an object in the image. According to an embodiment, the user may select at least one object in the image through a user input in a state where the image is displayed. For example, the user may select (or designate) at least one target object for image editing in the image. According to an embodiment, the processor 120 may select, as a target object for image editing, at least one object corresponding to a user input in the image.

In operation 6105, the processor 120 may crop the part corresponding to the object in the image, based on the first input. According to an embodiment, the processor 120 may, based on the first input, crop at least one object to enable movement and/or editing of the object in the image.

In operation 6107, the processor 120 may detect a second input of moving the cropped part from an original location in the image. According to an embodiment, the user may move the cropped object. According to an embodiment, the processor 120 may move and display the cropped object to and at a position corresponding to a user input (e.g., drag) based on the cropped object, according to the user input.

In operation 6109, the processor 120 may configure and display, as a masking area, an area corresponding to the original location of the cropped part in the image, based on movement of the cropped part. According to an embodiment, the processor 120 may configure and display, as a masking are, an area (e.g., an area where the object has been positioned before moved) where the object has been originally positioned, based the movement of the cropped object. For example, the processor 120 may display masking (e.g., grid pattern) in the area where the object has originally existed.

In operation 6111, the processor 120 may receive a third input of selecting one of the cropped part or the masking area.

In operation 6113, the processor 120 may determine an area (e.g., the cropped part or the masking area) where the third input is received.

In operation 6115, if the third input corresponds to selecting the cropped part, the processor 120 may provide a first handler related to editing of the cropped part through the cropped part.

In operation 6117, if the third input corresponds to selecting the masking area, the processor 120 may provide a second handler related to editing of the cropped part through the masking area.

In operation 6119, the processor 120 may edit the image in response to a fourth input received based on the first handler or the second handler.

In operation 6121, the processor 120 may, based on a fifth input, generate an instruction causing inpainting and/or outpainting to be performed based on the edited image.

In operation 6123, the processor 120 may obtain a result image related to the instruction.

In operation 6125, the processor 120 may display the result image through the display.

An operation method performed by the electronic device 101 according to an embodiment of the disclosure may include displaying an image on the display. According to an embodiment, the operation method may include receiving a first input of selecting a part corresponding to an object in the image. According to an embodiment, the operation method may include cropping the part corresponding to the object in the image, based on the first input. According to an embodiment, the operation method may include detecting a second input of moving the cropped part from an original location in the image. According to an embodiment, the operation method may include configuring and displaying, as a masking area, an area corresponding to the original location of the cropped part in the image, based on movement of the cropped part. According to an embodiment, the operation method may include receiving a third input of selecting one of the cropped part or the masking area. According to an embodiment, the operation method may include, in case that the third input corresponds to selecting the cropped part, providing a first handler related to editing of the cropped part through the cropped part. According to an embodiment, the operation method may include, in case that the third input corresponds to selecting the masking area, providing a second handler related to editing of the cropped part through the masking area. According to an embodiment, the operation method may include editing the image in response to a fourth input received based on the first handler or the second handler. According to an embodiment, the operation method may include, based on a fifth input, generating an instruction causing inpainting and/or outpainting to be performed based on the edited image. According to an embodiment, the operation method may include obtaining a result image in relation to the instruction. According to an embodiment, the operation method may include displaying the result image via the display.

According to an embodiment, the operation method may include configuring a link between the cropped part and the masking area, based on the first input.

According to an embodiment, the operation method may include, in response to the third input that selects the cropped part, displaying an emphasis indication of the masking area corresponding to the cropped part, based on the link.

According to an embodiment, the operation method may include, in response to the third input that selects the masking part, displaying an emphasis indication of the cropped part corresponding to the masking area, based on the link.

In a non-transitory computer-readable recording medium (computer-readable medium) storing instructions, when executed by the processor 120 of the electronic device 101, causing the processor 120 to perform operations according to an embodiment of the disclosure, the instructions may, when executed by the processor, cause the electronic device to perform operations of displaying an image on a display, receiving a first input of selecting a part corresponding to an object in the image, cropping the part corresponding to the object in the image, based on the first input, detecting a second input of moving the cropped part from an original location in the image, configuring and displaying, as a masking area, an area corresponding to the original location of the cropped part in the image, based on movement of the cropped part, receiving a third input of selecting one of the cropped part or the masking area, in case that the third input corresponds to selecting the cropped part, providing a first handler related to editing of the cropped part through the cropped part, in case that the third input corresponds to selecting the masking area, providing a second handler related to editing of the cropped part through the masking area, editing the image in response to a fourth input received based on the first handler or the second handler, based on a fifth input, generating an instruction causing inpainting and/or outpainting to be performed based on the edited image, obtaining a result image in relation to the instruction, and displaying the result image via the display.

It may be understood that the aforementioned embodiments and the technical features thereof are combinable with one another in any combination, provided that there is no potential conflict between two embodiments or features. For example, any combination of two or more of the aforementioned embodiments may be contemplated and included within the contents of the disclosure. One or more features from any embodiment may be integrated into any other embodiment, offering corresponding advantages or benefits.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Various embodiments of the disclosure disclosed in this specification and drawings are presented, as specific examples, to easily describe technical contents of the disclosure and help the understanding of the disclosure and are not intended to limit the scope of the disclosure. Therefore, the scope of the disclosure should be construed to include, in addition to the embodiments disclosed herein, all changes and modifications that are derived based on the technical idea of the disclosure.

## Claims

1. An electronic device comprising:
a display;
a communication circuit;
at least one processor including processing circuitry; and
memory configured to store instructions,
wherein the instructions, when individually and/or collectively executed by the at least one processor, cause the electronic device to:
display an image on the display,
receive a first input of selecting a part corresponding to an object in the image,
crop the part corresponding to the object in the image, based on the first input,
detect a second input of moving the cropped part from an original location in the image,
configure and display, as a masking area, an area corresponding to the original location of the cropped part in the image, based on movement of the cropped part,
receive a third input of selecting one of the cropped part or the masking area,
in case that the third input corresponds to selecting the cropped part, provide a first handler related to editing of the cropped part through the cropped part,
in case that the third input corresponds to selecting the masking area, provide a second handler related to editing of the cropped part through the masking area,
edit the image in response to a fourth input received based on the first handler or the second handler,
based on a fifth input, generate an instruction causing inpainting and/or outpainting to be performed based on the edited image,
obtain a result image in relation to the instruction, and
display the result image via the display.

2. The electronic device of claim 1, wherein the instructions, when individually and/or collectively executed by the at least one processor, cause the electronic device to:
configure a link between the cropped part and the masking area;
recognize the link configured between the cropped part and the masking area, based on an input of selecting the masking area; and
determine the cropped part corresponding to the masking area, based on the link.

3. The electronic device of claim 1, wherein the result image comprises an image obtained by reconfiguring the image through the inpainting and/or outpainting having been performed based on the masking area and/or the cropped part in the edited image.

4. The electronic device of claim 2, wherein the instructions, when individually and/or collectively executed by the at least one processor, cause the electronic device to, in case that the third input is detected through the cropped part, display an emphasis indication of the masking area corresponding to the cropped part.

5. The electronic device of claim 2, wherein the instructions, when individually and/or collectively executed by the at least one processor, cause the electronic device to, in case that the cropped part corresponding to the masking area exists on the image, display a selection indication of the cropped part corresponding to the masking area.

6. The electronic device of claim 2, wherein the instructions, when individually and/or collectively executed by the at least one processor, cause the electronic device to:
in case that the cropped part corresponding to the masking area exists on the image, provide a first handler, based on the cropped part; and
in case that the cropped part corresponding to the masking area is removed from the image, provide a second handler, based on the masking area.

7. The electronic device of claim 1, wherein the instructions, when individually and/or collectively executed by the at least one processor, cause the electronic device to, in case that a designated input is detected through the second handler, restore and display the cropped part corresponding to the masking area to and on the masking area.

8. The electronic device of claim 1, wherein the instructions, when individually and/or collectively executed by the at least one processor, cause the electronic device to:
in case that the part corresponding to the object is cropped, recognize an area corresponding to the cropped part in the image;
configure the masking area, based on the recognized area; and
mask the masking area with a grid pattern.

9. The electronic device of claim 2, wherein the instructions, when individually and/or collectively executed by the at least one processor, cause the electronic device to allow the cropped part and the masking area to interoperate with each other, based on the link between the cropped part and the masking area.

10. The electronic device of claim 1, wherein the instructions, when individually and/or collectively executed by the at least one processor, cause the electronic device to:
determine an object adjacent to a first cropped part, based on a designated input;
crop a part corresponding to the adjacent object in the image; and
configure the cropped parts as one group object.

11. The electronic device of claim 10, wherein the instructions, when individually and/or collectively executed by the at least one processor, cause the electronic device to, based on expansion of a handler provided through the first cropped part, move a cropped part corresponding to the adjacent object into the handler.

12. The electronic device of claim 1, wherein the instructions, when individually and/or collectively executed by the at least one processor, cause the electronic device to:
determine an object adjacent to a masking area corresponding to a first cropped part, based on a designated input;
crop a part corresponding to the adjacent object in the image; and
configure the cropped parts as one group object.

13. The electronic device of claim 1, wherein the instructions, when individually and/or collectively executed by the at least one processor, cause the electronic device to, in case that the result image is provided, provide a function of comparing the image with the result image.

14. A method of operating an electronic device, the method comprising:
displaying an image on a display;
receiving a first input of selecting a part corresponding to an object in the image;
cropping the part corresponding to the object in the image, based on the first input;
detecting a second input of moving the cropped part from an original location in the image;
configuring and displaying, as a masking area, an area corresponding to the original location of the cropped part in the image, based on movement of the cropped part;
receiving a third input of selecting one of the cropped part or the masking area;
in case that the third input corresponds to selecting the cropped part, providing a first handler related to editing of the cropped part through the cropped part;
in case that the third input corresponds to selecting the masking area, providing a second handler related to editing of the cropped part through the masking area;
editing the image in response to a fourth input received based on the first handler or the second handler;
based on a fifth input, generating an instruction causing inpainting and/or outpainting to be performed based on the edited image;
obtaining a result image in relation to the instruction; and
displaying the result image via the display.

15. A non-transitory computer-readable recording medium storing instructions that, when executed by a processor of an electronic device, cause the electronic device to perform operations, the operations comprising:
displaying an image on a display;
receiving a first input of selecting a part corresponding to an object in the image;
cropping the part corresponding to the object in the image, based on the first input;
detecting a second input of moving the cropped part from an original location in the image;
configuring and displaying, as a masking area, an area corresponding to the original location of the cropped part in the image, based on movement of the cropped part;
receiving a third input of selecting one of the cropped part or the masking area;
in case that the third input corresponds to selecting the cropped part, providing a first handler related to editing of the cropped part through the cropped part;
in case that the third input corresponds to selecting the masking area, providing a second handler related to editing of the cropped part through the masking area;
editing the image in response to a fourth input received based on the first handler or the second handler;
based on a fifth input, generating an instruction causing inpainting and/or outpainting to be performed based on the edited image;
obtaining a result image in relation to the instruction; and
displaying the result image via the display.
